(19) Europäisches Patentamt / European Patent Office / Office européen des brevets

(11) **EP 4 651 529 A1**

(12) **EUROPEAN PATENT APPLICATION**
published in accordance with Art. 153(4) EPC

(43) Date of publication:
**19.11.2025 Bulletin 2025/47**

(21) Application number: **24757154.0**

(22) Date of filing: **08.02.2024**

(51) International Patent Classification (IPC):
**H04W 8/02** (2009.01)  **H04W 24/10** (2009.01)
**H04W 48/20** (2009.01)  **H04W 76/27** (2018.01)
**H04W 8/24** (2009.01)  **H04W 88/02** (2009.01)

(52) Cooperative Patent Classification (CPC):
**H04W 8/02; H04W 8/24; H04W 24/10; H04W 48/20;
H04W 76/27; H04W 88/02**

(86) International application number:
**PCT/KR2024/001954**

(87) International publication number:
**WO 2024/172425 (22.08.2024 Gazette 2024/34)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **13.02.2023 KR 20230019008**

(71) Applicant: **Samsung Electronics Co., Ltd.
Suwon-si, Gyeonggi-do 16677 (KR)**

(72) Inventors:
• **JUNG, Sangyeob
 Suwon-si Gyeonggi-do 16677 (KR)**
• **AGIWAL, Anil
 Suwon-si Gyeonggi-do 16677 (KR)**

(74) Representative: **Nederlandsch Octrooibureau
P.O. Box 29720
2502 LS The Hague (NL)**

(54) **METHOD AND DEVICE FOR DETERMINING MOBILITY STATE IN WIRELESS COMMUNICATION SYSTEM**

(57)    The present disclosure relates to a 5G or 6G communication system for supporting a higher data transmission rate. Specifically, the present disclosure relates to a method performed by a user equipment (UE) in a wireless communication system, and the method may comprise the steps of: receiving, from a base station, configuration information for cell reselection, the configuration information including information for determining a mobility state of the UE; determining the mobility state on the basis of the configuration information for the cell reselection; and performing the cell reselection on the basis of the determined mobility state, wherein the information for determining the mobility state of the UE includes at least one of information on a cell reselection count-based threshold value for determining the mobility state on the basis of size information indicating sizes of count values for respective one or more times of cell reselection performed by the UE during a predetermined time interval and a sum of the count values, and information on a traveling distance-based threshold value for determining the mobility state on the basis of a distance travelled by the UE for the predetermined time interval, and the mobility state is determined on the basis of the cell reselection count-based threshold value and the sum of the count values for the respective one or more times of cell reselection, the count values having sizes indicated by the size information, or is determined on the basis of the distance travelled by the UE for the predetermined time interval and the traveling distance-based threshold value.

EP 4 651 529 A1

...

FIG.7

**Description**

Technical Field

The disclosure relates to a wireless communication system (or a mobile communication system). More specifically, the disclosure relates to a method and a device for determining the mobility state in a wireless communication system (or a mobile communication system).

Background Art

5G mobile communication technologies define broad frequency bands to enable high transmission rates and new services, and can be implemented not only in "Sub 6GHz" bands such as 3.5GHz, but also in ultrahigh frequency ("Above 6GHz") bands referred to as mmWave such as 28GHz and 39GHz. In addition, it has been considered to implement 6G mobile communication technologies (referred to as Beyond 5G systems) in terahertz bands (e.g., 95GHz to 3THz bands) in order to accomplish transmission rates fifty times faster than 5G mobile communication technologies and ultra-low latencies one-tenth of 5G mobile communication technologies.

At the beginning of 5G mobile communication technologies, in order to support services and to satisfy performance requirements in connection with enhanced Mobile BroadBand (eMBB), Ultra Reliable & Low Latency Communications (URLLC), and massive Machine-Type Communications (mMTC), there has been ongoing standardization regarding beamforming and massive MIMO for alleviating radio-wave path loss and increasing radio-wave transmission distances in mmWave, numerology (for example, operating multiple subcarrier spacings) for efficiently utilizing mmWave resources and dynamic operation of slot formats, initial access technologies for supporting multi-beam transmission and broadbands, definition and operation of BWP (BandWidth Part), new channel coding methods such as a LDPC (Low Density Parity Check) code for large-capacity data transmission and a polar code for highly reliable transmission of control information, L2 pre-processing, and network slicing for providing a dedicated network customized to a specific service.

Currently, there are ongoing discussions regarding improvement and performance enhancement of initial 5G mobile communication technologies in view of services to be supported by 5G mobile communication technologies, and there has been physical layer standardization regarding technologies such as Vehicle-to-everything (V2X) for aiding driving determination by autonomous vehicles based on information regarding positions and states of vehicles transmitted by the vehicles and for enhancing user convenience, New Radio Unlicensed (NR-U) aimed at system operations conforming to various regulation-related requirements in unlicensed bands, NR UE Power Saving, Non-Terrestrial Network (NTN) which is UE-satellite direct communication for securing coverage in an area in which communication with terrestrial networks is unavailable, and positioning.

Moreover, there has been ongoing standardization in wireless interface architecture/protocol fields regarding technologies such as Industrial Internet of Things (IIoT) for supporting new services through interworking and convergence with other industries, IAB (Integrated Access and Backhaul) for providing a node for network service area expansion by supporting a wireless backhaul link and an access link in an integrated manner, mobility enhancement including conditional handover and DAPS (Dual Active Protocol Stack) handover, and two-step random access for simplifying random access procedures (2-step RACH for NR). There also has been ongoing standardization in system architecture/service fields regarding a 5G baseline architecture (for example, service based architecture or service based interface) for combining Network Functions Virtualization (NFV) and Software-Defined Networking (SDN) technologies, and Mobile Edge Computing (MEC) for receiving services based on UE positions.

If such 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting Augmented Reality (AR), Virtual Reality (VR), Mixed Reality (MR), etc., 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for securing coverage in terahertz bands of 6G mobile communication technologies, Full Dimensional MIMO (FD-MIMO), multi-antenna transmission technologies such as array antennas and large-scale antennas, metamaterial-based lenses and antennas for improving coverage of terahertz band signals, high-dimensional space multiplexing technology using Orbital Angular Momentum (OAM), and Reconfigurable Intelligent Surface (RIS), but also full-duplex technology for increasing frequency efficiency of 6G mobile communication technologies and improving system networks, AI-based communication technology for implementing system optimization by utilizing satellites and AI (Artificial Intelligence) from the design stage and internalizing end-to-end AI support functions, and next-generation distributed computing technology for implementing services at levels of complexity exceeding the limit of UE operation capability by utilizing ultra-high-performance communication and computing resources.

Meanwhile, there have been increasing demands for schemes for determining the mobility state in line with recent development of communication systems.

Disclosure of Invention

Technical Problem

The disclosure may propose a process of efficiently determining the mobility state.

Solution to Problem

In accordance with an embodiment of the disclosure, a method performed by user equipment (UE) in a wireless communication system may include: receiving, from a base station, configuration information for cell reselection including information for determining the mobility state of the UE; determining the mobility state, based on the configuration information for cell reselection; and performing the cell reselection, based on the determined mobility state, wherein the information for determining the mobility state of the UE may include at least one from among size information indicating the size of a count value regarding each of at least one cell reselection performed by the UE during a predetermined period of time, information regarding a threshold value based on the number of cell reselections for determining the mobility state, based on the sum of the count value, or information regarding a movement distance-based threshold value for determining the mobility state based on the distance of movement of the UE during the predetermined period of time, and wherein the mobility state may be determined based on the threshold value based on the number of cell reselections and the sum of the count value regarding each of the at least one cell reselection, of the size indicated by the size information, or determined based on the movement distance-based threshold value and the distance of movement of the UE during the predetermined period of time.

In accordance with an embodiment of the disclosure, user equipment (UE) in a wireless communication system may include a transceiver and a controller connected to the transceiver. The controller may be configured to receive, from a base station, configuration information for cell reselection including information for determining the mobility state of the UE, determine the mobility state, based on the configuration information for cell reselection, and perform the cell reselection, based on the determined mobility state. The information for determining the mobility state of the UE may include at least one from among size information indicating the size of a count value regarding each of at least one cell reselection performed by the UE during a predetermined period of time, information regarding a threshold value based on the number of cell reselections for determining the mobility state, based on the sum of the count value, or information regarding a movement distance-based threshold value for determining the mobility state based on the distance of movement of the UE during the predetermined period of time. The mobility state may be determined based on the threshold value based on the number of cell reselections and the sum of the count value regarding each of the at least one cell reselection, of the size indicated by the size information, or determined based on the movement distance-based threshold value and the distance of movement of the UE during the predetermined period of time

Advantageous Effects of Invention

According to various embodiments proposed in the disclosure, a process of determining the mobility state may be performed efficiently.

Brief Description of Drawings

FIG. 1 illustrates a structure of an LTE system according to an embodiment of the disclosure.
FIG. 2 illustrates a radio protocol structure of an LTE system according to an embodiment of the disclosure.
FIG. 3 illustrates a structure of a next-generation mobile communication system according to an embodiment of the disclosure.
FIG. 4 illustrates a radio protocol structure of a next-generation mobile communication system according to an embodiment of the disclosure.
FIG. 5 illustrates a cell reselection evaluation procedure performed by a UE which is in an RRC idle mode (RRC_IDLE) or RRC inactive state (RRC_INACTIVE) in a next-generation mobile communication system according to an embodiment of the disclosure.

FIG. 6 is a flowchart of processes in which a UE reports mobility states to an NR base station in a next-generation mobile communication system according to an embodiment of the disclosure.

FIG. 7 is a flowchart of processes in which a UE reports mobility states to an NR base station in a next-generation mobile communication system according to an embodiment of the disclosure.

FIG. 8 is a flowchart of processes in which a UE reports mobility states to an NR base station in a next-generation mobile communication system according to an embodiment of the disclosure.

FIG. 9 is a flowchart of processes in which a UE reports mobility states to an NR base station in a next-generation mobile communication system according to an embodiment of the disclosure.

FIG. 10 is a flowchart of processes in which a UE reports mobility states to an NR base station in a next-generation mobile communication system according to an embodiment of the disclosure.

FIG. 11 is a flowchart of processes in which a UE reports mobility states to an NR base station in a next-generation mobile communication system according to an embodiment of the disclosure.

FIG. 12 is a flowchart of processes in which a UE reports mobility states to an NR base station in a next-generation mobile communication system according to an embodiment of the disclosure.

FIG. 13 is a flowchart of processes in which a UE reports mobility states to an NR base station in a next-generation mobile communication system according to an embodiment of the disclosure.

FIG. 14 is a flowchart of processes in which a UE reports mobility states to an NR base station in a next-generation mobile communication system according to an embodiment of the disclosure.

FIG. 15 is a block diagram illustrating an internal structure of a UE according to an embodiment of the disclosure.

FIG. 16 is a block diagram illustrating a structure of an NR base station according to an embodiment of the disclosure.

Mode for the Invention

The terms used in the disclosure are used merely to describe particular embodiments, and may not be intended to limit the scope of other embodiments. A singular expression may include a plural expression unless they are definitely different in a context. The terms used herein, including technical and scientific terms, may have the same meaning as those commonly understood by a person skilled in the art to which the disclosure pertains. Such terms as those defined in a generally used dictionary may be interpreted to have the meanings equal to the contextual meanings in the relevant field of art, and are not to be interpreted to have ideal or excessively formal meanings unless clearly defined in the disclosure. In some cases, even the term defined in the disclosure should not be interpreted to exclude embodiments of the disclosure.

Hereinafter, various embodiments of the disclosure will be described based on an approach of hardware. However, various embodiments of the disclosure include a technology that uses both hardware and software, and thus the various embodiments of the disclosure may not exclude the perspective of software.

In the following description, terms referring to device elements (e.g., control unit, processor, artificial intelligence (AI) model, encoder, decoder, autoencoder (AE), and neural network (NN) model) and terms referring to data (e.g., signal, feedback, report, reporting, information, parameter, value, bit, and codeword) are illustratively used for the sake of descriptive convenience. Therefore, the disclosure is not limited by the terms as described below, and other terms referring to subjects having equivalent technical meanings may be used.

Furthermore, various embodiments of the disclosure will be described using terms used in some communication standards (e.g., the 3rd generation partnership project (3GPP)), but they are for illustrative purposes only. Various embodiments of the disclosure may also be easily applied to other communication systems through modifications.

Hereinafter, the operation principle of the disclosure will be described in detail in conjunction with the accompanying drawings. In describing the disclosure below, a detailed description of known functions or configurations will be omitted when it is determined that the description may make the subject matter of the disclosure unnecessarily unclear. Also, the terms which will be described below are terms defined in consideration of the functions in the disclosure, and may be different according to users, intentions of the users, or customs. Therefore, the definitions of the terms should be made based on the contents throughout the specification.

In the following description of the disclosure, a detailed description of known functions or configurations incorporated herein will be omitted when it is determined that the description may make the subject matter of the disclosure unnecessarily unclear. Hereinafter, embodiments of the disclosure will be described with reference to the accompanying drawings.

In the following description, terms for identifying access nodes, terms referring to network entities, terms referring to messages, terms referring to interfaces between network entities, terms referring to various identification information, and the like are illustratively used for the sake of descriptive convenience. Therefore, the disclosure is not limited by the terms as used herein, and other terms referring to subjects having equivalent technical meanings may be used.

In the following description of the disclosure, terms and names defined in in the 3rd generation partnership project long term evolution (3GPP LTE) standards will be used for the sake of descriptive convenience. However, the disclosure is not limited by these terms and names, and may be applied in the same way to systems that conform other standards. In the disclosure, the term "eNB" may be interchangeably used with the term "gNB" for the sake of descriptive convenience. That is, a base station described as "eNB" may refer to "gNB".

In the following description, a base station (BS) is an entity that allocates resources to terminals, and may be at least one of a radio access network (RAN) node, a next generation node B (gNode B, gNB), an evolved node B (eNode B, eNB), a Node B, a wireless access unit, a base station controller, or a node on a network. In the disclosure, the term "eNB" may be interchangeably used with the term "gNB" for the sake of descriptive convenience. That is, a base station described as "eNB" may refer to "gNB".

A terminal may include a user equipment (UE), a mobile station (MS), a cellular phone, a smartphone, a computer, or a multimedia system capable of performing a communication function. Of course, examples of the base station and the terminal are not limited to those mentioned above.

In particular, the disclosure may be applied to 3GPP NR (5th generation mobile communication standard). Also, the disclosure may be applied to intelligent services (e.g., smart homes, smart buildings, smart cities, smart cars or connected cars, healthcare, digital education, retail business, security and safety-related services, etc.) on the basis of 5G communication technology and Internet of things (IoT)-related technology. In addition, the term "terminal" may refer to not only mobile phones, NB-IoT devices, sensors, but also other wireless communication devices.

A wireless communication system is advancing to a broadband wireless communication system for providing high-speed and high-quality packet data services using communication standards, such as high-speed packet access (HSPA) of 3GPP, LTE (long-term evolution or evolved universal terrestrial radio access (E-UTRA)), LTE-Advanced (LTE-A), LTE-Pro, high-rate packet data (HRPD) of 3GPP2, ultra-mobile broadband (UMB), IEEE 802.16e, and the like, as well as typical voice-based services.

As a typical example of the broadband wireless communication system, an LTE system employs an orthogonal frequency division multiplexing (OFDM) scheme in a downlink (DL) and employs a single carrier frequency division multiple access (SC-FDMA) scheme in an uplink (UL). The uplink refers to a radio link via which a terminal (or UE) transmits data or control signals to a base station (or eNB or gNB), and the downlink refers to a radio link via which the base station transmits data or control signals to the UE. The above multiple access scheme separates data or control information of respective users by allocating and operating time-frequency resources for transmitting the data or control information for each user so as to avoid overlapping each other, that is, so as to establish orthogonality.

Since a 5G communication system, which is a post-LTE communication system, must freely reflect various requirements of users, service providers, and the like, services satisfying various requirements must be supported. The services considered in the 5G communication system include enhanced mobile broadband (eMBB) communication, massive machine-type communication (mMTC), ultra-reliability low-latency communication (URLLC), and the like.

According to an embodiment, e MBB aims at providing a data rate higher than that supported by existing LTE, LTE-A, or LTE-Pro. For example, in the 5G communication system, eMBB must provide a peak data rate of 20 Gbps in the downlink and a peak data rate of 10 Gbps in the uplink for a single base station. Furthermore, the 5G communication system must provide an increased user-perceived data rate to the UE, as well as the maximum data rate. In order to satisfy such requirements, transmission/reception technologies including a further enhanced multi-input multi-output (MIMO) transmission technique may be required to be improved. In addition, the data rate required for the 5G communication system may be obtained using a frequency bandwidth more than 20 MHz in a frequency band of 3 to 6 GHz or 6 GHz or more, instead of transmitting signals using a transmission bandwidth up to 20 MHz in a band of 2 GHz used in LTE.

In addition, mMTC is being considered to support application services such as the Internet of Things (IoT) in the 5G communication system. mMTC may have requirements, such as support of connection of a large number of UEs in a cell, enhancement coverage of UEs, improved battery time, a reduction in the cost of a UE, and the like, in order to effectively provide the Internet of Things. Since the Internet of Things provides communication functions while being provided to various sensors and various devices, it must support a large number of UEs (e.g., 1,000,000 UEs/km$^2$) in a cell. In addition, the UEs supporting mMTC may require wider coverage than those of other services provided by the 5G communication system because the UEs are likely to be located in a shadow area, such as a basement of a building, which is not covered by the cell due to the nature of the service. The UE supporting mMTC must be configured to be inexpensive, and may require a very long battery life-time such as 10 to 15 years because it is difficult to frequently replace the battery of the UE.

Lastly, URLLC, which is a cellular-based mission-critical wireless communication service, may be used for remote control for robots or machines, industrial automation, unmanned aerial vehicles, remote health care, emergency alert, and the like. Thus, URLLC must provide communication with ultra-low latency and ultra-high reliability. For example, a service supporting URLLC must satisfy an air interface latency of less than 0.5ms, and may also require a packet error rate of 10$^{-5}$ or less. Therefore, for the services supporting URLLC, a 5G system must provide a transmit time interval (TTI) shorter than those of other services, and also may require a design for assigning a large number of resources in a frequency band in order to secure reliability of a communication link.

The above-described three services considered in the 5G communication system, that is, eMBB, URLLC, and mMTC, may be multiplexed and transmitted in a single system. In this case, different transmission/reception techniques and transmission/reception parameters may be used between services in order to satisfy different requirements of the respective services. However, the above-described mMTC, URLLC, and eMBB are merely examples of different types of services, and service types to which the disclosure is applied are not limited to the above examples.

Furthermore, in the following description, LTE, LTE-A, LTE Pro, 5G (or NR), or 6G systems will be described by way of example, but the embodiments of the disclosure may also be applied to other communication systems having similar technical backgrounds or channel types. Moreover, based on determinations by those skilled in the art, the embodiments of the disclosure may also be applied to other communication systems through some modifications without significantly departing from the scope of the disclosure.

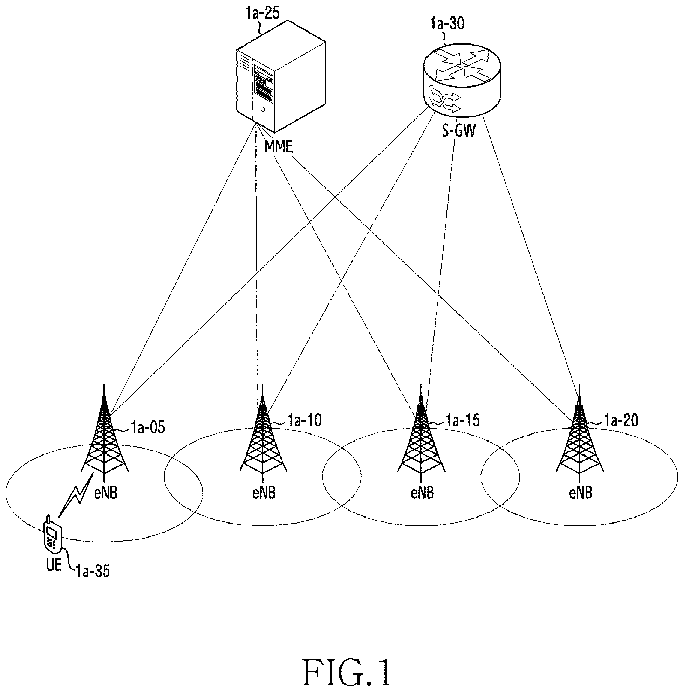

FIG. 1 illustrates a structure of an LTE system according to an embodiment of the disclosure.

Referring to FIG. 1, as illustrated therein, a radio access network of an LTE system may include next-generation base stations (evolved node Bs, hereinafter ENBs, node Bs, or base stations) 105, 110, 115, and 120, a mobility management entity (MME) 125, and a serving gateway (S-GW) 130. A user equipment (hereinafter UE or terminal) 135 may access an external network through the ENBs 105 to 120 and the S-GW 130.

In FIG. 1, the ENBs 105 to 120 may correspond to conventional node Bs of a universal mobile telecommunication system (UMTS). The ENBs may be connected to the UE 135 through a radio channel, and perform more complicated roles than the conventional node Bs. In the LTE system, since all user traffic including real-time services, such as voice over IP (VoIP) via the Internet protocol, is serviced through a shared channel, a device that collects state information, such as buffer states, available transmit power states, and channel states of UEs, and performs scheduling accordingly is required, and the ENBs 105 to 120 may serve as the device. In general, one ENB may control multiple cells. For example, in order to implement a transfer rate of 100 Mbps, the LTE system may use orthogonal frequency division multiplexing (hereinafter referred to as OFDM) as a radio access technology in a bandwidth of, for example, 20MHz. Furthermore, the LTE system may employ an adaptive modulation & coding (hereinafter referred to as AMC) scheme for determining a modulation scheme and a channel coding rate according to a channel state of a UE. The S-GW 130 is a device that provides a data bearer, and generates or removes a data bearer under the control of the MME 125. The MME is a device responsible for various control functions as well as a mobility management function for a UE, and may be connected to multiple base stations.

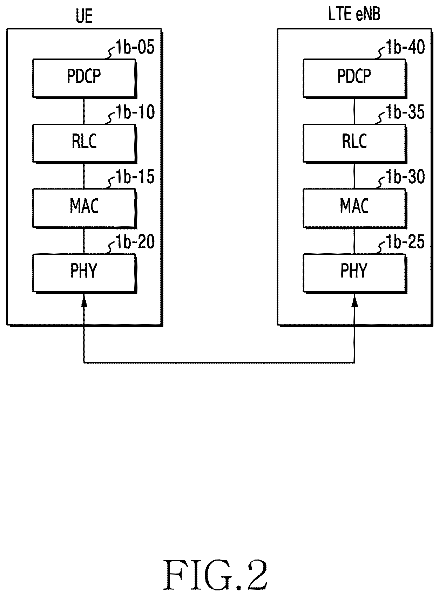

FIG. 2 illustrates a radio protocol structure of an LTE system according to an embodiment of the disclosure.

Referring to FIG. 2, a radio protocol of an LTE system includes a packet data convergence protocol (PDCP) 205 or 240, a radio link control (RLC) 210 or 235, and a medium access control (MAC) 215 or 230 on each of UE and ENB sides. The packet data convergence protocol (PDCP) 205 or 240 may be responsible for operations such as IP header compression/reconstruction. The main functions of the PDCP may be summarized as follows. The PDCP is not limited by the following exemplary functions and may perform various functions.

- Header compression and decompression: robust header compression (ROHC) only
- Transfer of user data
- In-sequence delivery (In-sequence delivery of upper layer PDUs at PDCP re-establishment procedure for RLC AM)
- For split bearers in DC (only support for RLC AM): PDCP PDU routing for transmission and PDCP PDU reordering for reception
- Duplicate detection of lower layer service data units (SDUs) at PDCP re-establishment procedure for RLC AM
- Retransmission of PDCP SDUs at handover and, for split bearers in dual connectivity (DC), of PDCP PDUs at PDCP data-recovery procedure, for RLC AM
- Ciphering and deciphering
- Timer-based SDU discard in uplink

The radio link control (hereinafter referred to as RLC) 210 or 235 may reconfigure a PDCP protocol data unit (PDU) into an appropriate size to perform an ARQ operation. The main functions of the RLC may be summarized as follows. The RLC is not limited by the following exemplary functions and may perform various functions.

- Transfer of upper layer PDUs
- Error Correction through ARQ (only for AM data transfer)
- Concatenation, segmentation and reassembly of RLC SDUs (only for UM and AM data transfer)
- Re-segmentation of RLC data PDUs (only for AM data transfer)
- Reordering of RLC data PDUs (only for UM and AM data transfer)
- Duplicate detection (only for UM and AM data transfer)
- Protocol error detection (only for AM data transfer)
- RLC SDU discard (only for UM and AM data transfer)
- RLC re-establishment

The MAC 215 or 230 may be connected to several RLC layer devices configured in a single terminal, and multiplex RLC PDUs into a MAC PDU and demultiplex a MAC PDU into RLC PDUs. The main functions of the MAC are summarized as follows.

- Mapping between logical channels and transport channels
- Multiplexing/demultiplexing of MAC SDUs belonging to one or different logical channels into/from transport blocks (TB) delivered to/from the physical layer on transport channels
- Scheduling information reporting
- HARQ (Error correction through HARQ)
- Priority handling between logical channels of one UE
- Priority handling between UEs by means of dynamic scheduling
- Multimedia broadcast and multicast service (MBMS) service identification
- Transport format selection
- Padding

A physical (PHY) layer 220 or 225 may perform operations of channel-coding and modulating upper layer data, thereby obtaining OFDM symbols, and delivering the same through a radio channel, or demodulating OFDM symbols received through the radio channel, channel-decoding the same, and delivering the same to the upper layer. The physical layer is not limited by these exemplary functions and may perform various functions.

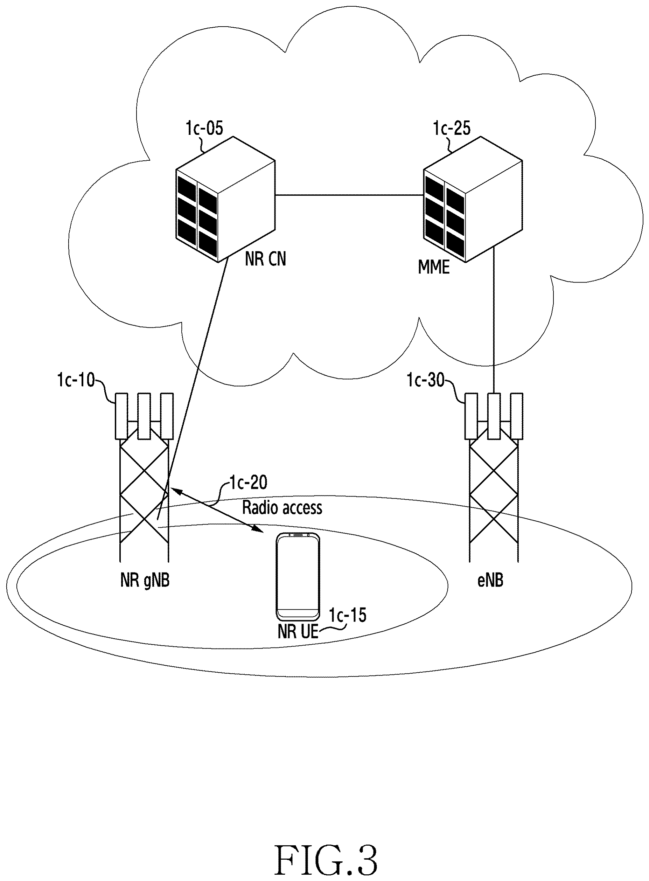

FIG. 3 illustrates a structure of a next-generation mobile communication system according to an embodiment of the disclosure.

Referring to FIG. 3, as illustrated therein, a radio access network of a next-generation mobile communication system (hereinafter NR or 5G) includes a next-generation base station (new radio node B, hereinafter NR gNB or NR base station) 310, and a new radio core network (NR CN) 305. A user terminal (new radio user equipment, hereinafter NR UE or NR terminal) 315 may access an external network via the NR gNB 310 and the NR CN 305.

In FIG. 3, the NR gNB 310 may correspond to an evolved node B (eNB) of a conventional LTE system. The NR gNB may be connected to the NR UE 315 through a radio channel and provide outstanding services as compared to a conventional node B. In the next-generation mobile communication system, since all user traffic is serviced through a shared channel, a device that collects state information, such as buffer statuses, available transmit power states, and channel states of UEs, and performs scheduling accordingly, and the NR NB 310 may serve as the device. In general, one NR gNB may control multiple cells. In order to implement ultrahigh-speed data transfer beyond the current LTE, the next-generation mobile communication system may have a wider bandwidth than the existing maximum bandwidth, may employ an orthogonal frequency division multiplexing (hereinafter referred to as OFDM) as a radio access technology, and may additionally integrate a beamforming technology therewith. Furthermore, according to an embodiment of the disclosure, the next-generation mobile communication system may employ an adaptive modulation & coding (hereinafter referred to as AMC) scheme for determining a modulation scheme and a channel coding rate according to a channel state of a UE. The NR CN 305 may perform functions such as mobility support, bearer configuration, and QoS configuration. The NR CN is a device responsible for various control functions as well as a mobility management function for a UE, and may be connected to multiple base stations. In addition, the next-generation mobile communication system may interwork with the existing LTE system, and the NR CN 105 may be connected to an MME 325 via a network interface. The MME may be connected to an eNB 330 that is an existing base station.

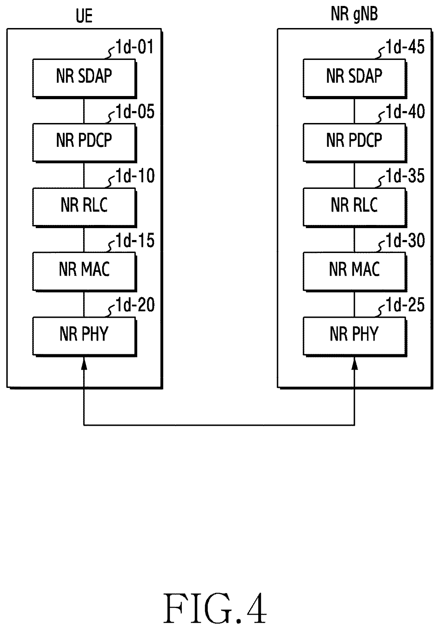

FIG. 4 illustrates a radio protocol structure of a next-generation mobile communication system according to an embodiment of the disclosure.

FIG. 4 illustrates a radio protocol structure of a next-generation mobile communication system to which the disclosure is applicable.

Referring to FIG. 4, a radio protocol of a next-generation mobile communication system includes an NR SDAP 401 or 445, an NR PDCP 405 or 440, an NR RLC 410 or 435, and an NR MAC 415 or 430 on each of UE and NR base station sides.

The main functions of the NR SDAP 401 or 445 may include some of functions below. The NR SDAP is not limited by the following exemplary functions and may perform various functions.

- Transfer of user plane data
- Mapping between a QoS flow and a DRB for both downlink (DL) and uplink (UL)
- Marking QoS flow ID in both DL and UL packets
- Reflective QoS flow to DRB mapping for the UL SDAP PDUs

With regard to the SDAP layer device, the UE may be configured, through an RRC message, whether to use the header of the SDAP layer device or whether to use functions of the SDAP layer device for each PDCP layer device or each bearer or each logical channel, and if an SDAP header is configured, the non-access stratum (NAS) QoS reflection configuration 1-bit indicator (NAS reflective QoS) and the AS QoS reflection configuration 1-bit indicator (AS reflective QoS) of the SDAP header may be indicated so that the UE can update or reconfigure mapping information regarding the QoS flow and data bearer of the uplink and downlink. The SDAP header may include QoS flow ID information indicating the QoS. The QoS flow ID information may be used as data processing priority, scheduling information, etc. for smoothly supporting services.

The main functions of the NR PDCP 405 or 440 may include some of functions below. The NR PDCP is not limited by the following exemplary functions and may perform various functions.

- Header compression and decompression: ROHC only
- Transfer of user data
- In-sequence delivery of upper layer PDUs
- Out-of-sequence delivery of upper layer PDUs
- PDCP PDU reordering for reception
- Duplicate detection of lower layer SDUs
- Retransmission of PDCP SDUs
- Ciphering and deciphering
- Timer-based SDU discard in uplink

The reordering of the NR PDCP device refers to a function of reordering PDCP PDU received from a lower layer in an order based on PDCP sequence numbers (SNs), and may include a function of transferring data to an upper layer according to a rearranged order, may include a function of directly transferring data without considering order, may include a function of rearranging order to record lost PDCP PDUs, may include a function of reporting the state of lost PDCP PDUs to a transmission side, or may include a function of requesting retransmission of lost PDCP PDUs.

The main functions of the NR RLC 410 or 435 may include some of functions below. The NR RLC is not limited by the following exemplary functions and may perform various functions.

- Transfer of upper layer PDUs
- In-sequence delivery of upper layer PDUs
- Out-of-sequence delivery of upper layer PDUs
- Error Correction through ARQ
- Concatenation, segmentation and reassembly of RLC SDUs
- Re-segmentation of RLC data PDUs
- Reordering of RLC data PDUs
- Duplicate detection
- Protocol error detection
- RLC SDU discard
- RLC re-establishment

The above-mentioned in-sequence delivery of the NR RLC device refers to a function of delivering RLC SDUs, received from the lower layer, to the higher layer in sequence, and may include a function of, if one original RLC SDU is segmented into multiple RLC SDUs and the segmented RLC SDUs are received, reassembling the RLC SDUs and delivering the reassembled RLC SDUs, may include a function of reordering the received RLC PDUs with reference to the RLC sequence number (SN) or PDCP sequence number (SN), may include a function of recording RLC PDUs lost as a result of reordering, may include a function of reporting the state of the lost RLC PDUs to the transmitting side, may include a function of requesting retransmission of the lost RLC PDUs., may include a function of, if there is a lost RLC SDU, successively delivering only RLC SDUs before the lost RLC SDU to the higher layer, may include a function of, if a predetermined timer has expired although there is a lost RLC SDU, successively delivering all RLC SDUs received before the timer was started to the higher layer, or may include a function of, if a predetermined timer has expired although there is a lost RLC SDU, successively delivering all RLC SDUs received until now to the higher layer. In addition, the in-sequence delivery of the NR RLC device may include a function of processing RLC PDUs in the received order (regardless of the sequence number order, in the order of arrival) and delivering same to the PDCP device regardless of the order (out-of-sequence delivery), and may include a function of, in the case of segments, receiving segments which are stored in a buffer or which are to be received later, reconfiguring same into one complete RLC PDU, processing, and delivering same to the PDCP device. The NR RLC layer may include no concatenation function, which may be performed in the NR MAC layer or replaced with a multiplexing function of the NR MAC layer.

The out-of-sequence delivery function of the NR RLC device refers to a function of immediately transferring RLC SDUs received from a lower layer, to an upper layer regardless of the sequence thereof, and may include a function of, if one original RLC SDU is divided into several RLC SDUs and then the RLC SDUs are received, reassembling the several RLC SDUs and transferring the reassembled RLC SDUs, and may include a function of storing an RLC sequence number (SN) or a PDCP sequence number (SN) of received RLC PDUs and arranging sequence to record lost RLC PDUs.

The NR MAC 415 or 430may be connected to multiple NR RLC layer devices configured in one UE, and the main functions of the NR MAC may include some of functions below. The NR MAC is not limited by the following exemplary functions and may perform various functions.

- Mapping between logical channels and transport channels
- Multiplexing/demultiplexing of MAC SDUs
- Scheduling information reporting
- Error correction through HARQ
- Priority handling between logical channels of one UE
- Priority handling between UEs by means of dynamic scheduling
- MBMS service identification
- Transport format selection
- Padding

An NR physical (PHY) 420 or 425 may perform operations of channel-coding and modulating upper layer data, thereby obtaining OFDM symbols, and delivering the same through a radio channel, or demodulating OFDM symbols received through the radio channel, channel-decoding the same, and delivering the same to the upper layer. The NR physical layer is not limited by these exemplary functions and may perform various functions.

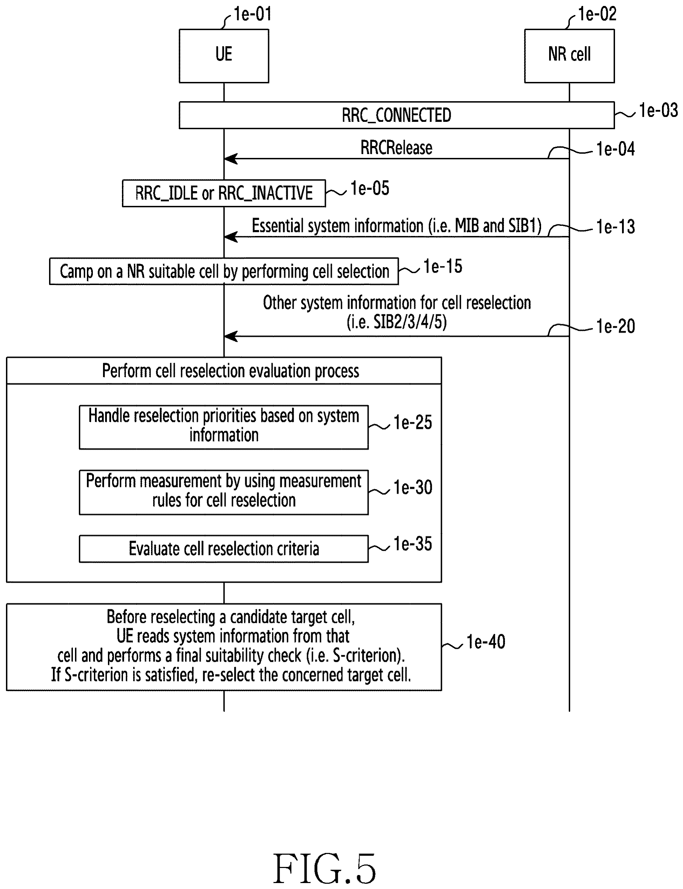

FIG. 5 illustrates a cell reselection evaluation procedure performed by a UE which is in an RRC idle mode (RRC_IDLE) or RRC inactive state (RRC_INACTIVE) in a next-generation mobile communication system according to an embodiment of the disclosure.

The cell reselection evaluation procedure may refer to a procedure wherein a UE which is in an RRC idle mode (RRC_IDLE) or RRC inactive state (RRC_INACTIVE) determines whether to maintain the current serving cell or to reselect a neighbor cell when the service quality of the serving cell on which the UE currently camps drops below the service quality of a neighbor cell due to movements or other reasons.

In the case of a handover, the network (AMF or source gNB) determines whether a handover operation is to be performed, but in the case of cell reselection, a UE in RRC idle mode or RRC inactive state may self-determine whether to perform a cell reselection operation, based on cell measurement values. The cell to be reselected by the UE may refer to a cell that uses the same NR frequency (NR intra-frequency or serving NR frequency) as the serving cell on which the UE currently camps, a cell that uses a different NR frequency (NR inter-frequency) from the serving cell, or a cell at a frequency (inter-RAT frequency) that uses a different radio access technology (hereinafter referred to as RAT).

Referring to FIG. 5, the UE 501 may configure an RRC connection with the NR cell 502 and remain in RRC connected mode (RRC_CONNECTED) (503).

The NR cell 502 may transmit (504) an RRC connection release message (RRCRelease) to release the RRC connection to the UE 501 in the RRC connected mode. If the message (RRCRelease) includes suspendConfig, the UE may transition (505) to the RRC inactive mode (RRC_INACTIVE). If the message (RRCRelease) does not include suspendConfig, the UE may transition (505) to the RRC idle mode (RRC_IDLE). The message (RRCRelease) may include cellReselectionPriorities for the UE to perform cell reselection. The cellReselectionPriorities may contain at least one value from among freqPriorityListEUTRA, freqPriorityListNR, and t320. In case that the t320 value is included, the UE may drive timer T320 with the corresponding value. Specifically, the message (RRCRelease) may include configuration information as in Table 0 below:

[Table 0]

```
RRCRelease ::=                          SEQUENCE {
    rrc-TransactionIdentifier           RRC-TransactionIdentifier,
    criticalExtensions                  CHOICE {
        rrcRelease                          RRCRelease-IEs,
        criticalExtensionsFuture        SEQUENCE {}
    }
}


RRCRelease-IEs ::=                      SEQUENCE {
    redirectedCarrierInfo                                   RedirectedCarrierInfo
OPTIONAL,    -- Need N
    cellReselectionPriorities                              CellReselectionPriorities
OPTIONAL,    -- Need R
    suspendConfig                                          SuspendConfig
OPTIONAL,    -- Need R
    deprioritisationReq                 SEQUENCE {
        deprioritisationType                ENUMERATED {frequency, nr},
        deprioritisationTimer               ENUMERATED {min5, min10, min15, min30}
    }
```

```
OPTIONAL,      -- Need N
        lateNonCriticalExtension                                    OCTET   STRING
OPTIONAL,
        nonCriticalExtension                                         RRCRelease-v1540-IEs
OPTIONAL
}


RRCRelease-v1540-IEs ::=           SEQUENCE {
        waitTime                   RejectWaitTime                    OPTIONAL, -
- Need N
        nonCriticalExtension       RRCRelease-v1610-IEs              OPTIONAL
}


RRCRelease-v1610-IEs ::=           SEQUENCE {
```

```
voiceFallbackIndication-r16                              ENUMERATED     {true}
OPTIONAL, -- Need N
        measIdleConfig-r16                      SetupRelease {MeasIdleConfigDedicated-r16}
OPTIONAL, -- Need M
        nonCriticalExtension                                        RRCRelease-v1650-IEs
OPTIONAL
}


RRCRelease-v1650-IEs ::=           SEQUENCE {
        mpsPriorityIndication-r16                             ENUMERATED     {true}
OPTIONAL, -- Cond Redirection2
        nonCriticalExtension                                        SEQUENCE   {}
OPTIONAL
}


RedirectedCarrierInfo ::=          CHOICE {
        nr                              CarrierInfoNR,
        eutra                           RedirectedCarrierInfo-EUTRA,
        ...
}


RedirectedCarrierInfo-EUTRA ::=    SEQUENCE {
        eutraFrequency                      ARFCN-ValueEUTRA,
```

```
        cnType                              ENUMERATED   {epc,fiveGC}
OPTIONAL      -- Need N
}


CarrierInfoNR ::=               SEQUENCE {
    carrierFreq                     ARFCN-ValueNR,
    ssbSubcarrierSpacing            SubcarrierSpacing,
    smtc                                                        SSB-MTC
OPTIONAL,        -- Need S
    ...
}
```

```
SuspendConfig ::=               SEQUENCE {
    fullI-RNTI                      I-RNTI-Value,
    shortI-RNTI                     ShortI-RNTI-Value,
    ran-PagingCycle                 PagingCycle,
    ran-NotificationAreaInfo                        RAN-NotificationAreaInfo
OPTIONAL,     -- Need M
    t380                                            PeriodicRNAU-TimerValue
OPTIONAL,     -- Need R
    nextHopChainingCount            NextHopChainingCount,
    ...,
    [[
    sl-ServingCellInfo-r17                          SL-ServingCellInfo-r17
OPTIONAL, -- Cond L2RemoteUE
    sdt-Config-r17                                  SetupRelease { SDT-Config-r17 }
OPTIONAL,     -- Need M
    srs-PosRRC-InactiveConfig-r17                   SRS-PosRRC-InactiveConfig-r17
OPTIONAL,     -- Need M
    ran-ExtendedPagingCycle-r17                     ExtendedPagingCycle-r17
OPTIONAL      -- Need R
    ]]
}


PeriodicRNAU-TimerValue ::=     ENUMERATED { min5, min10, min20, min30, min60,
min120, min360, min720}
```

```
CellReselectionPriorities ::=          SEQUENCE {
        freqPriorityListEUTRA                                    FreqPriorityListEUTRA
OPTIONAL,          -- Need M
        freqPriorityListNR                                       FreqPriorityListNR
OPTIONAL,          -- Need M
        t320                                      ENUMERATED  {min5, min10, min20, min30,
min60, min120, min180, spare1} OPTIONAL,          -- Need R
```

```
...,
    [[
    freqPriorityListNRSlicing-r17                               FreqPriorityListNRSlicing-r17
OPTIONAL          -- Need M
    ]]
}


PagingCycle ::=                        ENUMERATED {rf32, rf64, rf128, rf256}


ExtendedPagingCycle-r17 ::=            ENUMERATED {rf256, rf512, rf1024, spare1}


FreqPriorityListEUTRA  ::=                          SEQUENCE  (SIZE  (1..maxFreq))  OF
FreqPriorityEUTRA


FreqPriorityListNR ::=                 SEQUENCE (SIZE (1..maxFreq)) OF FreqPriorityNR


FreqPriorityEUTRA ::=                  SEQUENCE {
    carrierFreq                            ARFCN-ValueEUTRA,
    cellReselectionPriority                CellReselectionPriority,
    cellReselectionSubPriority                              CellReselectionSubPriority
OPTIONAL          -- Need R
}


FreqPriorityNR ::=                     SEQUENCE {
    carrierFreq                            ARFCN-ValueNR,
    cellReselectionPriority                CellReselectionPriority,
    cellReselectionSubPriority                              CellReselectionSubPriority
OPTIONAL          -- Need R
```

```
}

RAN-NotificationAreaInfo ::=          CHOICE {
    cellList                              PLMN-RAN-AreaCellList,
    ran-AreaConfigList                    PLMN-RAN-AreaConfigList,
    ...
}
```

```
PLMN-RAN-AreaCellList ::=             SEQUENCE (SIZE (1.. maxPLMNIdentities)) OF
PLMN-RAN-AreaCell


PLMN-RAN-AreaCell ::=                 SEQUENCE {
    plmn-Identity                                                 PLMN-Identity
OPTIONAL,    -- Need S
    ran-AreaCells                        SEQUENCE (SIZE (1..32)) OF   CellIdentity
}


PLMN-RAN-AreaConfigList ::=           SEQUENCE (SIZE (1..maxPLMNIdentities)) OF
PLMN-RAN-AreaConfig


PLMN-RAN-AreaConfig ::=               SEQUENCE {
    plmn-Identity                                                 PLMN-Identity
OPTIONAL,    -- Need S
    ran-Area                             SEQUENCE (SIZE (1..16)) OF    RAN-
AreaConfig
}


RAN-AreaConfig ::=                    SEQUENCE {
    trackingAreaCode                        TrackingAreaCode,
    ran-AreaCodeList                        SEQUENCE (SIZE (1..32)) OF   RAN-AreaCode
OPTIONAL      -- Need R


SDT-Config-r17 ::=                    SEQUENCE {
    sdt-DRB-List-r17                          SEQUENCE (SIZE (0..maxDRB)) OF DRB-
Identity                            OPTIONAL,    -- Need M
    sdt-SRB2-Indication-r17                         ENUMERATED    {allowed}
OPTIONAL,    -- Need R
```

```
        sdt-MAC-PHY-CG-Config-r17                        SetupRelease    {SDT-CG-Config-r17}
OPTIONAL,      -- Need M
        sdt-DRB-ContinueROHC-r17                             ENUMERATED    {  cell,  rna  }
OPTIONAL      -- Need R
```

```
}


SDT-CG-Config-r17 ::= OCTET STRING (CONTAINING SDT-MAC-PHY-CG-Config-r17)


SDT-MAC-PHY-CG-Config-r17 ::=           SEQUENCE {
        -- CG-SDT specific configuration
        -- FFS on BSR configuration (e.g. i.e. for the FFS on the logicalChannelSR-DelayTimer)
        -- FFS on delta signalling (We need to clarify how this works, for instance, whether initial BWP
dedicated can be considered as
        -- baseline to enable delta configuration or not etc).


        cg-SDT-Config-LCH-restrictionToAddModList-r17 SEQUENCE (SIZE(1..maxLC-ID)) OF
CG-SDT-Config-LCH-restriction-r17 OPTIONAL,      -- Need N
        cg-SDT-Config-LCH-restrictionToReleaseList-r17  SEQUENCE  (SIZE(1..maxLC-ID))  OF
LogicalChannelIdentity   OPTIONAL,      -- Need N
        cg-SDT-Config-Initial-BWP-NUL-r17           SetupRelease {BWP-Uplink-Dedicated-SDT-
r17}                      OPTIONAL,      -- Need M
        cg-SDT-Config-Initial-BWP-SUL-r17           SetupRelease {BWP-Uplink-Dedicated-SDT-
r17}                      OPTIONAL,      -- Need M
        cg-SDT-Config-Initial-BWP-DL-r17                         BWP-Downlink-Dedicated-SDT-r17
OPTIONAL,      -- Need M
        cg-SDT-TimeAlignmentTimer-r17                                          TimeAlignmentTimer
OPTIONAL,      -- Need M
        cg-SDT-RSRP-ThresholdSSB-r17                                               RSRP-Range
OPTIONAL,      -- Need M
        cg-SDT-TA-ValiditationConfig-r17                SetupRelease  {  CG-SDT-TA-
ValiditationConfig-r17 }                 OPTIONAL,      -- Need M
        ...
}


CG-SDT-TA-ValiditationConfig-r17 ::= SEQUENCE {
        cg-SDT-RSRP-ChangeThreshold-r17         RSRP-Range
```

```
}
```

```
BWP-Downlink-Dedicated-SDT-r17 ::=    SEQUENCE {
        pdcch-Config-r17                                SetupRelease  { PDCCH-Config }
OPTIONAL,     -- Need M
        pdsch-Config-r17                                SetupRelease  { PDSCH-Config }
OPTIONAL,     -- Need M

        ...

}BWP-Uplink-Dedicated-SDT-r17 ::=      SEQUENCE {
        pusch-Config-r17                                SetupRelease  { PUSCH-Config }
OPTIONAL,     -- Need M
        configuredGrantConfigToAddModList-r17
ConfiguredGrantConfigToAddModList-r17              OPTIONAL,     -- Need N
        configuredGrantConfigToReleaseList-r17
ConfiguredGrantConfigToReleaseList-r17             OPTIONAL,     -- Need N

        ...

}


ConfiguredGrantConfigToAddModList-r17              ::=          SEQUENCE          (SIZE
(1..maxNrofConfiguredGrantConfig-r16)) OF ConfiguredGrantConfig


ConfiguredGrantConfigToReleaseList-r17            ::=          SEQUENCE          (SIZE
(1..maxNrofConfiguredGrantConfig-r16)) OF ConfiguredGrantConfigIndex-r16


CG-SDT-Config-LCH-restriction-r17 ::= SEQUENCE {
        logicalChannelIdentity-r17            LogicalChannelIdentity,
        configuredGrantType1Allowed-r17                        ENUMERATED       {true}
OPTIONAL,     -- Need R
        allowedCG-List-r17                                  SEQUENCE (SIZE   (0..
maxNrofConfiguredGrantConfigMAC-1-r16)) OF ConfiguredGrantConfigIndexMAC-r16


OPTIONAL     -- Need R
}


SRS-PosRRC-InactiveConfig-r17 ::=          SEQUENCE {
        srs-PosConfig-r17                          SRS-PosConfig-r17,
```

```
bwp-r17                                                                        BWP
OPTIONAL,      -- Need S
       srs-TimeAlignmentTimer-r17                                TimeAlignmentTimer
OPTIONAL,       -- Need R
       inactivePosSRS-RSRP-changeThresh-r17                    RSRP-ChangeThresh-r17
OPTIONAL,       -- Need R
       srs-NrofSS-BlocksToAverage-r17                   INTEGER   (1..ffsUpperLimit)
OPTIONAL,       -- Need R
-- FFS upper limit
       inactivePosSRS-AbsThreshSS-BlocksConsolidation-r17               RSRP-Range
OPTIONAL        -- Need R
}


--Editor's Note: Following temporary constant is introduced only for ASN.1 syntax purposes. Actual
upper limit of the ranges using this constant throughout the specification are FFS.
ffsUpperLimit INTEGER ::= 9999


RSRP-ChangeThresh-r17 ::= ENUMERATED {dB4, dB6, dB8, dB10, dB14, dB18, dB22, dB26,
dB30, dB34, spare6, spare5, spare4, spare3, spare2, spare1}


--Editor's Note: To be updated to align with SDT, to further update SUL/NUL and BWP--


SRS-PosConfig-r17 ::=                    SEQUENCE {
       srs-PosResourceSetToReleaseList-r17 SEQUENCE (SIZE(1..maxNrofSRS-PosResourceSets-
r16)) OF SRS-PosResourceSetId-r16 OPTIONAL,-- Need N
       srs-PosResourceSetToAddModList-r17          SEQUENCE       (SIZE(1..maxNrofSRS-
PosResourceSets-r16)) OF SRS-PosResourceSet-r16   OPTIONAL,-- Need N
       srs-PosResourceToReleaseList-r17         SEQUENCE  (SIZE(1..maxNrofSRS-PosResources-
r16)) OF SRS-PosResourceId-r16         OPTIONAL,-- Need N
       srs-PosResourceToAddModList-r17               SEQUENCE   (SIZE(1..maxNrofSRS-
PosResources-r16)) OF SRS-PosResource-r16          OPTIONAL -- Need N
}
```

In operation 513, the UE in the RRC idle mode or RRC inactive state may acquire essential system information from the NR cell 502. In the disclosure, the master information block (MIB) and system information block 1 (SIB1) may be referred to as essential system information.

In operation 515, the UE in the RRC idle mode or RRC inactive state may perform a cell selection procedure, based on the essential system information acquired in operation 513. That is, the UE may find an NR suitable cell belonging to the selected PLMN or SNPN and may camp on the cell. The cell on which the UE camps on can be referred to as a serving cell. In the disclosure, a suitable cell may be defined in case that the conditions in Table 1 below are fulfilled, based on 3GPP standard document "38.304: User Equipment (UE) procedures in Idle mode and RRC Inactive state."

[Table 1]

| **suitable cell:** |
|---|
| For UE not operating in SNPN Access Mode, a cell is considered as suitable if the following conditions are fulfilled: |
| -The cell is part of either the selected PLMN or the registered PLMN or PLMN of the Equivalent PLMN list, and for that PLMN either: |
| -The PLMN-ID of that PLMN is broadcast by the cell with no associated CAG-IDs and CAG-only indication in the UE for that PLMN (TS 23.501 [10]) is absent or false; |
| -Allowed CAG list in the UE for that PLMN (TS 23.501 [10]) includes a CAG-ID broadcast by the cell for that PLMN; |
| -The cell selection criteria are fulfilled, see clause 5.2.3.2. According to the latest information provided by NAS: |
| -The cell is not barred, see clause 5.3.1; |
| -The cell is part of at least one TA that is not part of the list of "Forbidden Tracking Areas for Roaming" (TS 22.011 [18]), which belongs to a PLMN that fulfils the first bullet above. |
| For UE operating in SNPN Access Mode, a cell is considered as suitable if the following conditions are fulfilled: |
| -The cell is part of either the selected SNPN or the registered SNPN of the UE; |
| -The cell selection criteria are fulfilled, see clause 5.2.3.2; |
| According to the latest information provided by NAS: |
| -The cell is not barred, see clause 5.3.1; |
| -The cell is part of at least one TA that is not part of the list of "Forbidden Tracking Areas for Roaming" which belongs to either the selected SNPN or the registered SNPN of the UE. |

For reference, the UE may determine that the cell selection criteria are fulfilled if the following Equation 1 is satisfied.

[Equation 1]

$$Srxlev > 0 \text{ AND } Squal > 0$$

Where

$$Srxlev = Q_{rxlevmeas} - (Q_{rxlevmin} + Q_{rxlevminoffset}) - P_{compensation} - Qoffset_{temp},$$

$$Squal = Q_{qualmeas} - (Q_{qualmin} + Q_{qualminoffset}) - Qoffset_{temp.}$$

For the definition of parameters used herein, 3GPP standard document "38.304: User Equipment (UE) procedures in Idle mode and RRC Inactive state" may be referenced.

In operation 520, the UE in the RRC idle mode or RRC inactive state may acquire system information (as an example, SIB2, SIB3, SIB4, SIB5) that contains cell reselection information from the serving cell 502 in order to perform a cell reselection evaluation procedure. SIB2 may include information/parameters commonly applied to reselection of an NR intra-frequency/NR inter-frequency/inter-RAT frequency cell by the RRC UE, and NR intra-frequency cell reselection information excluding information related to NR intra-frequency neighbor cells. As an example, SIB2 may include one piece of cell reselection priority configuration information regarding the serving NR frequency (the frequency to which the currently camped-on cell belongs). The cell reselection priority configuration information may refer to cellReselection-Priority and cellReselectionSubPriority. Specifically, cellReselectionPriority may contain an integer value (as an example, an integer value from 0 to 7), and cellReselectionSubPriority may contain a decimal value (as an example, a decimal value from among 0.2, 0.4, 0.6, 0.8). In case that both cellReselectionPriority and cellReselectionSubPriority are signaled, the UE may derive a cell reselection priority value by adding the two values. For reference, a larger cell reselection priority value may correspond to a higher priority. A serving cell according to the disclosure is characterized in that cellReselectionPriority mapped to the serving NR frequency through SIB2 is mandatorily broadcast, and since cellReselectionSubPriority is optionally broadcast, cell reselection priority configuration information is mandatorily broadcast at the serving NR frequency. Specifically, the cell reselection configuration information broadcast in SIB2 may be as in Table 2 below:

[Table 2]

```
SIB2 ::=                            SEQUENCE {
    cellReselectionInfoCommon       SEQUENCE {
        nrofSS-BlocksToAverage                          INTEGER   (2..maxNrofSS-
BlocksToAverage)            OPTIONAL,      -- Need S
        absThreshSS-BlocksConsolidation                         ThresholdNR
OPTIONAL,        -- Need S
        rangeToBestCell                                 RangeToBestCell
OPTIONAL,        -- Need R
        q-Hyst                          ENUMERATED {
                                        dB0, dB1, dB2, dB3, dB4, dB5, dB6,
dB8, dB10,
                                        dB12, dB14, dB16, dB18, dB20, dB22,
dB24},
        speedStateReselectionPars       SEQUENCE {
```

```
                mobilityStateParameters              MobilityStateParameters,
                q-HystSF                             SEQUENCE {
                    sf-Medium                            ENUMERATED {dB-6, dB-4, dB-2,
dB0},
                    sf-High                              ENUMERATED {dB-6, dB-4, dB-2,
dB0}
                }
            }
OPTIONAL,        -- Need R

        ...

    },
    cellReselectionServingFreqInfo     SEQUENCE {
        s-NonIntraSearchP                                ReselectionThreshold
OPTIONAL,        -- Need S
        s-NonIntraSearchQ                                ReselectionThresholdQ
OPTIONAL,        -- Need S
        threshServingLowP                ReselectionThreshold,
        threshServingLowQ                                ReselectionThresholdQ
OPTIONAL,        -- Need R
        cellReselectionPriority          CellReselectionPriority,
        cellReselectionSubPriority       CellReselectionSubPriority
```

```
OPTIONAL,        -- Need R

        ...

    },
    intraFreqCellReselectionInfo     SEQUENCE {
        q-RxLevMin                           Q-RxLevMin,
        q-RxLevMinSUL                                    Q-RxLevMin
OPTIONAL,        -- Need R
        q-QualMin                                        Q-QualMin
OPTIONAL,        -- Need S
        s-IntraSearchP                   ReselectionThreshold,
        s-IntraSearchQ                                   ReselectionThresholdQ
OPTIONAL,        -- Need S
        t-ReselectionNR                  T-Reselection,
        frequencyBandList                                MultiFrequencyBandListNR-SIB
OPTIONAL,        -- Need S
        frequencyBandListSUL                             MultiFrequencyBandListNR-SIB
```

```
OPTIONAL,          -- Need R
        p-Max                                          P-Max
OPTIONAL,          -- Need S
        smtc                                           SSB-MTC
OPTIONAL,          -- Need S
        ss-RSSI-Measurement                    SS-RSSI-Measurement
OPTIONAL,          -- Need R
ssb-ToMeasure                                  SSB-ToMeasure
OPTIONAL,          -- Need S
        deriveSSB-IndexFromCell        BOOLEAN,

        ...,
        [[
        t-ReselectionNR-SF                     SpeedStateScaleFactors
OPTIONAL          -- Need N
        ]],
        [[
        smtc2-LP-r16                           SSB-MTC2-LP-r16
OPTIONAL,          -- Need R
```

```
        ssb-PositionQCL-Common-r16         SSB-PositionQCL-Relation-r16
OPTIONAL          -- Cond SharedSpectrum
        ]]
    },
    ...,
    [[
    relaxedMeasurement-r16             SEQUENCE {
        lowMobilityEvaluation-r16          SEQUENCE {
            s-SearchDeltaP-r16                 ENUMERATED {
                                                   dB3, dB6, dB9, dB12, dB15,
                                                   spare3, spare2, spare1},
            t-SearchDeltaP-r16                 ENUMERATED {
                                                   s5, s10, s20, s30, s60, s120, s180,
                                                   s240, s300, spare7, spare6, spare5,
                                                   spare4, spare3, spare2, spare1}
        }
OPTIONAL,          -- Need R
        cellEdgeEvaluation-r16             SEQUENCE {
            s-SearchThresholdP-r16                 ReselectionThreshold,
```

```
                    s-SearchThresholdQ-r16                              ReselectionThresholdQ
OPTIONAL              -- Need R
        }
OPTIONAL,            -- Need R
            combineRelaxedMeasCondition-r16                 ENUMERATED        {true}
OPTIONAL,            -- Need R
            highPriorityMeasRelax-r16                       ENUMERATED    {true}
OPTIONAL             -- Need R
        }
OPTIONAL             -- Need R
        ]]
}

RangeToBestCell        ::= Q-OffsetRange
```

SIB3 may include neighbor cell information/parameters to be used by the UE in the RRC idle mode or RRC inactive state to reselect an NR intra-frequency cell. As an example, in SIB3, an NR intra-frequency cell list (intraFreq-NeighCellList) for reselecting an NR intra-frequency cell or a cell list (intraFreqBlackCellList) which does not allow NR intra-frequency cell reselection may be broadcast. Specifically, in SIB3, information in Table 3 below may be broadcast.

[Table 3]

```
SIB3 ::=                         SEQUENCE {
    intraFreqNeighCellList                          IntraFreqNeighCellList
OPTIONAL,    -- Need R
    intraFreqBlackCellList                          IntraFreqBlackCellList
OPTIONAL,    -- Need R
    lateNonCriticalExtension                        OCTET    STRING
OPTIONAL,
    ...,
    [[
    intraFreqNeighCellList-v1610                    IntraFreqNeighCellList-v1610
OPTIONAL,    -- Need R
    intraFreqWhiteCellList-r16                      IntraFreqWhiteCellList-r16
OPTIONAL,    -- Cond SharedSpectrum2
    intraFreqCAG-CellList-r16              SEQUENCE (SIZE (1..maxPLMN)) OF
IntraFreqCAG-CellListPerPLMN-r16    OPTIONAL     -- Need R
    ]]
}
```

```
IntraFreqNeighCellList   ::=                     SEQUENCE  (SIZE  (1..maxCellIntra))  OF
IntraFreqNeighCellInfo


IntraFreqNeighCellList-v1610::=                  SEQUENCE  (SIZE  (1..maxCellIntra))  OF
IntraFreqNeighCellInfo-v1610


IntraFreqNeighCellInfo ::=          SEQUENCE {
    physCellId                          PhysCellId,
    q-OffsetCell                        Q-OffsetRange,
    q-RxLevMinOffsetCell                                    INTEGER   (1..8)
OPTIONAL,     -- Need R
    q-RxLevMinOffsetCellSUL                                 INTEGER   (1..8)
OPTIONAL,     -- Need R
    q-QualMinOffsetCell            INTEGER (1..8)
```

```
OPTIONAL,      -- Need R

    ...
}


IntraFreqNeighCellInfo-v1610 ::=       SEQUENCE {
    ssb-PositionQCL-r16                    SSB-PositionQCL-Relation-r16
OPTIONAL      -- Cond SharedSpectrum2
}


IntraFreqBlackCellList ::=             SEQUENCE (SIZE (1..maxCellBlack)) OF
PCI-Range


IntraFreqWhiteCellList-r16 ::=         SEQUENCE (SIZE (1..maxCellWhite)) OF
PCI-Range


IntraFreqCAG-CellListPerPLMN-r16 ::= SEQUENCE {
    plmn-IdentityIndex-r16                 INTEGER (1..maxPLMN),
    cag-CellList-r16                       SEQUENCE (SIZE (1..maxCAG-
Cell-r16)) OF PCI-Range
}
```

SIB4 may include information/parameters to be used by the UE in the RRC idle mode or RRC inactive state to reselect an NR inter-frequency cell. For example, in SIB4, one or multiple NR inter-frequencies may be broadcast, and one piece of cell reselection priority configuration information may be broadcast per each NR inter-frequency. The cell reselection priority configuration information per each NR inter-frequency refers to the above description (for example, cellReselectionPriority and/or cellReselectionSubPriority mapped to each NR inter-frequency), but is characterized in that one piece of cell reselection priority configuration information is optionally broadcast per each inter-frequency. Specifically, in SIB4, information in Table 4 below may be broadcast.

[Table 4]

```
SIB4 ::=                         SEQUENCE {
    interFreqCarrierFreqList         InterFreqCarrierFreqList,
    lateNonCriticalExtension                          OCTET    STRING
OPTIONAL,

    ...,
    [[
    interFreqCarrierFreqList-v1610                    InterFreqCarrierFreqList-v1610
OPTIONAL    -- Need R
    ]]
}


InterFreqCarrierFreqList    ::=            SEQUENCE   (SIZE   (1..maxFreq))   OF
InterFreqCarrierFreqInfo


InterFreqCarrierFreqList-v1610      ::=     SEQUENCE    (SIZE    (1..maxFreq))    OF
InterFreqCarrierFreqInfo-v1610


InterFreqCarrierFreqInfo ::=        SEQUENCE {
    dl-CarrierFreq                   ARFCN-ValueNR,
    frequencyBandList                            MultiFrequencyBandListNR-SIB
OPTIONAL,     -- Cond Mandatory
    frequencyBandListSUL                         MultiFrequencyBandListNR-SIB
OPTIONAL,     -- Need R
    nrofSS-BlocksToAverage           INTEGER (2..maxNrofSS-BlocksToAverage)
OPTIONAL,     -- Need S
    absThreshSS-BlocksConsolidation                          ThresholdNR
OPTIONAL,     -- Need S
    smtc                                                     SSB-MTC
OPTIONAL,     -- Need S
```

```
            ssbSubcarrierSpacing              SubcarrierSpacing,
            ssb-ToMeasure                                          SSB-ToMeasure
    OPTIONAL,    -- Need S
            deriveSSB-IndexFromCell           BOOLEAN,
```

```
    ss-RSSI-Measurement                                    SS-RSSI-Measurement
    OPTIONAL,
            q-RxLevMin                        Q-RxLevMin,
            q-RxLevMinSUL                                          Q-RxLevMin
    OPTIONAL,    -- Need R
            q-QualMin                                              Q-QualMin
    OPTIONAL,    -- Need S
            p-Max                                                  P-Max
    OPTIONAL,    -- Need S
            t-ReselectionNR                   T-Reselection,
            t-ReselectionNR-SF                                SpeedStateScaleFactors
    OPTIONAL,    -- Need S
            threshX-HighP                     ReselectionThreshold,
            threshX-LowP                      ReselectionThreshold,
            threshX-Q                         SEQUENCE {
                threshX-HighQ                     ReselectionThresholdQ,
                threshX-LowQ                      ReselectionThresholdQ
            }
    OPTIONAL,    -- Cond RSRQ
            cellReselectionPriority                          CellReselectionPriority
    OPTIONAL,    -- Need R
            cellReselectionSubPriority                       CellReselectionSubPriority
    OPTIONAL,    -- Need R
            q-OffsetFreq                                          Q-OffsetRange
    DEFAULT dB0,
            interFreqNeighCellList                           InterFreqNeighCellList
    OPTIONAL,    -- Need R
            interFreqBlackCellList                           InterFreqBlackCellList
    OPTIONAL,    -- Need R

            ...
    }


    InterFreqCarrierFreqInfo-v1610 ::=    SEQUENCE {
```

| interFreqNeighCellList-v1610 | InterFreqNeighCellList-v1610 |
|---|---|

```
OPTIONAL,      -- Need R
    smtc2-LP-r16                                          SSB-MTC2-LP-r16
OPTIONAL,      -- Need R
    interFreqWhiteCellList-r16                       InterFreqWhiteCellList-r16
OPTIONAL,      -- Cond SharedSpectrum2
    ssb-PositionQCL-Common-r16                    SSB-PositionQCL-Relation-r16
OPTIONAL,      -- Cond SharedSpectrum
    interFreqCAG-CellList-r16              SEQUENCE  (SIZE  (1..maxPLMN))  OF
InterFreqCAG-CellListPerPLMN-r16    OPTIONAL        -- Need R
}


InterFreqNeighCellList  ::=                  SEQUENCE  (SIZE  (1..maxCellInter))  OF
InterFreqNeighCellInfo


InterFreqNeighCellList-v1610    ::=          SEQUENCE  (SIZE  (1..maxCellInter))  OF
InterFreqNeighCellInfo-v1610


InterFreqNeighCellInfo ::=          SEQUENCE {
    physCellId                          PhysCellId,
    q-OffsetCell                        Q-OffsetRange,
    q-RxLevMinOffsetCell                                     INTEGER   (1..8)
OPTIONAL,     -- Need R
    q-RxLevMinOffsetCellSUL                                  INTEGER   (1..8)
OPTIONAL,     -- Need R
    q-QualMinOffsetCell                                      INTEGER   (1..8)
OPTIONAL,     -- Need R
    ...
}


InterFreqNeighCellInfo-v1610 ::=      SEQUENCE {
    ssb-PositionQCL-r16                          SSB-PositionQCL-Relation-r16
OPTIONAL     -- Cond SharedSpectrum2
}
```

```
InterFreqBlackCellList ::=              SEQUENCE (SIZE (1..maxCellBlack)) OF PCI-Range

InterFreqWhiteCellList-r16 ::=          SEQUENCE (SIZE (1..maxCellWhite)) OF PCI-Range

InterFreqCAG-CellListPerPLMN-r16 ::= SEQUENCE {
    plmn-IdentityIndex-r16              INTEGER (1..maxPLMN),
    cag-CellList-r16                    SEQUENCE (SIZE (1..maxCAG-Cell-r16)) OF PCI-
Range
}
```

SIB5 may include information/parameters to be used by the UE in the RRC idle mode or RRC inactive state to reselect an inter-RAT frequency cell. As an example, in SIB5, one or multiple EUTRA frequencies may be broadcast, and one piece of cell reselection priority configuration information may be broadcast per each EUTRA frequency. The cell reselection priority configuration information per each EUTRA frequency refers to the above description (for example, cellReselectionPriority and/or cellReselectionSubPriority mapped to each EUTRA frequency), but is characterized in that one piece of cell reselection priority configuration information is optionally broadcast per each EUTRA frequency. Specifically, in SIB5, information in Table 5 below may be broadcast.

[Table 5]

```
SIB5 ::=                        SEQUENCE {
    carrierFreqListEUTRA                            CarrierFreqListEUTRA
OPTIONAL,       -- Need R
    t-ReselectionEUTRA              T-Reselection,
    t-ReselectionEUTRA-SF                           SpeedStateScaleFactors
OPTIONAL,       -- Need S
    lateNonCriticalExtension                        OCTET    STRING
OPTIONAL,
    ...,
    [[
    carrierFreqListEUTRA-v1610                      CarrierFreqListEUTRA-v1610
OPTIONAL         -- Need R
    ]]
}

CarrierFreqListEUTRA ::=         SEQUENCE (SIZE (1..maxEUTRA-Carrier)) OF
CarrierFreqEUTRA
```

```
CarrierFreqListEUTRA-v1610  ::=        SEQUENCE  (SIZE  (1..maxEUTRA-Carrier))  OF
CarrierFreqEUTRA-v1610


CarrierFreqEUTRA ::=                   SEQUENCE {
    carrierFreq                       ARFCN-ValueEUTRA,
    eutra-multiBandInfoList                            EUTRA-MultiBandInfoList
OPTIONAL,        -- Need R
    eutra-FreqNeighCellList                            EUTRA-FreqNeighCellList
OPTIONAL,        -- Need R
    eutra-BlackCellList                                EUTRA-FreqBlackCellList
OPTIONAL,           -- Need R
    allowedMeasBandwidth              EUTRA-AllowedMeasBandwidth,
    presenceAntennaPort1              EUTRA-PresenceAntennaPort1,
    cellReselectionPriority                            CellReselectionPriority
OPTIONAL,           -- Need R
```

```
    cellReselectionSubPriority                            CellReselectionSubPriority
OPTIONAL,           -- Need R
        threshX-High                  ReselectionThreshold,
        threshX-Low                   ReselectionThreshold,
        q-RxLevMin                     INTEGER (-70..-22),
        q-QualMin                      INTEGER (-34..-3),
        p-MaxEUTRA                     INTEGER (-30..33),
        threshX-Q                      SEQUENCE {
            threshX-HighQ                  ReselectionThresholdQ,
            threshX-LowQ                   ReselectionThresholdQ
        }
OPTIONAL           -- Cond RSRQ
}


CarrierFreqEUTRA-v1610 ::= SEQUENCE {
    highSpeedEUTRACarrier-r16                          ENUMERATED     {true}
OPTIONAL           -- Need R
}


EUTRA-FreqBlackCellList ::=           SEQUENCE  (SIZE  (1..maxEUTRA-CellBlack))  OF
EUTRA-PhysCellIdRange
```

```
EUTRA-FreqNeighCellList ::=          SEQUENCE (SIZE (1..maxCellEUTRA)) OF EUTRA-
FreqNeighCellInfo


EUTRA-FreqNeighCellInfo ::=          SEQUENCE {
    physCellId                            EUTRA-PhysCellId,
    dummy                                 EUTRA-Q-OffsetRange,
    q-RxLevMinOffsetCell                                              INTEGER   (1..8)
OPTIONAL,            -- Need R
    q-QualMinOffsetCell                                               INTEGER   (1..8)
OPTIONAL            -- Need R
}
f
```

The UE in the RRC idle mode or RRC inactive state may perform a cell reselection evaluation process. The cell reselection evaluation process may refer to a series of processes of performing reselection priorities handling, performing frequency measurement by applying measurement rules for cell reselection, and evaluating cell reselection criteria, thereby reselecting cells.

In operation 525, the UE in the RRC idle mode or RRC inactive state may determine reselection priorities, based on the RRC release message received in operation 504 or the system information received in operation 520. In case that the RRC connection release message received in operation 504 includes cellReselectionPriorities, and cellReselectionPriorities has no t320 timer value, or in case that the t320 timer value is configured, and the T320 timer is thus running, the UE may determine reselection priorities, based on the RRC connection release message. That is, in case that the celllReselectionPriorities included in the RRC connection release message is applicable, the UE may determine reselection priorities according to the RRC connection release message. In case that cellReselectionPriorities is not included in the RRC connection release message, or cellReselectionPriorities has been released, the UE may determine reselection priorities, based on the system information received in operation 520. A UE according to the disclosure may determine, with reference to the cell reselection priority value mapped to the NR frequency to which the currently camped-on serving cell belongs, whether each NR inter-frequency or inter-RAT frequency-specific cell reselection priority has the same cell reselection priority as the NR frequency to which the serving cell belongs, whether the same has a higher cell reselection priority than the NR frequency to which the serving cell belongs, or whether the same has a lower cell reselection priority than the NR frequency to which the serving cell belongs. As an example, in case that, in the system information acquired in operation 520, the cell reselection priority value mapped to the NR frequency to which currently camped-on serving cell belongs is 3, the cell reselection priority value of inter NR frequency 1 is 2, the cell reselection priority value of inter NR frequency 2 is 3, the cell reselection priority value of inter NR frequency 3 is 4, and the cell reselection priority value of EUTRA frequency 1 is 2, the UE may determine that inter NR frequency 1 and EUTRA frequency 1 have a lower reselection priority, inter NR frequency 2 has an equal reselection priority, and inter NR frequency 3 has a higher reselection priority.

In operation 530, the UE in the RRC idle mode or RRC inactive state may perform frequency measurement for cell reselection. The UE may perform frequency measurement by using the following measurement rule according to the cell reselection priority determined in operation 525 in order to minimize battery consumption.

- The UE may not perform NR intra-frequency measurement if the following condition 1 is satisfied. Otherwise (as an example, if the following condition 1 is not satisfied), the UE may perform NR intra-frequency measurement.

    ■ Condition 1: the serving cell's reception level (Srxlev) is larger than the SIntraSearchP threshold value, and the serving cell's reception quality (Squal) is larger than the SIntraSearchQ threshold value (Serving cell fulfils Srxlev > SIntraSearchP and Squal > SIntraSearchQ).

- With regard to an NR inter-frequency or inter-RAT frequency having a higher reselection priority than the NR frequency of the current serving cell, the UE may perform measurement according to 3GPP TS 38.133 standards.
- With regard to an NR inter-frequency, the reselection priority of which is lower than or equal to the NR frequency of the current serving cell, and an inter-RAT frequency having a reselection priority lower than the NR frequency of the current serving cell, the UE may not perform measurement if the following condition 2 is satisfied. Otherwise (as an example, if the following condition 2 is not satisfied), the UE may measure cells at the NR inter-frequency, the reselection priority of which is lower than or equal to the NR frequency, or may measure cells at the inter-RAT frequency having a reselection priority lower than the NR frequency.

■ Condition 2: the serving cell's reception level (Srxlev) is larger than the SnonIntraSearchP threshold value, and the serving cell's reception quality (Squal) is larger than the SnonIntraSearchQ threshold value (Serving cell fulfils Srxlev > SnonIntraSearchP and Squal > SnonIntraSearchQ).

For reference, the aforementioned threshold values (SintraSearchP, SintraSearchQ, SnonIntraSearchP SnonintraSearchQ) may be broadcast in the system information acquired in operation 520.

In operation 535, the UE in the RRC idle mode or RRC inactive state may determine to reselect a cell that satisfies cell reselection criteria, based on the value of measurement performed in operation 530. Different criteria may be applied to the cell reselection criteria according to cell reselection priorities. Cell reselection to a higher priority RAT/frequency shall take precede over a lower priority RAT/frequency if multiple cells of different priorities fulfil the cell reselection criteria. Specifically, the UE's operations regarding reselection criteria of an inter-frequency/inter-RAT cell having a higher priority than the frequency of the current serving cell may be as follows:

- First operation:

■ In case that, in SIB2, the threshold value regarding threshServingLowQ is included and broadcast, in case that one second has elapsed since the UE camped on the current serving cell, and in case that the signal quality (Squal) of the inter-frequency/inter-RAT cell is larger than threshold value ThreshX,HighQ during specific time TreselectionRAT (Squal > ThreshX,HighQ during a time interval TreselectionRAT), the UE may perform reselection to the inter-frequency/inter-RAT cell.

- Second operation:

■ In case that the UE fails to perform the first operation, the UE may perform the second operation.
■ In case that one second has elapsed since the UE camped on the current serving cell, and in case that the reception level (Srxlev) of the inter-frequency/inter-RAT cell is larger than threshold value ThreshX,HighP during specific time TreselectionRAT (Srxlev > ThreshX, HighP during a time interval TreselectionRAT), the UE may perform reselection to the inter-frequency/inter-RAT cell.

The UE may perform the first or second operation, based on information included in SIB4 broadcast from the serving cell, in connection with the inter-frequency cell's signal quality (Squal), reception level (Srxlev), threshold values ($Threh_{X, HighQ}$, $Thresh_{X, HighP}$), and $election_{RAT}$ values. The UE may perform the first or second operation, based on information included in SIB5 broadcast from the serving cell, in connection with the inter-RAT cell's signal quality (Squal), reception level (Srxlev), threshold values ($Thresh_{X,HighQ}$, $Thresh_{X, HighP}$), and $Treselection_{RAT}$ values. As an example, SIB4 may include a $Q_{qualmin}$ value, a $Q_{rxlevmin}$ value, or the like, and the inter-frequency cell's signal quality (Squal) or reception level (Srxlev) may be derived based thereon. In case that there are multiple cells at the NR frequency satisfying a high cell reselection priority, the UE may reselect the highest ranked cell among cells that satisfy reselection criteria of intra-frequency/inter-frequency cells having the same priority as the frequency of the current serving cell described below in detail.

In addition, the UE's operations regarding reselection criteria of intra-frequency/inter-frequency cells having the same priority as the frequency of the current serving cell may be as follows:

- Third operation:

■ In case that the intra-frequency/inter-frequency cell's signal quality (Squal) and reception level (Srxlev) are larger than 0, the cell-specific rank is derived based on measurement values (RSRP) (The UE shall perform ranking of all cells that fulfills the cell selection criterion S). The rank of the serving cell and that of neighbor cells may be calculated through Equation 2 below:

[Equation 2]

$$R_s = Q_{meas,s} + Q_{hyst} - Qoffset_{temp}$$

$$R_n = Q_{meas,n} - Qoffset - Qoffset_{temp}$$

- Qmeas,s refers to the RSRP measurement value of the serving cell, Qmeas,n refers to the RSRP measurement value of neighbor cells, Qhyst refers to the hysteresis value of the serving cell, and Qoffset refers to the offset between the serving cell and neighbor cells. SIB2 includes the Qhyst value, which may be commonly used with regard to reselection of intra-frequency/inter-frequency cells. In the case of reselection of the intra-frequency cell, Qoffset is signaled with regard to each cell, is applied only to indicated cells, and is included in SIB3. In the case of reselection of the inter-frequency cell, Qoffset is signaled with regard to each cell, is applied only to indicated cells, and is included in SIB4. In case that the rank of neighbor cells obtained from Equation 2 is larger than the rank of the serving cell (Rn > Rs), the optimal cell among the neighbor cells may be reselected.
- $Qoffset_{temp}$ is an offset temporarily applied to cells, may refer to connEstFailOffset included in ConnEstFailureControld which is broadcast in SIB1, and may be applied if the RRC connection fails (for example, if T300 timer expires).

In addition, the UE's operations regarding reselection criteria of inter-frequency/inter-RAT cells having lower priorities than frequency of the current serving cell may be as follows:

- Fourth operation:

■ In case that, in SIB2, the threshold value regarding threshServingLowQ is included and broadcast, in case that one second has elapsed since the UE camped on the current serving cell, in case that the current serving cell's signal quality (Squal) is smaller than threshold value ThreshServing, LowQ (Squal < ThreshServing, LowQ), and in case that the signal quality (Squal) of the inter-frequency/inter-RAT cell is larger than threshold value ThreshX,LowQ during specific time TreselectionRAT (Squal > ThreshX,LowQ during a time interval TreselectionRAT), the UE may perform reselection to the inter-frequency/inter-RAT cell.

- Fifth operation:

■ In case that the UE fails to perform the fourth operation, the UE may perform the fifth operation.
■ In case that one second has elapsed since the UE camped on the current serving cell, in case that the current serving cell's signal reception level (Srxlev) is smaller than threshold value ThreshServing, LowP (Srxlev < ThreshServing, LowP), and in case that the reception level (Srxlev) of the inter-frequency/inter-RAT cell is larger than threshold value ThreshX,LowP during specific time TreselectionRAT (Srxlev > ThreshX,LowP during a time interval TreselectionRAT), the UE may perform reselection to the inter-frequency/inter-RAT cell.

The UE may perform the fourth or fifth operation regarding the inter-frequency cell, based on threshold values (Thresh$_{Serving, LowQ}$, Thresh$_{Serving, LowP}$) included in SIB2 broadcast from the serving cell, and the inter-frequency cell's signal quality (Squal), reception level (Srxlev), threshold values (Threh$_{X, LowQ}$, Thresh$_{X, LowP}$), and Treselection$_{RAT}$ included in SIB4 broadcast from the serving cell. The UE may perform the fourth or fifth operation regarding the inter-RAT cell, based on threshold values (Thresh$_{Serving, LowQ}$, Thresh$_{Serving, LowP}$) included in SIB2 broadcast from the serving cell, and the inter-RAT cell's signal quality (Squal), reception level (Srxlev), threshold values (Thresh$_{X,LowQ}$, Thresh$_{X, LowP}$), and Treselection$_{RAT}$ included in SIB5 broadcast from the serving cell. As an example, SIB4 may include a Q$_{qualmin}$ value, a Q$_{rxlevmin}$ value, or the like, and the inter-frequency cell's signal quality (Squal) or reception level (Srxlev) may be derived based thereon. In case that there are multiple cells at the NR frequency that satisfying a high cell reselection priority, the UE may reselect the highest ranked cell among cells that satisfy reselection criteria of intra-frequency/inter-frequency cells having the same priority as the frequency of the current serving cell described below in detail.

In operation 540, the UE in the RRC idle mode or RRC inactive state may receive system information (for example, MIB or SIB1) broadcasted from a candidate target cell before finally reselecting the candidate target cell, and may determine, based on the received system information, whether the candidate target cell's reception level (Srxlev) and reception quality (Squal) fulfill a cell selection criterion which is referred to as S-criterion (Equation 1) (Srxlev > 0 AND Squal > 0). If Equation 1 is fulfilled, and if the candidate target cell is suitable, the UE may reselect the candidate target cell.

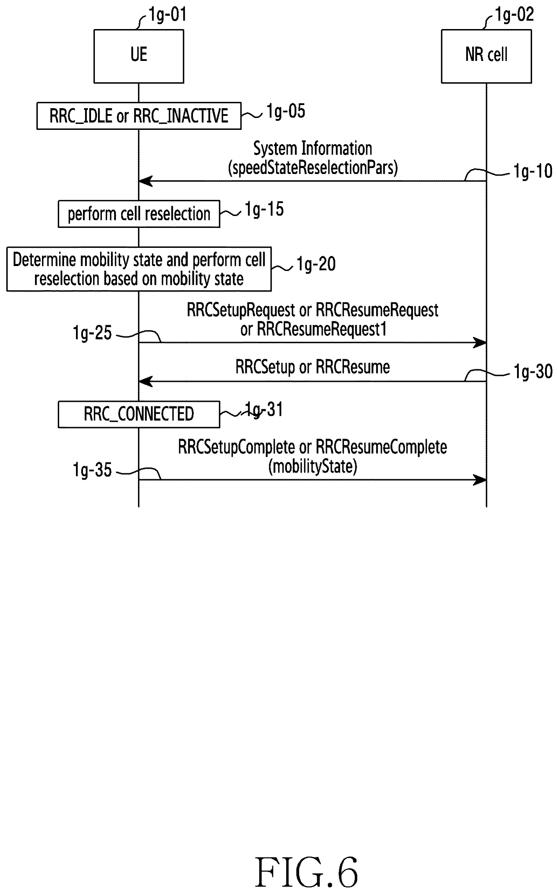

FIG. 6 is a flowchart of processes in which a UE reports mobility states to an NR base station in a next-generation mobile communication system according to an embodiment of the disclosure.

Referring to FIG. 6, the UE 601 may be in RRC idle mode (RRC_IDLE) or RRC inactive mode (RRC_INACTIVE).

In operation 610, the UE 601 in the RRC idle mode or RRC inactive mode may receive or acquire system information from the base station 602. The system information may include parameters to be used by the UE to perform a cell selection or cell reselection process. This may follow the above-described embodiment. Additionally, in the system information, parameters (speedStateReselectionPars) for determining the UE's mobility state may be broadcast.

- t-Evaluation: The duration of evaluating criteria to enter mobility states. As an example, a value from among 30 seconds, 60 seconds, 120 seconds, 180 seconds, and 240 seconds may be signaled.

    ■ t-Evaluation may refer to $T_{CRmax}$. This specifies the duration for evaluating allowed amount of cell reselection(s).

- t-HystNormal: the additional duration for evaluating criteria to enter normal mobility state. As an example, a value from among 30 seconds, 60 seconds, 120 seconds, 180 seconds, and 240 seconds may be signaled.

    ■ t-HystNormal may refer to $T_{CRmaxHyst}$. This specifies the additional time period before the UE can enter Normal-mobility state.

- n-CellChangeMedium: the number of cell changes to enter medium mobility state. As an example, an integer value from among 1 to 16 may be signaled.

    ■ n-CellChangeMedium may refer to $N_{CR\_M}$. This specifies the maximum number of cell reselections to enter Medium-mobility state.

- n-CellChangeHigh: the number of cell changes to enter high mobility state. As an example, an integer value from among 1 to 16 may be signaled, and a larger value than n-CellChangeMedium may be signaled.

    ■ n-CellChangeHigh may refer to $N_{CR\_H}$. This specifies the maximum number of cell reselections to enter High-mobility state.

- q-HystSF: a speed-based ScalingFator parameter

    ■ sf-Medium: an additional hysteresis parameter value used in the medium mobility state. As an example, a value from among -6 dB, -4 dB, -2 dB, and 0 dB may be signaled.
    ■ sf-High: an additional hysteresis parameter value used in the high mobility state. As an example, a value from among -6 dB, -4 dB, -2 dB, and 0 dB may be signaled.

- t-Reselection-SF (per NR frequency): a SpeedStateScaleFactors parameter

    ■ sf-Medium: an additional mobility control related parameter value used in the medium mobility state. As an example, a value from among 0.25, 0.5, 0.75, and 1 may be signaled.
    ■ sf-High: an additional mobility control related parameter value used in the high mobility state. As an example, a value from among 0.25, 0.5, 0.75, and 1 may be signaled.

- t-ReselectionEUTRA-SF (per EUTRA frequency or common for all EUTRA frequencies): a SpeedStateScaleFactors parameter

    ■ sf-Medium: an additional mobility control related parameter value used in the medium mobility state. As an example, a value from among 0.25, 0.5, 0.75, and 1 may be signaled.
    ■ sf-High: an additional mobility control related parameter value used in the high mobility state. As an example, a value from among 0.25, 0.5, 0.75, and 1 may be signaled.

In operation 615, the UE 601 in the RRC idle mode or RRC inactive mode may perform a cell selection or cell reselection process. This may follow the above-described embodiment.

In operation 620, the UE 601 in RRC idle mode or RRC inactive mode may determine the mobility state. The UE may determine the mobility state according to predetermined criteria as follows:

- Medium-mobility state criteria

■ If number of cell reselections during time period $T_{CRmax}$ is greater than or equal to $N_{CR\_M}$ but less than or equal to $N_{CR\_H}$

- High-mobility state criteria

■ If number of cell reselections during time period $T_{CRmax}$ is greater than $N_{CR\_H}$

- Normal-mobility state criteria

■ If criteria for either Medium- or High-mobility state is not detected during time period $T_{CRmaxHsyt}$, or if number of cell reselections during time period $T_{CRmax}$ is less than $N_{CR\_M}$

The UE may perform a cell reselection process by applying a scaling rule according to the determined mobility state. Specifically,

- If neither Medium- nor High-mobility state is detected

■ No scaling is applied

- If High-mobility state is detected

■ Add the sf-High of "Speed dependent ScalingFactor for Qhyst" to Qhyst if broadcasted in system information
■ For NR cells, multiply TreselectionNR by the sf-High value of "Speed dependent ScalingFactor for TreselectionNR" if broadcasted in system information
■ For EUTRA cells, multiply TreselectionEUTRA by the sf-High of "Speed dependent ScalingFactor for TreselectionEUTRA" if broadcasted in system information

- If Medium-mobility state is detected

■ Add the sf-Medium of "Speed dependent ScalingFactor for Qhyst" to Qhyst if broadcasted in system information
■ For NR cells, multiply TreselectionNR by the sf-Medium value of "Speed dependent ScalingFactor for TreselectionNR" if broadcasted in system information
■ For EUTRA cells, multiply TreselectionEUTRA by the sf-Medium value of "Speed dependent ScalingFactor for TreselectionEUTRA" if broadcasted in system information

For reference, in case scaling is applied to any TreselectionRAT parameter, the UE shall round up the result after all scalings to the nearest second.

In operation 620, the UE may perform the cell reselection process specified in operation 615 by reflecting the scaling result according to the determined mobility state.

In operation 625, the UE 601 in the RRC idle mode or RRC inactive mode may initiate an RRC connection establishment procedure or an RRC connection resume procedure in order to establish an RRC connection to the base station 602. That is, in operation 625, the UE may transmit an RRC connection request message (RRCSetupRequest) or an RRC connection resumption request message (RRCResumeRequest or RRCResumeRequest1) to the base station. In operation 630, the base station may transmit an RRC connection establishment message (RRCSetup) or an RRC connection resumption message (RRCResume) to the UE in response to the RRC connection request message or the RRC connection resumption request message. Upon receiving the RRC connection establishment message or the RRC connection resumption message, the UE may transition (631) to the RRC connected mode (RRC_CONNECTED). The UE in the RRC connected mode may transmit (635) an RRC connection establishment completion message (RRCSetupComplete) or an RRC connection resumption completion message (RRCResumeComplete) to the base station. The RRC connection establishment completion message or the RRC connection resumption completion message may contain the UE's mobility state. Specifically, the RRC connection establishment completion message or the RRC connection resumption completion message may include the *mobilityState* and set it to the mobility state (as specified in TS 38.304) of the UE just prior to entering RRC _CONNECTED state.

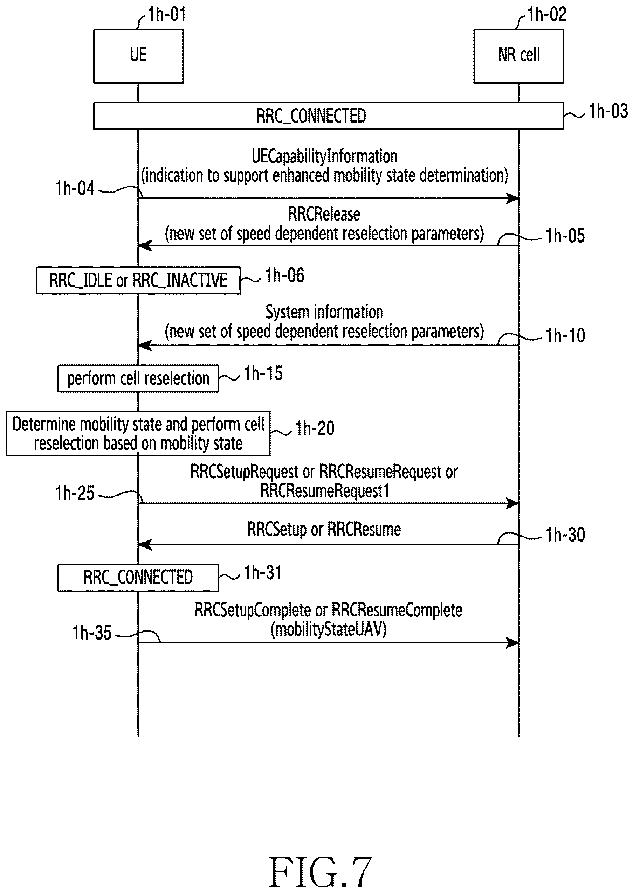

FIG. 7 is a flowchart of processes in which a UE reports mobility states to an NR base station in a next-generation mobile communication system according to an embodiment of the disclosure.

The UE in the next-generation mobile communication system according to this embodiment may refer to a UE capable of receiving an uncrewed aerial vehicle (UAV) service. Alternatively, the same may refer to a UE capable of flying or moving at a high speed, or a UE capable of applying a newly defined mobility state determination method. A UE capable of receiving a UAV service may satisfy the following requirements specified in 3GPP TS 22.125. In particular, the UE may receive a UAV service while moving at a high speed. A UE moving at a high speed may enter a medium mobility state or a high mobility state much later, despite the high speed, in case of following the conventional mobility state determination. Therefore, a mobility state determination method for a UE will be proposed in this embodiment.

[Table 6]

| Control Mode | Function | Typical Message Interval | Max UAV ground speed | Typical message Size (note 1) | End to end Latency | Reliability (note 2) | Positive ACK (note 8) |
|---|---|---|---|---|---|---|---|
| Steer to way-points (note 3) | UAV termi-nated C2 mes-sage | >=1 s | 300 km/h | 100 byte | 1 s | 99.9% | Required |
| | UAV originated C2 message (note 4) | 1 s | | 84-140 byte | 1 s | 99.9% | Not Required |
| Direct stick steering (note 5) | UAV termi-nated C2 mes-sage | 40 ms (note 6) | 60km/h | 24 byte | 40 ms | 99.9% | Required |
| | UAV originated C2 message (note 7) | 40 ms | | 84-140 byte | 40 ms | 99.9% | Not Required |
| Automatic flight on UTM (note 10) | UAV termi-nated C2 mes-sage | 1 s | 300 km/h | <10 kbyte 1500 byte | 5 s (note 9) | 99.9% | Required |
| | UAV originated C2 message | 1 s (note 9) | | | 5 s (note 9) | 99.9% | Required |
| Approaching Autonomous Navigation In-frastructure | UAV termi-nated C2 mes-sage | 500 ms | 50 km/h | 4 kbyte | 10 ms | 99% | Required |
| | VAVoriginated C2 message | 500 ms | | 4 kbyte | 140 ms | 99.99% | Required |

NOTE 1: Message size is at the application layer and excludes any headers and security related load. The numbers shown are typical as message size depends on the commands sent and is implementation specific.

NOTE 2: Message reliability is defined as the probability of successful transmission within the required latency at the application layer while under network coverage.

NOTE 3: Video is neither required nor expected to be used for steering in this mode.

NOTE 4: It may be possible to transmit this message on an event driven basis (e.g. approaching a geo fence). A status message may, but is not required to, be sent as a response to a control message.

NOTE 5: A video feedback is required for this mode. The KPIs for video are defined in table 7.2-2.

NOTE 6: UAVs on-board controllers typically update at either 50Hz (20ms) or 25Hz (40ms).

NOTE 7: A status message may, but is not required to, be sent as a response to a control message A 1Hz slow mode also exists.

NOTE 8: Positive ACK is sent to the originator of the message (i.e. UAV controller and / or the UTM). The 5G system makes no assumption whether an appropriate ACK is sent by the application layer.

NOTE 9: At the application layer, the C2 communication between a UAV and UTM can be allowed to experience much longer traffic interruptions, e.g. timeouts of 30 s on the uplink and 300 s on the downlink.

NOTE 10: This only represents periodic message exchange during a nominal mission in steady state. It does not represent unusual or aperiodic events such as conveying dynamic restrictions or a flight plan to the UAV on the downlink.

Referring to FIG. 7, the UE 701 may establish an RRC connection to the NR cell 702 and may thus be in an RRC connected mode (RRC_CONNECTED) (703).

In operation 704, the UE 701 in the RRC connected mode may transmit a UE capability information message (UECapabilityInformation) to the NR cell 702. The UE capability information message (UECapabilityInformation) may include at least one of the following:

- An indicator that may determine the enhanced mobility state
- An indicator indicating a UAV UE
- An indicator indicating that new speed dependent reselection parameters included in the system information or RRC connection release message may be applied

In operation 705, the NR cell 702 may transmit an RRC connection release message (RRCRelease) to the UE 701 in the RRC connected mode. The RRC connection release message (RRCRelease) may include new speed dependent reselection parameters. The new speed dependent reselection parameters may refer to at least one of the following:

- t-ReselectionRATUAV: this specifies the cell reselection timer value. With regard to each target NR frequency or each RAT, a specific cell reselection timer value may be defined. Conventional t-ReselectionRAT may be configured to have a value from among 0, 1, .., 7, but t-ReselectionRATUAV may be configured to have a smaller value than conventional t-ReselectionRAT or one of smaller but various values. As an example, the same may be configured to have a value from among 0, 0.1, 0.2, 0.3, 0.4, .., 1.

  ■ The timer value regarding NR refers to t-ReselectionNRUAV, and may be configured with regard to each frequency.
  ■ The timer value regarding E-UTRA refers to t-ReselectionEUTRAUAV, and may be configured with regard to each frequency or to be commonly applied to E-UTRAN frequencies.
  ■ t-ReselectionRATUAV may be configured to have a smaller value than conventional t-ReselectionRAT or one of smaller but various values. The UE of the disclosure may thus perform cell reselection faster.

- t-EvaluationUAV: the duration of evaluating criteria to enter mobility states. As an example, a value from among 5 seconds, 10 seconds, 20 seconds, 30 seconds, 60 seconds, 120 seconds, 180 seconds, and 240 seconds may be signaled. The parameter may include a smaller value than conventional t-Evaluation. This is for the purpose of ensuring that the UE according to the disclosure can enter the medium mobility state or high mobility state more quickly.

  ■ t-EvaluationUAV may refer to $T_{CRmaxUAv}$. This specifies the duration for evaluating allowed amount of cell reselection(s)

- t-HystNormalUAV: the additional duration for evaluating criteria to enter normal mobility state. As an example, one from among 5 seconds, 10 seconds, 30 seconds, 60 seconds, 120 seconds, 180 seconds, 240 seconds, and 360 seconds may be signaled. t-EvaluationUAV may include a smaller or larger value than conventional t-HystNormal. The small value may be included for the purpose of quickly transitioning to the normal mobility state. The larger value may be included for the purpose of slowly transitioning to the normal mobility state.

  ■ t-HystNormalUAV may refer to $T_{CRmaxHystUAV}$. This specifies the additional time period before the UE may enter Normal-mobility state

- n-CellChangeMediumUAV: the number of cell changes to enter medium mobility state. As an example, an integer value from among 1 (or 0) to 16 may be signaled. n-CellChangeMediumUAV may include a smaller value than conventional n-CellChangeMedium. This is for the purpose of ensuring that the UE according to the disclosure can enter the medium mobility state more quickly.

  ■ n-CellChangeMediumUAV may refer to $N_{CR\_MUA}$. This specifies the maximum number of cell reselections to enter Medium-mobility state.

- n-CellChangeHighUAV: the number of cell changes to enter high mobility state. As an example, an integer value from among 1 (or 0) to 16 may be signaled, and a larger value than n-CellChangeMediumUAV may be signaled. n-CellChangeMediumUAV may include a smaller value than conventional n-CellChangeHigh. This is for the purpose of ensuring that the UE according to the disclosure can enter the high mobility state more quickly.

■ n-CellChangeHigh may refer to $N_{CR\_H}$. This specifies the maximum number of cell reselections to enter High-mobility state.

- q-HystSFUAV: a speed-based ScalingFator parameter

■ sf-MediumUAV: an additional hysteresis parameter value used in the medium mobility state. As an example, a value from among -10dB, -8dB, -6dB, -4dB, -2dB, and 0dB may be signaled. sf-MediumUAV may include a smaller value than conventional sf-Medium, and this may be for the purpose of facilitating neighbor cell reselection.

■ sf-HighUAV: an additional hysteresis parameter value used in the high mobility state. As an example, a value from among -10dB, -8dB, -6dB, -4dB, -2dB, and 0dB may be signaled. sf-HighUAV may include a smaller value than conventional sf-High, and this may be for the purpose of facilitating neighbor cell reselection.

- t-Reselection-SFUAV (per NR frequency): a SpeedStateScaleFactors parameter

■ sf-MediumUAV: an additional mobility control related parameter value used in the medium mobility state. As an example, a value from among 0.1, 0.125, 0.25, 0.5, 0.75, and 1 may be signaled. sf-MediumUAV may include a smaller value than conventional sf-Medium, and this may be for the purpose of facilitating neighbor cell reselection.

■ sf-HighUAV: an additional mobility control related parameter value used in the high mobility state. As an example, a value from among 0.1, 0.125, 0.25, 0.5, 0.75, and 1 may be signaled. sf-HighUAV may include a smaller value than conventional sf-High, and this may be for the purpose of facilitating neighbor cell reselection.

- t-ReselectionEUTRA-SFUAV (per EUTRA frequency or common for all EUTRA frequencies): a SpeedStateScale-Factors parameter

■ sf-MediumUAV: an additional mobility control related parameter value used in the medium mobility state. As an example, a value from among 0.1, 0.125, 0.25, 0.5, 0.75, and 1 may be signaled. sf-MediumUAV may include a smaller value than conventional sf-Medium, and this may be for the purpose of facilitating neighbor cell reselection.

■ sf-HighUAV: an additional mobility control related parameter value used in the high mobility state. As an example, a value from among 0.25, 0.5, 0.75, and 1 may be signaled. As an example, a value from among 0.1, 0.125, 0.25, 0.5, 0.75, and 1 may be signaled. sf-HighUAV may include a smaller value than conventional sf-High, and this may be for the purpose of facilitating neighbor cell reselection.

- A value indicating cell reselection is possible how many seconds after camping on the serving cell

■ Conventionally, neighbor cell reselection is possible one second after camping on the current serving cell, but the new value may include a value smaller than one second such that the UE according to the disclosure can reselect a neighbor cell before one second elapses.

- A new timer value

■ A new timer value indicating the time to apply the new speed dependent reselection parameters described above. In case that a new timer value is included, the UE according to the disclosure may drive a new timer with the new timer value.

In operation 706, upon receiving the RRC connection release message, the UE 701 may transition to the RRC idle mode (RRC_IDLE) or RRC inactive mode (RRC_INACTIVE).

In operation 710, the UE 701 in the RRC idle mode or RRC inactive mode may receive or acquire system information from the base station 702. The system information may include parameters to be used by the UE to perform a cell selection or cell reselection process. This may follow the above-described embodiment. Additionally, in the system information, new parameters (speedStateReselectionParsUAV) for determining the UE's mobility state may be broadcast.

- t-ReselectionRATUAV: this specifies the cell reselection timer value. With regard to each target NR frequency or each RAT, a specific cell reselection timer value may be defined. Conventional t-ReselectionRAT may be configured to have a value from among 0, 1, .., 7, but t-ReselectionRATUAV may be configured to have a smaller value than conventional t-ReselectionRAT or one of smaller but various values. As an example, the same may be configured to have a value from among 0, 0.1, 0.2, 0.3, 0.4, .., 1.

■ The timer value regarding NR refers to t-ReselectionNRUAV, and may be configured with regard to each frequency.

■ The timer value regarding E-UTRA refers to t-ReselectionEUTRAUAV, and may be configured with regard to each frequency or to be commonly applied to E-UTRAN frequencies.

t-ReselectionRATUAV may be configured to have a smaller value than conventional t-ReselectionRAT or one of smaller but various values. The UE of the disclosure may thus perform cell reselection faster.

■ t-EvaluationUAV: the duration of evaluating criteria to enter mobility states. As an example, a value from among 5 seconds, 10 seconds, 20 seconds, 30 seconds, 60 seconds, 120 seconds, 180 seconds, and 240 seconds may be signaled. t-EvaluationUAV may include a smaller value than conventional t-Evaluation. This is for the purpose of ensuring that the UE according to the disclosure can enter the medium mobility state or high mobility state more quickly.

■ t-EvaluationUAV may refer to $T_{CRmaxUAv}$. This specifies the duration for evaluating allowed amount of cell reselection(s)

- t-HystNormalUAV: the additional duration for evaluating criteria to enter normal mobility state. As an example, one from among 5 seconds, 10 seconds, 30 seconds, 60 seconds, 120 seconds, 180 seconds, 240 seconds, and 360 seconds may be signaled. t-EvaluationUAV may include a smaller or larger value than conventional t-HystNormal. The small value may be included for the purpose of quickly transitioning to the normal mobility state. The larger value may be included for the purpose of slowly transitioning to the normal mobility state.

■ t-HystNormalUAV may refer to $T_{CRmaxHystUAV}$. This specifies the additional time period before the UE may enter Normal-mobility state

- n-CellChangeMediumUAV: the number of cell changes to enter medium mobility state. As an example, an integer value from among 1 (or 0) to 16 may be signaled. n-CellChangeMediumUAV may include a smaller value than conventional n-CellChangeMedium. This is for the purpose of ensuring that the UE according to the disclosure can enter the medium mobility state more quickly.

■ n-CellChangeMediumUAV may refer to $N_{CR\_MUA}$. This specifies the maximum number of cell reselections to enter Medium-mobility state.

- n-CellChangeHighUAV: the number of cell changes to enter high mobility state. As an example, an integer value from among 1 (or 0) to 16 may be signaled, and a larger value than n-CellChangeMediumUAV may be signaled. n-CellChangeMediumUAV may include a smaller value than conventional n-CellChangeHigh. This is for the purpose of ensuring that the UE according to the disclosure can enter the high mobility state more quickly.

■ n-CellChangeHigh may refer to $N_{CR\_H}$. This specifies the maximum number of cell reselections to enter High-mobility state.

- q-HystSFUAV: a speed-based ScalingFator parameter

■ sf-MediumUAV: an additional hysteresis parameter value used in the medium mobility state. As an example, a value from among -10dB, -8dB, -6dB, -4dB, -2dB, and 0dB may be signaled. sf-MediumUAV may include a smaller value than conventional sf-Medium, and this may be for the purpose of facilitating neighbor cell reselection.

■ sf-HighUAV: an additional hysteresis parameter value used in the high mobility state. As an example, a value from among -10dB, -8dB, -6dB, -4dB, -2dB, and 0dB may be signaled. sf-HighUAV may include a smaller value than conventional sf-High, and this may be for the purpose of facilitating neighbor cell reselection.

- t-Reselection-SFUAV (per NR frequency): a SpeedStateScaleFactors parameter

■ sf-MediumUAV: an additional mobility control related parameter value used in the medium mobility state. As an example, a value from among 0.1, 0.125, 0.25, 0.5, 0.75, and 1 may be signaled. sf-MediumUAV may include a smaller value than conventional sf-Medium, and this may be for the purpose of facilitating neighbor cell reselection.

■ sf-HighUAV: an additional mobility control related parameter value used in the high mobility state. As an example, a value from among 0.1, 0.125, 0.25, 0.5, 0.75, and 1 may be signaled. sf-HighUAV may include a smaller value than conventional sf-High, and this may be for the purpose of facilitating neighbor cell reselection.

- t-ReselectionEUTRA-SFUAV (per EUTRA frequency or common for all EUTRA frequencies): a SpeedStateScale-Factors parameter

■ sf-MediumUAV: an additional mobility control related parameter value used in the medium mobility state. As an example, a value from among 0.1, 0.125, 0.25, 0.5, 0.75, and 1 may be signaled. sf-MediumUAV may include a smaller value than conventional sf-Medium, and this may be for the purpose of facilitating neighbor cell reselection.
■ sf-HighUAV: an additional mobility control related parameter value used in the high mobility state. As an example, a value from among 0.25, 0.5, 0.75, and 1 may be signaled. As an example, a value from among 0.1, 0.125, 0.25, 0.5, 0.75, and 1 may be signaled. sf-HighUAV may include a smaller value than conventional sf-High, and this may be for the purpose of facilitating neighbor cell reselection.

- A value indicating cell reselection is possible how many seconds after camping on the serving cell

■ Conventionally, neighbor cell reselection is possible one second after camping on the current serving cell, but the new value may include a value smaller than one second such that the UE according to the disclosure can reselect a neighbor cell before one second elapses.

In operation 715, the UE 701 in the RRC idle mode or RRC inactive mode may perform a cell selection or cell reselection process. This may follow the above-described embodiment, or at least one of the parameters described above in operation710 may be applied to perform the cell reselection process.

In operation 720, the UE 701 in the RRC idle mode or RRC inactive mode may determine mobility states. In case of acquiring new speed dependent reselection parameters in operation 705 or operation 710, the UE that supports UAV may determine mobility states according to predetermined conditions based on the new speed dependent reselection parameters. For reference, in case that new speed dependent reselection parameters have been configured in operation 705, the UE may apply the new speed dependent reselection parameters included in the RRC connection release message.

- Medium-mobility state criteria

■ If number of cell reselections during time period $T_{CRmax}$ (or $T_{CRmaxUAV}$) is greater than or equal to $N_{CR\_M}$ (or $N_{CR\_MUAV}$) but less than or equal to $N_{CR\_H}$ (or $N_{CR\_HUAV}$)

- High-mobility state criteria

■ If number of cell reselections during time period $T_{CRmaxUAV}$ (or TCRmax) is greater than $N_{CR\_H}$ (or $N_{CR\_HUAV}$)

- Normal mobility state criteria

■ If criteria for either Medium- or High-mobility state is not detected during time period $T_{CRmaxHystUAV}$ or $T_{CRmaxHyst}$, or if number of cell reselections during time period $T_{CRmaxUAV}$ (or $T_{CRmax}$) is less than $N_{CR\_M}$ (or $N_{CR\_MUAV}$)

The UE may perform a cell reselection process by applying a scaling rule according to the determined mobility state. Specifically,

- If neither Medium- nor High-mobility state is detected

■ No scaling is applied

- If High-mobility state is detected

■ Add the sf-HighUAV (or sf-High) of "Speed dependent ScalingFactor for Qhyst" to Qhyst if broadcasted in system information
■ For NR cells, multiply TreselectionNRUAV (or TreselectionNR) by the sf-HighUAV (or sf-High) of "Speed dependent ScalingFactor for TreselectionNRUAV (or TreselectionNR)" if broadcasted in system information

■ For EUTRA cells, multiply TreselectionEUTRAUAV (or TreselectionEUTRA) by the sf-HighUAV (or sf-High) of "Speed dependent ScalingFactor for TreselectionEUTRAUAV (or TreselectionEUTRA)" if broadcasted in system information

- If Medium-mobility state is detected

■ Add the sf-MediumUAV (or sf-Medium) of "Speed dependent ScalingFactor for Qhyst" to Qhyst if broadcasted in system information

■ For NR cells, multiply TreselectionNRUAV (or TreselectionNR) by the sf-Medium UAV (or sf-Medium) of "Speed dependent ScalingFactor for TreselectionNRUAV (or TreselectionNR)" if broadcasted in system information

■ For EUTRA cells, multiply TreselectionEUTRAUAV (or TreselectionETURA) by the sf-MediumUAV (sf-Medium) of "Speed dependent ScalingFactor for TreselectionEUTRAUAV (or TreselectionEUTRA)" if broadcasted in system information

For reference, in case scaling is applied to any TreselectionRAT parameter, the UE shall round up the result after all scalings to the nearest second.

For reference, a UE that support UAV or a UE that does not support UAV may determine mobility states, based on the above-described embodiment, in case of failing to acquire new speed dependent reselection parameters in operation 705 or operation 710.

In operation 720, the UE may perform the cell reselection process specified in operation 715 by reflecting the scaling result according to the determined mobility state.

In operation 725, the UE 701 in the RRC idle mode or RRC inactive mode may initiate an RRC connection establishment procedure or an RRC connection resume procedure in order to establish an RRC connection to the base station 702. That is, in operation 725, the UE may transmit an RRC connection request message (RRCSetupRequest) or an RRC connection resumption request message (RRCResumeRequest or RRCResumeRequest1) to the base station. In operation 730, the base station may transmit an RRC connection establishment message (RRCSetup) or an RRC connection resumption message (RRCResume) to the UE in response to the RRC connection request message or the RRC connection resumption request message. Upon receiving the RRC connection establishment message or the RRC connection resumption message, the UE may transition (731) to the RRC connected mode (RRC_CONNECTED). The UE in the RRC connected mode may transmit (735) an RRC connection establishment completion message (RRCSetup-Complete) or an RRC connection resumption completion message (RRCResumeComplete) to the base station. The RRC connection establishment completion message or the RRC connection resumption completion message may contain the UE's new mobility state (mobility state for UAV) or conventional mobility state. Specifically, the RRC connection establishment completion message or the RRC connection resumption completion message may include the *mobilityStateUAV* or mobilityState and set it to the mobility state (as specified in TS 38.304) of the UE just prior to entering RRC_CONNECTED state.

The disclosure is characterized in that, in the case of a UAV UE, and in case that new speed dependent reselection parameters are broadcast or configured, cell reselection may be performed by determining the mobility state by applying the new speed dependent reselection parameters. The disclosure is characterized in that, even in the case of a UAV UE, and in case that there are no new speed dependent reselection parameters, cell reselection may be performed by determining the mobility state according to the above-described embodiment.

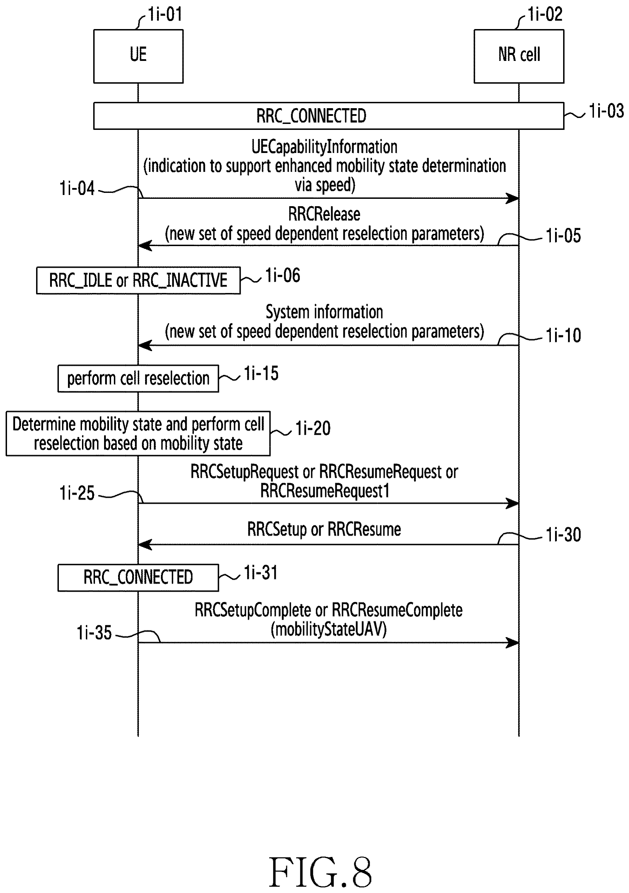

FIG. 8 is a flowchart of processes in which a UE reports mobility states to an NR base station in a next-generation mobile communication system according to an embodiment of the disclosure.

The UE in the next-generation mobile communication system according to this embodiment may refer to a UE capable of receiving an uncrewed aerial vehicle (UAV) service. Alternatively, the same may refer to a UE capable of flying or moving at a high speed, or a UE capable of applying a newly defined mobility state determination method. A UE capable of receiving a UAV service may satisfy the following requirements specified in 3GPP TS 22.125. In particular, the UE may receive a UAV service while moving at a high speed. A UE moving at a high speed may enter a medium mobility state or a high mobility state much later, despite the high speed, in case of following the conventional mobility state determination. Therefore, a mobility state determination method for a UE will be proposed in this embodiment.

[Table 7]

| Control Mode | Function | Typical Message Interval | Max UAV ground speed | Typical message Size (note 1) | End to end Latency | Reliability (note 2) | Positive ACK (note 8) |
|---|---|---|---|---|---|---|---|
| Steer to way-points (note 3) | UAV termi-nated C2 mes-sage | >=1 s | 300 km/h | 100 byte | 1 s | 99.9% | Required |
| | UAV originated C2 message (note 4) | 1 s | | 84-140 byte | 1 s | 99.9% | Not Required |
| Direct stick steering (note 5) | UAV termi-nated C2 mes-sage | 40 ms (note 6) | 60km/h | 24 byte | 40 ms | 99.9% | Required |
| | UAV originated C2 message (note 7) | 40 ms | | 84-140 byte | 40 ms | 99.9% | Not Required |
| Automatic flight on UTM (note 10) | UAV termi-nated C2 mes-sage | 1 s | 300 km/h | <10 kbyte 1500 byte | 5 s (note 9) | 99.9% | Required |
| | UAV originated C2 message | 1 s (note 9) | | | 5 s (note 9) | 99.9% | Required |
| Approaching Autonomous Navigation In-frastructure | UAV termi-nated C2 mes-sage | 500 ms | 50 km/h | 4 kbyte | 10 ms | 99% | Required |
| | UAVoriginated C2 message | 500 ms | | 4 kbyte | 140 ms | 99.99% | Required |

NOTE 1: Message size is at the application layer and excludes any headers and security related load. The numbers shown are typical as message size depends on the commands sent and is implementation specific.

NOTE 2: Message reliability is defined as the probability of successful transmission within the required latency at the application layer while under network coverage.

NOTE 3: Video is neither required nor expected to be used for steering in this mode.

NOTE 4: It may be possible to transmit this message on an event driven basis (e.g. approaching a geo fence). A status message may, but is not required to, be sent as a response to a control message.

NOTE 5: A video feedback is required for this mode. The KPIs for video are defined in table 7.2-2.

NOTE 6: UAVs on-board controllers typically update at either 50Hz (20ms) or 25Hz (40ms).

NOTE 7: A status message may, but is not required to, be sent as a response to a control message A 1iz slow mode also exists.

NOTE 8: Positive ACK is sent to the originator of the message (i.e. UAV controller and / or the UTM). The 5G system makes no assumption whether an appropriate ACK is sent by the application layer.

NOTE 9: At the application layer, the C2 communication between a UAV and UTM can be allowed to experience much longer traffic interruptions, e.g. timeouts of 30 s on the uplink and 300 s on the downlink.

NOTE 10: This only represents periodic message exchange during a nominal mission in steady state. Itdoes not represent unusual or aperiodic events such as conveying dynamic restrictions or a flight plan to the UAV on the downlink.

Referring to FIG. 8, the UE 801 may establish an RRC connection to the NR cell 802 and may thus be in an RRC connected mode (RRC_CONNECTED) (803).

In operation 804, the UE 801 in the RRC connected mode may transmit a UE capability information message (UECapabilityInformation) to the NR cell 802. The UE capability information message (UECapabilityInformation) may include at least one of the following:

- An indicator that may determine the enhanced mobility state

- An indicator indicating a UAV UE
- An indicator indicating that new speed dependent reselection parameters included in the system information or RRC connection release message may be applied
- An indicator indicating that the enhanced mobility state may be determined according to the speed

In operation 805, the NR cell 802 may transmit an RRC connection release message (RRCRelease) to the UE 801 in the RRC connected mode. The RRC connection release message (RRCRelease) may include new speed dependent reselection parameters. The new speed dependent reselection parameters may refer to at least one of the following:

- t-ReselectionRATUAV: this specifies the cell reselection timer value. With regard to each target NR frequency or each RAT, a specific cell reselection timer value may be defined. Conventional t-ReselectionRAT may be configured to have a value from among 0, 1, .., 7, but t-ReselectionRATUAV may be configured to have a smaller value than conventional t-ReselectionRAT or one of smaller but various values. As an example, the same may be configured to have a value from among 0, 0.1, 0.2, 0.3, 0.4, .., 1.

    ■ The timer value regarding NR refers to t-ReselectionNRUAV, and may be configured with regard to each frequency.
    ■ The timer value regarding E-UTRA refers to t-ReselectionEUTRAUAV, and may be configured with regard to each frequency or to be commonly applied to E-UTRAN frequencies.
    ■ t-ReselectionRATUAV may be configured to have a smaller value than conventional t-ReselectionRAT or one of smaller but various values. The UE of the disclosure may thus perform cell reselection faster.

- t-EvaluationUAV: the duration of evaluating criteria to enter mobility states. As an example, a value from among 5 seconds, 10 seconds, 20 seconds, 30 seconds, 60 seconds, 120 seconds, 180 seconds, and 240 seconds may be signaled. t-EvaluationUAV may include a smaller value than conventional t-Evaluation. This is for the purpose of ensuring that the UE according to the disclosure can enter the medium mobility state or high mobility state more quickly.

    ■ t-EvaluationUAV may refer to $T_{CRmaxUAv}$. This specifies the duration for evaluating allowed amount of cell reselection(s)

- t-HystNormalUAV: the additional duration for evaluating criteria to enter normal mobility state. As an example, one from among 5 seconds, 10 seconds, 30 seconds, 60 seconds, 120 seconds, 180 seconds, 240 seconds, and 360 seconds may be signaled. t-EvaluationUAV may include a smaller or larger value than conventional t-HystNormal. The small value may be included for the purpose of quickly transitioning to the normal mobility state. The larger value may be included for the purpose of slowly transitioning to the normal mobility state.

    ■ t-HystNormalUAV may refer to $T_{CRmaxHystUAV}$. This specifies the additional time period before the UE may enter Normal-mobility state

- n-CellChangeMediumUAV: the number of cell changes to enter medium mobility state. As an example, an integer value from among 1 (or 0) to 16 may be signaled. n-CellChangeMediumUAV may include a smaller value than conventional n-CellChangeMedium. This is for the purpose of ensuring that the UE according to the disclosure can enter the medium mobility state more quickly.

    ■ n-CellChangeMediumUAV may refer to $N_{CR\_MUA}$. This specifies the maximum number of cell reselections to enter Medium-mobility state.

- n-CellChangeHighUAV: the number of cell changes to enter high mobility state. As an example, an integer value from among 1 (or 0) to 16 may be signaled, and a larger value than n-CellChangeMediumUAV may be signaled. n-CellChangeMediumUAV may include a smaller value than conventional n-CellChangeHigh. This is for the purpose of ensuring that the UE according to the disclosure can enter the high mobility state more quickly.

    ■ n-CellChangeHigh may refer to $N_{CR\_H}$. This specifies the maximum number of cell reselections to enter High-mobility state.

- q-HystSFUAV: a speed-based ScalingFator parameter

■ sf-MediumUAV: an additional hysteresis parameter value used in the medium mobility state. As an example, a value from among -10dB, -8dB, -6dB, -4dB, -2dB, and 0dB may be signaled. sf-MediumUAV may include a smaller value than conventional sf-Medium, and this may be for the purpose of facilitating neighbor cell reselection.

■ sf-HighUAV: an additional hysteresis parameter value used in the high mobility state. As an example, a value from among -10dB, -8dB, -6dB, -4dB, -2dB, and 0dB may be signaled. sf-HighUAV may include a smaller value than conventional sf-High, and this may be for the purpose of facilitating neighbor cell reselection.

- t-Reselection-SFUAV (per NR frequency): a SpeedStateScaleFactors parameter

■ sf-MediumUAV: an additional mobility control related parameter value used in the medium mobility state. As an example, a value from among 0.1, 0.125, 0.25, 0.5, 0.75, and 1 may be signaled. sf-MediumUAV may include a smaller value than conventional sf-Medium, and this may be for the purpose of facilitating neighbor cell reselection.

■ sf-HighUAV: an additional mobility control related parameter value used in the high mobility state. As an example, a value from among 0.1, 0.125, 0.25, 0.5, 0.75, and 1 may be signaled. sf-HighUAV may include a smaller value than conventional sf-High, and this may be for the purpose of facilitating neighbor cell reselection.

- t-ReselectionEUTRA-SFUAV (per EUTRA frequency or common for all EUTRA frequencies): a SpeedStateScale-Factors parameter

■ sf-MediumUAV: an additional mobility control related parameter value used in the medium mobility state. As an example, a value from among 0.1, 0.125, 0.25, 0.5, 0.75, and 1 may be signaled. sf-MediumUAV may include a smaller value than conventional sf-Medium, and this may be for the purpose of facilitating neighbor cell reselection.

■ sf-HighUAV: an additional mobility control related parameter value used in the high mobility state. As an example, a value from among 0.25, 0.5, 0.75, and 1 may be signaled. As an example, a value from among 0.1, 0.125, 0.25, 0.5, 0.75, and 1 may be signaled. sf-HighUAV may include a smaller value than conventional sf-High, and this may be for the purpose of facilitating neighbor cell reselection.

- A value indicating cell reselection is possible how many seconds after camping on the serving cell

■ Conventionally, neighbor cell reselection is possible one second after camping on the current serving cell, but the new value may include a value smaller than one second such that the UE according to the disclosure can reselect a neighbor cell before one second elapses.

- A new timer value

■ A new timer value indicating the time to apply the new speed dependent reselection parameters described above. In case that a new timer value is included, the UE according to the disclosure may drive a new timer with the new timer value.

- A speed threshold value

■ The UE may apply new speed dependent reselection parameters in case that the speed is larger than the speed threshold value. Otherwise, conventional speed dependent reselection parameters may be applied.

In operation 806, upon receiving the RRC connection release message, the UE 801 may transition to the RRC idle mode (RRC_IDLE) or RRC inactive mode (RRC_INACTIVE).

In operation 810, the UE 801 in the RRC idle mode or RRC inactive mode may receive or acquire system information from the base station 802. The system information may include parameters to be used by the UE to perform a cell selection or cell reselection process. This may follow the above-described embodiment. Additionally, in the system information, new parameters (speedStateReselectionParsUAV) for determining the UE's mobility state may be broadcast.

- t-ReselectionRATUAV: this specifies the cell reselection timer value. With regard to each target NR frequency or each RAT, a specific cell reselection timer value may be defined. Conventional t-ReselectionRAT may be configured to have a value from among 0, 1, .., 7, but t-ReselectionRATUAV may be configured to have a smaller value than conventional t-ReselectionRAT or one of smaller but various values. As an example, the same may be configured to have a value from among 0, 0.1, 0.2, 0.3, 0.4, .., 1.

■ The timer value regarding NR refers to t-ReselectionNRUAV, and may be configured with regard to each frequency.

■ The timer value regarding E-UTRA refers to t-ReselectionEUTRAUAV, and may be configured with regard to each frequency or to be commonly applied to E-UTRAN frequencies.

t-ReselectionRATUAV may be configured to have a smaller value than conventional t-ReselectionRAT or one of smaller but various values. The UE of the disclosure may thus perform cell reselection faster.

■ t-EvaluationUAV: the duration of evaluating criteria to enter mobility states. As an example, a value from among 5 seconds, 10 seconds, 20 seconds, 30 seconds, 60 seconds, 120 seconds, 180 seconds, and 240 seconds may be signaled. t-EvaluationUAV may include a smaller value than conventional t-Evaluation. This is for the purpose of ensuring that the UE according to the disclosure can enter the medium mobility state or high mobility state more quickly.

■ t-EvaluationUAV may refer to $T_{CRmaxUAv}$. This specifies the duration for evaluating allowed amount of cell reselection(s)

- t-HystNormalUAV: the additional duration for evaluating criteria to enter normal mobility state. As an example, one from among 5 seconds, 10 seconds, 30 seconds, 60 seconds, 120 seconds, 180 seconds, 240 seconds, and 360 seconds may be signaled. t-EvaluationUAV may include a smaller or larger value than conventional t-HystNormal. The small value may be included for the purpose of quickly transitioning to the normal mobility state. The larger value may be included for the purpose of slowly transitioning to the normal mobility state.

■ t-HystNormalUAV may refer to $T_{CRmaxHystUAV}$. This specifies the additional time period before the UE may enter Normal-mobility state

- n-CellChangeMediumUAV: the number of cell changes to enter medium mobility state. As an example, an integer value from among 1 (or 0) to 16 may be signaled. n-CellChangeMediumUAV may include a smaller value than conventional n-CellChangeMedium. This is for the purpose of ensuring that the UE according to the disclosure can enter the medium mobility state more quickly.

■ n-CellChangeMediumUAV may refer to $N_{CR\_MUA}$. This specifies the maximum number of cell reselections to enter Medium-mobility state.

- n-CellChangeHighUAV: the number of cell changes to enter high mobility state. As an example, an integer value from among 1 (or 0) to 16 may be signaled, and a larger value than n-CellChangeMediumUAV may be signaled. n-CellChangeMediumUAV may include a smaller value than conventional n-CellChangeHigh. This is for the purpose of ensuring that the UE according to the disclosure can enter the high mobility state more quickly.

■ n-CellChangeHigh may refer to $N_{CR\_H}$. This specifies the maximum number of cell reselections to enter High-mobility state.

- q-HystSFUAV: a speed-based ScalingFator parameter

■ sf-MediumUAV: an additional hysteresis parameter value used in the medium mobility state. As an example, a value from among -10dB, -8dB, -6dB, -4dB, -2dB, and 0dB may be signaled. sf-MediumUAV may include a smaller value than conventional sf-Medium, and this may be for the purpose of facilitating neighbor cell reselection.

■ sf-HighUAV: an additional hysteresis parameter value used in the high mobility state. As an example, a value from among -10dB, -8dB, -6dB, -4dB, -2dB, and 0dB may be signaled. sf-HighUAV may include a smaller value than conventional sf-High, and this may be for the purpose of facilitating neighbor cell reselection.

- t-Reselection-SFUAV (per NR frequency): a SpeedStateScaleFactors parameter

■ sf-MediumUAV: an additional mobility control related parameter value used in the medium mobility state. As an example, a value from among 0.1, 0.125, 0.25, 0.5, 0.75, and 1 may be signaled. sf-MediumUAV may include a smaller value than conventional sf-Medium, and this may be for the purpose of facilitating neighbor cell reselection.

■ sf-HighUAV: an additional mobility control related parameter value used in the high mobility state. As an example, a value from among 0.1, 0.125, 0.25, 0.5, 0.75, and 1 may be signaled. sf-HighUAV may include a smaller value than conventional sf-High, and this may be for the purpose of facilitating neighbor cell reselection.

- t-ReselectionEUTRA-SFUAV (per EUTRA frequency or common for all EUTRA frequencies): a SpeedStateScale-Factors parameter

■ sf-MediumUAV: an additional mobility control related parameter value used in the medium mobility state. As an example, a value from among 0.1, 0.125, 0.25, 0.5, 0.75, and 1 may be signaled. t-ReselectionEUTRA-SFUAV may include a smaller value than conventional sf-Medium, and this may be for the purpose of facilitating neighbor cell reselection.
■ sf-HighUAV: an additional mobility control related parameter value used in the high mobility state. As an example, a value from among 0.25, 0.5, 0.75, and 1 may be signaled. As an example, a value from among 0.1, 0.125, 0.25, 0.5, 0.75, and 1 may be signaled. sf-HighUAV may include a smaller value than conventional sf-High, and this may be for the purpose of facilitating neighbor cell reselection.

- A value indicating cell reselection is possible how many seconds after camping on the serving cell

■ Conventionally, neighbor cell reselection is possible one second after camping on the current serving cell, but the new value may include a value smaller than one second such that the UE according to the disclosure can reselect a neighbor cell before one second elapses.

- A speed threshold value

■ According to the speed threshold value, new speed dependent reselection parameters may be applied in case that the UE's speed is higher than the speed threshold value, or is higher than or equal to the speed threshold value. Otherwise, conventional speed dependent reselection parameters may be applied.

In operation 815, the UE 801 in the RRC idle mode or RRC inactive mode may perform a cell selection or cell reselection process. This may follow the above-described embodiment, or at least one of the parameters described above in operation 810 may be applied to perform the cell reselection process.

In operation 820, the UE 801 in the RRC idle mode or RRC inactive mode may determine mobility states. In case of acquiring new speed dependent reselection parameters in operation 805 or operation 810, the UE that supports UAV may determine mobility states by means of predetermined conditions based on the new speed dependent reselection parameters according to a speed threshold value (which may be acquired in operation 805 or 810 or may be directly determined inside the UE). For reference, in case that new speed dependent reselection parameters have been configured in operation 805, the UE may apply the new speed dependent reselection parameters included in the RRC connection release message.

- Medium-mobility state criteria

■ If number of cell reselections during time period $T_{CRmax}$ (or $T_{CRmaxUAV}$) is greater than or equal to $N_{CR\_M}$ (or $N_{CR\_MUAV}$) but less than or equal to $N_{CR\_H}$ (or $N_{CR\_HUAV}$)

- High-mobility state criteria

■ If number of cell reselections during time period $T_{CRmaxUAV}$ (or $TCRmax$) is greater than $N_{CR\_H}$ (or $N_{CR\_HUAV}$)

- Normal mobility state criteria

■ If criteria for either Medium- or High-mobility state is not detected during time period $T_{CRmaxHystUAV}$ or $T_{CRmaxHyst}$, or if number of cell reselections during time period $T_{CRmaxUAV}$ (or $T_{CRmax}$) is less than $N_{CR\_M}$ (or $N_{CR\_MUAV}$)

The UE may perform a cell reselection process by applying a scaling rule according to the determined mobility state. Specifically,

- If neither Medium- nor High-mobility state is detected

■ No scaling is applied

- If High-mobility state is detected

■ Add the sf-HighUAV (or sf-High) of "Speed dependent ScalingFactor for Qhyst" to Qhyst if broadcasted in system information
■ For NR cells, multiply TreselectionNRUAV (or TreselectionNR) by the sf-HighUAV (or sf-High) of "Speed dependent ScalingFactor for TreselectionNRUAV (or TreselectionNR)" if broadcasted in system information
■ For EUTRA cells, multiply TreselectionEUTRAUAV (or TreselectionEUTRA) by the sf-HighUAV (or sf-High) of "Speed dependent ScalingFactor for TreselectionEUTRAUAV (or TreselectionEUTRA)" if broadcasted in system information

- If Medium-mobility state is detected

■ Add the sf-MediumUAV (or sf-Medium) of "Speed dependent ScalingFactor for Qhyst" to Qhyst if broadcasted in system information
■ For NR cells, multiply TreselectionNRUAV (or TreselectionNR) by the sf-Medium UAV (or sf-Medium) of "Speed dependent ScalingFactor for TreselectionNRUAV (or TreselectionNR)" if broadcasted in system information
■ For EUTRA cells, multiply TreselectionEUTRAUAV (or TreselectionETURA) by the sf-MediumUAV (sf-Medium) of "Speed dependent ScalingFactor for TreselectionEUTRAUAV (or TreselectionEUTRA)" if broadcasted in system information

For reference, in case scaling is applied to any TreselectionRAT parameter, the UE shall round up the result after all scalings to the nearest second.

For reference, a UE that support UAV or a UE that does not support UAV may determine mobility states, based on the above-described embodiment, in case of failing to acquire new speed dependent reselection parameters in operation 805 or operation 810. Alternatively, mobility states may be determined by speed dependent reselection parameters according to the above-described embodiment also in case that the speed is lower than the threshold or the speed is equal to or lower than the threshold.

In operation 820, the UE may perform the cell reselection process specified in operation 815 by reflecting the scaling result according to the determined mobility state.

In operation 825, the UE 801 in the RRC idle mode or RRC inactive mode may initiate an RRC connection establishment procedure or an RRC connection resume procedure in order to establish an RRC connection to the base station 802. That is, in operation 825, the UE may transmit an RRC connection request message (RRCSetupRequest) or an RRC connection resumption request message (RRCResumeRequest or RRCResumeRequest1) to the base station. In operation 830, the base station may transmit an RRC connection establishment message (RRCSetup) or an RRC connection resumption message (RRCResume) to the UE in response to the RRC connection request message or the RRC connection resumption request message. Upon receiving the RRC connection establishment message or the RRC connection resumption message, the UE may transition (831) to the RRC connected mode (RRC_CONNECTED). The UE in the RRC connected mode may transmit (835) an RRC connection establishment completion message (RRCSetupComplete) or an RRC connection resumption completion message (RRCResumeComplete) to the base station. The RRC connection establishment completion message or the RRC connection resumption completion message may contain the UE's new mobility state (mobility state for UAV) or conventional mobility state. Specifically, the RRC connection establishment completion message or the RRC connection resumption completion message may include the *mobilitystateUAV* or mobilityState and set it to the mobility state (as specified in TS 38.304) of the UE just prior to entering RRC_CONNECTED state.

The disclosure is characterized in that, in case that the UE's speed is larger than a speed threshold value, new speed dependent reselection parameters may be applied to determine the mobility state or to perform cell reselection. The disclosure is characterized in that, even in case that the UE's speed is larger than a speed threshold value, the mobility state may be determined or cell reselection may be performed according to the above-described embodiment in case that there are no new speed dependent reselection parameters.

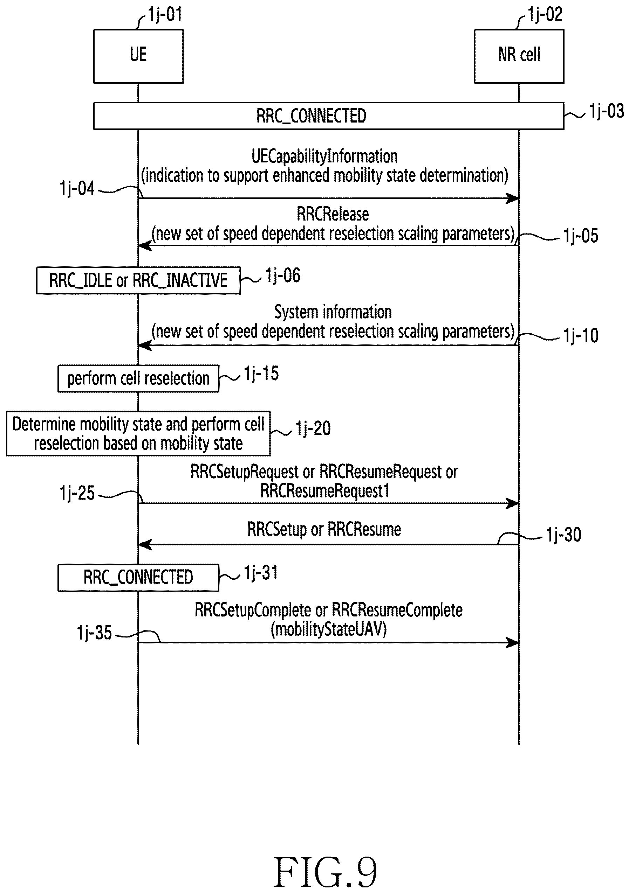

FIG. 9 is a flowchart of processes in which a UE reports mobility states to an NR base station in a next-generation mobile communication system according to an embodiment of the disclosure.

The UE in the next-generation mobile communication system according to this embodiment may refer to a UE capable of receiving an uncrewed aerial vehicle (UAV) service. Alternatively, the same may refer to a UE capable of flying or moving at a high speed, or a UE capable of applying a newly defined mobility state determination method. A UE capable of receiving a UAV service may satisfy the following requirements specified in 3GPP TS 22.125. In particular, the UE may receive a UAV service while moving at a high speed. A UE moving at a high speed may enter a medium mobility state or a high mobility state much later, despite the high speed, in case of following the conventional mobility state determination. Therefore, a mobility state determination method for a UE will be proposed in this embodiment.

[Table 8]

| Control Mode | Function | Typical Message Interval | Max UAV ground speed | Typical message Size (note 1) | End to end Latency | Reliability (note 2) | Positive ACK (note 8) |
|---|---|---|---|---|---|---|---|
| Steer to way-points (note 3) | UAV termi-nated C2 mes-sage | >=1 s | 300 km/h | 100 byte | 1 s | 99.9% | Required |
| | UAV originated C2 message (note 4) | 1 s | | 84-140 byte | 1 s | 99.9% | Not Required |
| Direct stick steering (note 5) | UAV termi-nated C2 mes-sage | 40 ms (note 6) | 60km/h | 24 byte | 40 ms | 99.9% | Required |
| | UAV originated C2 message (note 7) | 40 ms | | 84-140 byte | 40 ms | 99.9% | Not Required |
| Automatic flight on UTM (note 10) | UAV termi-nated C2 mes-sage | 1 s | 300 km/h | <10 kbyte 1500 byte | 5 s (note 9) | 99.9% | Required |
| | UAV originated C2 message | 1 s (note 9) | | | 5 s (note 9) | 99.9% | Required |
| Approaching Autonomous Navigation In-frastructure | UAV termi-nated C2 mes-sage | 500 ms | 50 km/h | 4 kbyte | 10 ms | 99% | Required |
| | UAVoriginated C2 message | 500 ms | | 4 kbyte | 140 ms | 99.99% | Required |
| NOTE 1: Message size is at the application layer and excludes any headers and security related load. The numbers shown are typical as message size depends on the commands sent and is implementation specific. NOTE 2: Message reliability is defined as the probability of successful transmission within the required latency at the application layer while under network coverage. NOTE 3: Video is neither required nor expected to be used for steering in this mode. NOTE 4: It may be possible to transmit this message on an event driven basis (e.g. approaching a geo fence). A status message may, but is not required to, be sent as a response to a control message. NOTE 5: A video feedback is required for this mode. The KPIs for video are defined in table 7.2-2. NOTE 6: UAVs on-board controllers typically update at either 50Hz (20ms) or 25Hz (40ms). NOTE 7: A status message may, but is not required to, be sent as a response to a control message A 1jz slow mode also exists. NOTE 8: Positive ACK is sent to the originator of the message (i.e. UAV controller and / or the UTM). The 5G system makes no assumption whether an appropriate ACK is sent by the application layer. NOTE 9: At the application layer, the C2 communication between a UAV and UTM can be allowed to experience much longer traffic interruptions, e.g. timeouts of 30 s on the uplink and 300 s on the downlink. NOTE 10: This only represents periodic message exchange during a nominal mission in steady state. Itdoes not represent unusual or aperiodic events such as conveying dynamic restrictions or a flight plan to the UAV on the downlink. | | | | | | | |

Referring to FIG. 9, the UE 901 may establish an RRC connection to the NR cell 902 and may thus be in an RRC connected mode (RRC_CONNECTED) (903).

In operation 904, the UE 901 in the RRC connected mode may transmit a UE capability information message (UECapabilityInformation) to the NR cell 902. The UE capability information message (UECapabilityInformation) may include at least one of the following:

- An indicator that may determine the enhanced mobility state
- An indicator indicating a UAV UE
- An indicator indicating that new speed dependent reselection parameters included in the system information or RRC connection release message may be applied

In operation 905, the NR cell 902 may transmit an RRC connection release message (RRCRelease) to the UE 901 in the RRC connected mode. The RRC connection release message (RRCRelease) may include new speed dependent reselection scaling parameters. The new speed dependent reselection scaling parameters may refer to at least one of the following:

- $\kappa$ for t-ReselectionRAT: $\kappa$ for t-ReselectionRAT refers to a scaling factor to conventional t-ReselectionRAT. This parameter is to be multiplied or added to the conventional parameter such that the UE performs cell reselection faster.
- a for t-Evaluation: $\alpha$ for t-Evaluation refers to a scaling factor to conventional t-Evaluation. $\alpha$ for t-Evaluation is to be multiplied or added to the conventional parameter such that the UE performs cell reselection faster.
- $\beta$ for t-HystNormal: $\beta$ for t-HystNormal refers to a scaling factor to conventional t-HystNormal. $\beta$ for t-HystNormal is to be multiplied or added to the conventional parameter such that the UE transition to the normal mobility state more quickly or more slowly.
- $\gamma$ for n-CellChangeMedium: $\gamma$ for n-CellChangeMedium refers to a scaling factor to conventional n-CellChange-Medium. $\gamma$ for n-CellChangeMedium is to be multiplied or added to the conventional parameter such that the UE enters the medium mobility state faster.
- $\delta$ for n-CellChangeHigh: $\delta$ for n-CellChangeHigh refers to a scaling factor to conventional n-CellChangeHigh. $\delta$ for n-CellChangeHigh is to be multiplied or added to the conventional parameter such that the UE enters the high mobility state faster.
- q-HystSFUAV: a speed-based ScalingFator parameter

  - ■ $\theta$ for sf-Medium: $\theta$ for sf-Medium refers to a scaling factor to conventional parameter sf-Medium. $\theta$ for sf-Medium is to be multiplied or added to the conventional parameter such that the UE more easily reselects a neighbor cell faster.
  - ■ $\mu$ for sf-High: $\mu$ for sf-High refers to a scaling factor to conventional parameter sf-High. $\mu$ for sf-High is to be multiplied or added to the conventional parameter such that the UE more easily reselects a neighbor cell faster.

- t-Reselection-SF (per NR frequency): a SpeedStateScaleFactors parameter

  - ■ $\rho$ for sf-Medium: $\rho$ for sf-Medium refers to a scaling factor to conventional parameter sf-Medium. $\rho$ for sf-Medium is to be multiplied or added to the conventional parameter such that the UE more easily reselects a neighbor cell faster.
  - ■ $\varphi$ for sf-High: $\varphi$ for sf-High refers to a scaling factor to conventional parameter sf-High. $\varphi$ for sf-High is to be multiplied or added to the conventional parameter such that the UE more easily reselects a neighbor cell faster.

- t-ReselectionEUTRA-SF (per EUTRA frequency or common for all EUTRA frequencies): a SpeedStateScaleFactors parameter

  - ■ $\omega$ for sf-Medium: $\omega$ for sf-Medium refers to a scaling factor to conventional parameter sf-Medium. $\omega$ for sf-Medium is to be multiplied or added to the conventional parameter such that the UE more easily reselects a neighbor cell faster.
  - ■ $\tau$ for sf-High: $\tau$ for sf-High refers to a scaling factor to conventional parameter sf-High. $\tau$ for sf-High is to be multiplied or added to the conventional parameter such that the UE more easily reselects a neighbor cell faster.

- A value or scaling factor indicating cell reselection is possible how many seconds after camping on the serving cell

  - ■ Conventionally, neighbor cell reselection is possible one second after camping on the current serving cell, but the new value may be used such that, by multiplying the scaling factor by a value smaller than one second or by one second such that the UE reselects a neighbor cell before one second elapses.

- A new timer value

■ A new timer value indicating the time to apply the new speed dependent reselection parameters described above. In case that a new timer value is included, the UE according to the disclosure may drive a new timer with the new timer value.

- A speed threshold value

■ The UE may apply new speed dependent reselection parameters in case that the speed is larger than the speed threshold value. Otherwise, conventional speed dependent reselection parameters may be applied.

In operation 906, upon receiving the RRC connection release message, the UE 901 may transition to the RRC idle mode (RRC_IDLE) or RRC inactive mode (RRC_INACTIVE).

In operation 910, the UE 901 in the RRC idle mode or RRC inactive mode may receive or acquire system information from the base station 902. The system information may include parameters to be used by the UE to perform a cell selection or cell reselection process. This may follow the above-described embodiment. Additionally, in the system information, new parameters (speedStateReselectionScalingPars) for determining the UE's mobility state may be broadcast.

- κ for t-ReselectionRAT: - κ for t-ReselectionRAT refers to a scaling factor to conventional parameter t-ReselectionRAT. κ for t-ReselectionRAT is to be multiplied or added to the conventional parameter such that the UE performs cell reselection faster.

■ t-ReselectionRATUAV = t-Reselection + κ or κ t-ReselectionRAT

- α for t-Evaluation: α for t-Evaluation refers to a scaling factor to conventional parameter t-Evaluation. α for t-Evaluation is be multiplied or added to the conventional parameter such that the UE determines the mobility state faster.

■

$$T_{CRmaxUAV} = T_{CRmax} + \ \alpha \ \text{ or } \ \alpha \ T_{CRmax}$$

- β for t-HystNormal: β for t-HystNormal refers to a scaling factor to conventional parameter t-HystNormal. β for t-HystNormal is be multiplied or added to the conventional parameter such that the UE transitions to the normal mobility more quickly or more slowly.

■

$$T_{CRmaxHystUAV} = T_{CRmaxHyst} + \ \beta \ \text{ or } \ \beta \ T_{CRmaxHyst}$$

- γ for n-CellChangeMedium: γ for n-CellChangeMedium refers to a scaling factor to conventional parameter n-CellChangeMedium. γ for n-CellChangeMedium is be multiplied or added to the conventional parameter such that the UE enters the medium mobility state faster.

■

$$N_{CR\_MUAV} = N_{CR\_MUAV} + \ \gamma \ \text{ or } \ \gamma \ N_{CR\_MUAV}$$

δ for n-CellChangeHigh: δ for n-CellChangeHigh refers to a scaling factor to conventional parameter n-CellChangeHigh. δ for n-CellChangeHigh is be multiplied or added to the conventional parameter such that the UE enters the high mobility state faster.

■

$$N_{CR\_HUAV} = N_{CR\_HUAV} + \ \delta \ \text{ or } \ \delta \ N_{CR\_HUAV}$$

- q-HystSFUAV: a speed-based ScalingFator parameter

■ θ for sf-Medium: θ for sf-Medium refers to a scaling factor to conventional parameter sf-Medium. θ for sf-Medium is be multiplied or added to the conventional parameter such that the UE reselects a neighbor cell faster

◆

$$\text{sf-MediumUAV} = \text{sf-Medium} + \theta \text{ or } \theta \text{ sf-Medium}$$

■ $\mu$ for sf-High: $\mu$ for sf-High refers to a scaling factor to conventional parameter sf-High. $\mu$ for sf-High is be multiplied or added to the conventional parameter such that the UE reselects a neighbor cell faster

◆

$$\text{sf-HighUAV} = \text{sf-High} + \mu \text{ or } \mu \text{ sf-High}$$

- t-Reselection-SF (per NR frequency): a SpeedStateScaleFactors parameter

    ■ $\rho$ for sf-Medium: $\rho$ for sf-Medium refers to a scaling factor to conventional parameter sf-Medium. $\rho$ for sf-Medium is be multiplied or added to the conventional parameter such that the UE easily reselects a neighbor cell faster

    ◆

$$\text{sf-MediumUAV} = \text{sf-Medium} + \rho \text{ or } \rho \text{ sf-Medium}$$

    ■ $\varphi$ for sf-High: $\varphi$ for sf-High refers to a scaling factor to conventional parameter sf-High. $\varphi$ for sf-High is be multiplied or added to the conventional parameter such that the UE easily reselects a neighbor cell faster

    ◆

$$\text{sf-HighUAV} = \text{sf-High} + \varphi \text{ or } \varphi\text{sf-High}$$

- t-ReselectionEUTRA-SF (per EUTRA frequency or common for all EUTRA frequencies): a SpeedStateScaleFactors parameter

    ■ $\omega$ for sf-Medium: $\omega$ for sf-Medium refers to a scaling factor to conventional parameter sf-Medium. $\omega$ for sf-Medium is be multiplied or added to the conventional parameter such that the UE easily reselects a neighbor cell faster

    ◆

$$\text{sf-MediumUAV} = \text{sf-Medium} + \omega \text{ or } \omega \text{ sf-Medium}$$

    ■ $\tau$ for sf-High: $\tau$ for sf-High refers to a scaling factor to conventional parameter sf-High. $\tau$ for sf-High is be multiplied or added to the conventional parameter such that the UE easily reselects a neighbor cell faster

    ◆

$$\text{sf-HigjUAV} = \text{sf-High} + \tau \text{ or } \tau \text{ sf-High}$$

- A value or scaling factor indicating cell reselection is possible how many seconds after camping on the serving cell

    ■ Conventionally, neighbor cell reselection is possible one second after camping on the current serving cell, but the new value may be used such that, by multiplying the scaling factor by a value smaller than one second or by one second such that the UE reselects a neighbor cell before one second elapses.

- A speed threshold value

    ■ The UE may apply new speed dependent reselection parameters in case that the speed is larger than the speed threshold value. Otherwise, conventional speed dependent reselection parameters may be applied.

In operation 915, the UE 901 in the RRC idle mode or RRC inactive mode may perform a cell selection or cell reselection process. This may follow the above-described embodiment, or at least one of the parameters described above in operation 910 may be applied to perform the cell reselection process.

In operation 920, the UE 901 in the RRC idle mode or RRC inactive mode may determine mobility states. In case of acquiring new speed dependent reselection parameters in operation 905 or operation 910, the UE that supports UAV may determine mobility states by means of predetermined conditions in consideration of the new speed dependent reselection parameters in addition to conventional new speed dependent reselection parameters. For reference, in case that new speed dependent reselection parameters have been configured in operation 905, the UE may apply the new speed dependent reselection parameters included in the RRC connection release message. Alternatively, in case of acquiring new speed dependent reselection parameters in operation 905 or operation 910, the UE 901 that supports UAV may determine mobility states by means of predetermined conditions based on the new speed dependent reselection parameters according to a speed threshold value (which may be acquired in operation 905 or 910 or may be directly determined inside the UE).

- Medium-mobility state criteria

  ▪ If number of cell reselections during time period $T_{CRmax}$ (or $T_{CRmaxUAV}$) is greater than or equal to $N_{CR\_M}$ (or $N_{CR\_MUAV}$) but less than or equal to $N_{CR\_H}$ (or $N_{CR\_HUAV}$)

- High-mobility state criteria

  ▪ If number of cell reselections during time period $T_{CRmaxUAV}$ (or $TCRmax$) is greater than $N_{CR\_H}$ (or $N_{CR\_HUAV}$)

- Normal mobility state criteria

  ▪ If criteria for either Medium- or High-mobility state is not detected during time period $T_{CRmaxHystUAV}$ or $T_{CRmaxHyst}$, or if number of cell reselections during time period $T_{CRmaxUAV}$ (or $T_{CRmax}$) is less than $N_{CR\_M}$ (or $N_{CR\_MUAV}$)

The UE may perform a cell reselection process by applying a scaling rule according to the determined mobility state. Specifically,

- If neither Medium- nor High-mobility state is detected

  ▪ No scaling is applied

- If High-mobility state is detected

  ▪ Add the sf-HighUAV (or sf-High) of "Speed dependent ScalingFactor for Qhyst" to Qhyst if broadcasted in system information
  ▪ For NR cells, multiply TreselectionNRUAV (or TreselectionNR) by the sf-HighUAV (or sf-High) of "Speed dependent ScalingFactor for TreselectionNRUAV (or TreselectionNR)" if broadcasted in system information
  ▪ For EUTRA cells, multiply TreselectionEUTRAUAV (or TreselectionEUTRA) by the sf-HighUAV (or sf-High) of "Speed dependent ScalingFactor for TreselectionEUTRAUAV (or TreselectionEUTRA)" if broadcasted in system information

- If Medium-mobility state is detected

  ▪ Add the sf-MediumUAV (or sf-Medium) of "Speed dependent ScalingFactor for Qhyst" to Qhyst if broadcasted in system information
  ▪ For NR cells, multiply TreselectionNRUAV (or TreselectionNR) by the sf-Medium UAV (or sf-Medium) of "Speed dependent ScalingFactor for TreselectionNRUAV (or TreselectionNR)" if broadcasted in system information
  ▪ For EUTRA cells, multiply TreselectionEUTRAUAV (or TreselectionETURA) by the sf-MediumUAV (sf-Medium) of "Speed dependent ScalingFactor for TreselectionEUTRAUAV (or TreselectionEUTRA)" if broadcasted in system information

For reference, in case scaling is applied to any TreselectionRAT parameter, the UE shall round up the result after all scalings to the nearest second.

For reference, a UE that support UAV or a UE that does not support UAV may determine mobility states, based on the above-described embodiment, in case of failing to acquire new speed dependent reselection parameters in operation 905 or operation 910. Alternatively, a UE that support UAV or a UE that does not support UAV may determine mobility states by means of speed dependent reselection parameters according to the above-described embodiment also in case that the speed is lower than the threshold or the speed is equal to or lower than the threshold.

In operation 920, the UE may perform the cell reselection process specified in operation 915 by reflecting the scaling result according to the determined mobility state.

In operation 925, the UE 901 in the RRC idle mode or RRC inactive mode may initiate an RRC connection establishment procedure or an RRC connection resume procedure in order to establish an RRC connection to the base station 902. That is, in operation 925, the UE may transmit an RRC connection request message (RRCSetupRequest) or an RRC connection resumption request message (RRCResumeRequest or RRCResumeRequestl) to the base station. In operation 930, the base station may transmit an RRC connection establishment message (RRCSetup) or an RRC connection resumption message (RRCResume) to the UE in response to the RRC connection request message or the RRC connection resumption request message. Upon receiving the RRC connection establishment message or the RRC connection resumption message, the UE may transition (931) to the RRC connected mode (RRC_CONNECTED). The UE in the RRC connected mode may transmit (935) an RRC connection establishment completion message (RRCSetup-Complete) or an RRC connection resumption completion message (RRCResumeComplete) to the base station. The RRC connection establishment completion message or the RRC connection resumption completion message may contain the UE's new mobility state (mobility state for UAV) or conventional mobility state. Specifically, the RRC connection establishment completion message or the RRC connection resumption completion message may include the *mobilityStateUAV* or mobilityState and set it to the mobility state (as specified in TS 38.304) of the UE just prior to entering RRC_CONNECTED state.

The disclosure is characterized in that, in the case of a UAV UE, and in case that new speed dependent reselection parameters are broadcast or configured, cell reselection may be performed by determining the mobility state by applying the new speed dependent reselection parameters. The disclosure is characterized in that, even in the case of a UAV UE, and in case that there are no new speed dependent reselection parameters, cell reselection may be performed by determining the mobility state according to the above-described embodiment. Alternatively, the disclosure is characterized in that, in case that the UE's speed is larger than a speed threshold value, new speed dependent reselection parameters may be applied to determine the mobility state or to perform cell reselection. The disclosure is characterized in that, even in case that the UE's speed is larger than a speed threshold value, the mobility state may be determined or cell reselection may be performed according to the above-described embodiment in case that there are no new speed dependent reselection parameters.

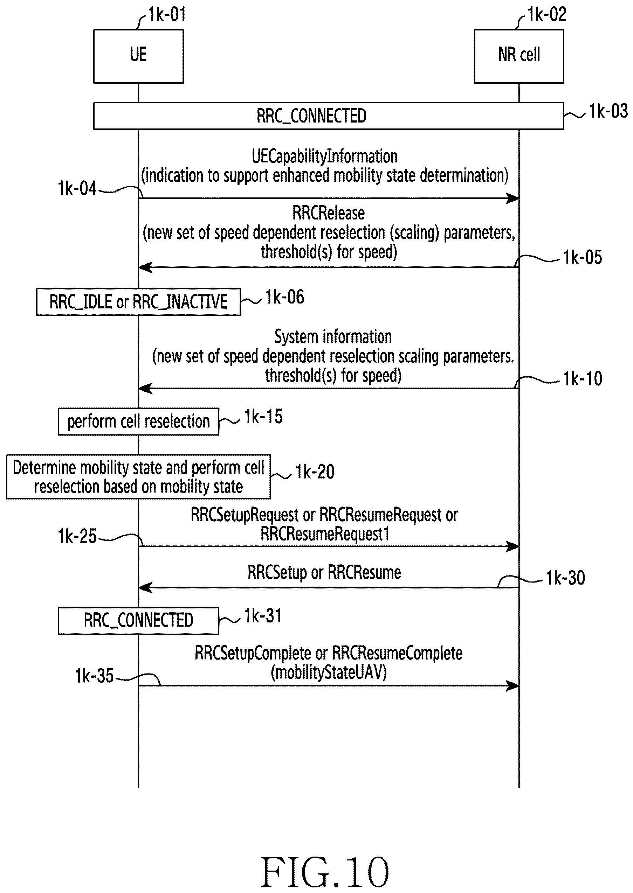

FIG. 10 is a flowchart of processes in which a UE reports mobility states to an NR base station in a next-generation mobile communication system according to an embodiment of the disclosure.

The UE in the next-generation mobile communication system according to this embodiment may refer to a UE capable of receiving an uncrewed aerial vehicle (UAV) service. Alternatively, the same may refer to a UE capable of flying or moving at a high speed, or a UE capable of applying a newly defined mobility state determination method. A UE capable of receiving a UAV service may satisfy the following requirements specified in 3GPP TS 22.125. In particular, the UE may receive a UAV service while moving at a high speed. A UE moving at a high speed may enter a medium mobility state or a high mobility state much later, despite the high speed, in case of following the conventional mobility state determination. Therefore, a mobility state determination method for a UE will be proposed in this embodiment.

[Table 9]

| Control Mode | Function | Typical Message Interval | Max UAV ground speed | Typical message Size (note 1) | End to end Latency | Reliability (note 2) | Positive ACK (note 8) |
|---|---|---|---|---|---|---|---|
| Steer to way-points (note 3) | UAV termi-nated C2 mes-sage | >=1 s | 300 km/h | 100 byte | 1 s | 99.9% | Required |
| | UAV originated C2 message (note 4) | 1 s | | 84-140 byte | 1 s | 99.9% | Not Required |
| Direct stick steering (note 5) | UAV termi-nated C2 mes-sage | 40 ms (note 6) | 60km/h | 24 byte | 40 ms | 99.9% | Required |
| | UAV originated C2 message (note 7) | 40 ms | | 84-140 byte | 40 ms | 99.9% | Not Re-quired |

(continued)

| Control Mode | Function | Typical Message Interval | Max UAV ground speed | Typical message Size (note 1) | End to end Latency | Reliability (note 2) | Positive ACK (note 8) |
|---|---|---|---|---|---|---|---|
| Automatic flight on UTM (note 10) | UAV terminated C2 message | 1 s | 300 km/h | <10 kbyte 1500 byte | 5 s (note 9) | 99.9% | Required |
| | UAV originated C2 message | 1 s (note 9) | | | 5 s (note 9) | 99.9% | Required |
| Approaching Autonomous Navigation Infrastructure | UAV terminated C2 message | 500 ms | 50 km/h | 4 kbyte | 10 ms | 99% | Required |
| | UAVoriginated C2 message | 500 ms | | 4 kbyte | 140 ms | 99.99% | Required |
| NOTE 1: Message size is at the application layer and excludes any headers and security related load. The numbers shown are typical as message size depends on the commands sent and is implementation specific. NOTE 2: Message reliability is defined as the probability of successful transmission within the required latency at the application layer while under network coverage. NOTE 3: Video is neither required nor expected to be used for steering in this mode. NOTE 4: It may be possible to transmit this message on an event driven basis (e.g. approaching a geo fence). A status message may, but is not required to, be sent as a response to a control message. NOTE 5: A video feedback is required for this mode. The KPIs for video are defined in table 7.2-2. NOTE 6: UAVs on-board controllers typically update at either 50Hz (20ms) or 25Hz (40ms). NOTE 7: A status message may, but is not required to, be sent as a response to a control message A 1kz slow mode also exists. NOTE 8: Positive ACK is sent to the originator of the message (i.e. UAV controller and / or the UTM). The 5G system makes no assumption whether an appropriate ACK is sent by the application layer. NOTE 9: At the application layer, the C2 communication between a UAV and UTM can be allowed to experience much longer traffic interruptions, e.g. timeouts of 30 s on the uplink and 300 s on the downlink. NOTE 10: This only represents periodic message exchange during a nominal mission in steady state. Itdoes not represent unusual or aperiodic events such as conveying dynamic restrictions or a flight plan to the UAV on the downlink. | | | | | | | |

Referring to FIG. 10, the UE 1001 may establish an RRC connection to the NR cell 1002 and may thus be in an RRC connected mode (RRC_CONNECTED) (1003).

In operation 1004, the UE 1001 in the RRC connected mode may transmit a UE capability information message (UECapabilityInformation) to the NR cell 1002. The UE capability information message (UECapabilityInformation) may include at least one of the following:

- An indicator that may determine the enhanced mobility state
- An indicator indicating a UAV UE
- An indicator indicating that new speed dependent reselection parameters included in the system information or RRC connection release message may be applied

In operation 1005, the NR cell 1002 may transmit an RRC connection release message (RRCRelease) to the UE 1001 in the RRC connected mode. The RRC connection release message (RRCRelease) may include new speed dependent reselection parameters or speed dependent reselection scaling parameters. Additionally, the RRC connection release message (RRCRelease) may include at least one of the following:

- One or multiple speed threshold values ($s_h$, $s_m$ or s)

    ▪ In case that the UE's speed is larger than the speed threshold value or is larger than or equal to the same, the UE may enter the medium mobility state or high mobility state. Specifically, in case that multiple speed threshold values are configured, and in case that the UE's speed is larger than $s_h$ or is larger than or equal to the same, the UE may enter the high mobility state and may apply speed dependent (scaling) reselection parameters according to at least one of the above-described embodiments. In case that the UE's speed is smaller than $s_h$ or is smaller than or equal to the same, and in case that the UE's speed is larger than $s_m$ or is larger than or equal to the same, the UE may enter the medium mobility state and may apply speed dependent (scaling) reselection parameters according to at least one of the above-described embodiments. In case that the UE's speed is smaller than $s_m$ or is smaller than or equal to the same, the UE may enter the normal mobility state. In case that one speed threshold value is configured, and in case that the UE's speed is larger than s or is larger than or equal to the same, the UE may enter the high mobility state and may apply speed dependent (scaling) reselection parameters according to at least one of the above-described embodiments.

- A new timer value

  ▪ A timer value used to determine whether the UE's speed satisfies conditions during the new timer value. That is, the UE may enter the medium mobility state or high mobility state if conditions are satisfied during the period.

In operation 1006, upon receiving the RRC connection release message, the UE 1001 may transition to the RRC idle mode (RRC_IDLE) or RRC inactive mode (RRC_INACTIVE).

In operation 1010, the UE 1001 in the RRC idle mode or RRC inactive mode may receive or acquire system information from the base station 1002. The system information may include parameters to be used by the UE to perform a cell selection or cell reselection process. This may follow the above-described embodiment. Additionally, in the system information, new parameters (speedStateReselectionScalingPars or speedStateReselectionPars) for determining the UE's mobility state may be broadcast. This may follow the above-described embodiment. Additionally, the system information may include at least one of the following:

- One or multiple speed threshold values ($s_h$, $s_m$, s)

  ▪ In case that the UE's speed is larger than the speed threshold value or is larger than or equal to the same, the UE may enter the medium mobility state or high mobility state. Specifically, in case that multiple speed threshold values are configured, and in case that the UE's speed is larger than $s_h$ or is larger than or equal to the same, the UE may enter the high mobility state and may apply speed dependent (scaling) reselection parameters according to at least one of the above-described embodiments. In case that the UE's speed is smaller than $s_h$ or is smaller than or equal to the same, and in case that the UE's speed is larger than $s_m$ or is larger than or equal to the same, the UE may enter the medium mobility state and may apply speed dependent (scaling) reselection parameters according to at least one of the above-described embodiments. In case that the UE's speed is smaller than $s_m$ or is smaller than or equal to the same, the UE may enter the normal mobility state. In case that one speed threshold value is configured, and in case that the UE's speed is larger than s or is larger than or equal to the same, the UE may enter the high mobility state and may apply speed dependent (scaling) reselection parameters according to at least one of the above-described embodiments.

- A new timer value

  ▪ A timer value used to determine whether the UE's speed satisfies conditions during the new timer value. That is, the UE may enter the medium mobility state or high mobility state if conditions are satisfied during the period.

In operation 1015, the UE 1001 in the RRC idle mode or RRC inactive mode may perform a cell selection or cell reselection process. This may follow the above-described embodiment, or at least one of the parameters described above in operation 1010 may be applied to perform the cell reselection process.

In operation 1020, the UE 1001 in the RRC idle mode or RRC inactive mode may determine mobility states. In case that a UE that supports UAV can apply a speed threshold value configured in operation 1005 or operation 1010, or a UE that supports UAV can independently determine mobility states according to a speed threshold value, mobility states may be determined by the following predetermined criteria:

- Medium-mobility state criteria

  ▪ In case that the UE's speed is smaller than $s_h$ or is smaller than or equal to the same, and in case that the UE's speed is larger than $s_m$ or is larger than or equal to the same
  ▪ Or transition to the medium mobility state when criteria are satisfied during the new timer value period

- High-mobility state criteria

    - In case that the UE's speed is larger than $s_h$ (or s) or is larger than or equal to the same
    - Or transition to the high mobility state when criteria are satisfied during the new timer value period

- Normal mobility state criteria

    - In case that the UE's speed is smaller than $s_m$ or is smaller than or equal to the same
    - Or in case that medium mobility state or high mobility state criteria are not satisfied

The UE may perform a cell reselection process by applying a scaling rule according to the determined mobility state. Specifically,

- If neither Medium- nor High-mobility state is detected

    - No scaling is applied

- If High-mobility state is detected

    - Add the sf-HighUAV (or sf-High) of "Speed dependent ScalingFactor for Qhyst" to Qhyst if broadcasted in system information
    - For NR cells, multiply TreselectionNRUAV (or TreselectionNR) by the sf-HighUAV (or sf-High) of "Speed dependent ScalingFactor for TreselectionNRUAV (or TreselectionNR)" if broadcasted in system information
    - For EUTRA cells, multiply TreselectionEUTRAUAV (or TreselectionEUTRA) by the sf-HighUAV (or sf-High) of "Speed dependent ScalingFactor for TreselectionEUTRAUAV (or TreselectionEUTRA)" if broadcasted in system information

- If Medium-mobility state is detected

    - Add the sf-MediumUAV (or sf-Medium) of "Speed dependent ScalingFactor for Qhyst" to Qhyst if broadcasted in system information
    - For NR cells, multiply TreselectionNRUAV (or TreselectionNR) by the sf-MediumUAV (or sf-Medium) of "Speed dependent ScalingFactor for TreselectionNRUAV (or TreselectionNR)" if broadcasted in system information
    - For EUTRA cells, multiply TreselectionEUTRAUAV (or TreselectionETURA) by the sf-MediumUAV (sf-Medium) of "Speed dependent ScalingFactor for TreselectionEUTRAUAV (or TreselectionEUTRA)" if broadcasted in system information

For reference, in case scaling is applied to any TreselectionRAT parameter, the UE shall round up the result after all scalings to the nearest second.

In operation 1020, the UE may perform the cell reselection process specified in operation 1015 by reflecting the scaling result according to the determined mobility state.

In operation 1025, the UE 1001 in the RRC idle mode or RRC inactive mode may initiate an RRC connection establishment procedure or an RRC connection resume procedure in order to establish an RRC connection to the base station 1002. That is, in operation 1025, the UE may transmit an RRC connection request message (RRCSetupRequest) or an RRC connection resumption request message (RRCResumeRequest or RRCResumeRequestl) to the base station. In operation 1030, the base station may transmit an RRC connection establishment message (RRCSetup) or an RRC connection resumption message (RRCResume) to the UE in response to the RRC connection request message or the RRC connection resumption request message. Upon receiving the RRC connection establishment message or the RRC connection resumption message, the UE may transition (1031) to the RRC connected mode (RRC_CONNECTED). The UE in the RRC connected mode may transmit (1035) an RRC connection establishment completion message (RRCSetupComplete) or an RRC connection resumption completion message (RRCResumeComplete) to the base station. The RRC connection establishment completion message or the RRC connection resumption completion message may contain the UE's new mobility state (mobility state for UAV) or conventional mobility state. Specifically, the RRC connection establishment completion message or the RRC connection resumption completion message may include the *mobilityStateUAV* or mobilityState and set it to the mobility state (as specified in TS 38.304) of the UE just prior to entering RRC_CONNECTED state.

The disclosure is characterized in that cell reselection may be performed by determining the mobility state based on the speed threshold value regarding the UE's speed.

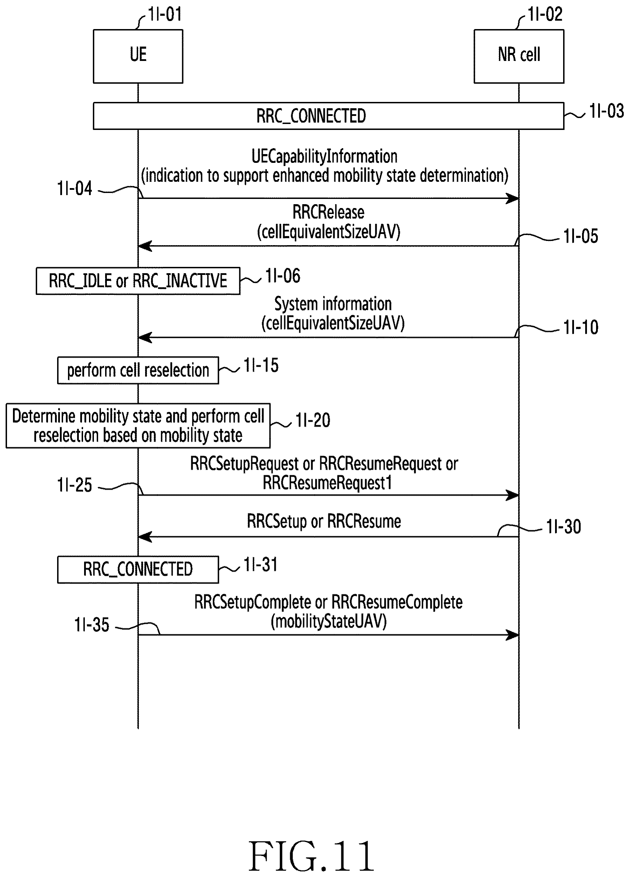

FIG. 11 is a flowchart of processes in which a UE reports mobility states to an NR base station in a next-generation mobile communication system according to an embodiment of the disclosure.

The UE in the next-generation mobile communication system according to this embodiment may refer to a UE capable of receiving an uncrewed aerial vehicle (UAV) service. Alternatively, the same may refer to a UE capable of flying or moving at a high speed, or a UE capable of applying a newly defined mobility state determination method. A UE capable of receiving a UAV service may satisfy the following requirements specified in 3GPP TS 22.125. In particular, the UE may receive a UAV service while moving at a high speed. A UE moving at a high speed may enter a medium mobility state or a high mobility state much later, despite the high speed, in case of following the conventional mobility state determination. Therefore, a mobility state determination method for a UE will be proposed in this embodiment.

[Table 10]

| Control Mode | Function | Typical Message Interval | Max UAV ground speed | Typical message Size (note 1) | End to end Latency | Reliability (note 2) | Positive ACK (note 8) |
|---|---|---|---|---|---|---|---|
| Steer to way-points (note 3) | UAV termi-nated C2 mes-sage | >=1 s | 300 km/h | 100 byte | 1 s | 99.9% | Required |
| | UAV originated C2 message (note 4) | 1 s | | 84-140 byte | 1 s | 99.9% | Not Required |
| Direct stick steering (note 5) | UAV termi-nated C2 mes-sage | 40 ms (note 6) | 60km/h | 24 byte | 40 ms | 99.9% | Required |
| | UAV originated C2 message (note 7) | 40 ms | | 84-140 byte | 40 ms | 99.9% | Not Required |
| Automatic flight on UTM (note 10) | UAV termi-nated C2 mes-sage | 1 s | 300 km/h | <10 kbyte 1500 byte | 5 s (note 9) | 99.9% | Required |
| | UAV originated C2 message | 1 s (note 9) | | | 5 s (note 9) | 99.9% | Required |
| Approaching Autonomous Navigation In-frastructure | UAV termi-nated C2 mes-sage | 500 ms | 50 km/h | 4 kbyte | 10 ms | 99% | Required |
| | UAVoriginated C2 message | 500 ms | | 4 kbyte | 140 ms | 99.99% | Required |

NOTE 1: Message size is at the application layer and excludes any headers and security related load. The numbers shown are typical as message size depends on the commands sent and is implementation specific.

NOTE 2: Message reliability is defined as the probability of successful transmission within the required latency at the application layer while under network coverage.

NOTE 3: Video is neither required nor expected to be used for steering in this mode.

NOTE 4: It may be possible to transmit this message on an event driven basis (e.g. approaching a geo fence). A status message may, but is not required to, be sent as a response to a control message.

NOTE 5: A video feedback is required for this mode. The KPIs for video are defined in table 7.2-2.

NOTE 6: UAVs on-board controllers typically update at either 50Hz (20ms) or 25Hz (40ms).

NOTE 7: A status message may, but is not required to, be sent as a response to a control message A 11z slow mode also exists.

NOTE 8: Positive ACK is sent to the originator of the message (i.e. UAV controller and / or the UTM). The 5G system makes no assumption whether an appropriate ACK is sent by the application layer.

(continued)

| Control Mode | Function | Typical Message Interval | Max UAV ground speed | Typical message Size (note 1) | End to end Latency | Reliability (note 2) | Positive ACK (note 8) |
|---|---|---|---|---|---|---|---|
| NOTE 9: At the application layer, the C2 communication between a UAV and UTM can be allowed to experience much longer traffic interruptions, e.g. timeouts of 30 s on the uplink and 300 s on the downlink. | | | | | | | |
| NOTE 10: This only represents periodic message exchange during a nominal mission in steady state. Itdoes not represent unusual or aperiodic events such as conveying dynamic restrictions or a flight plan to the UAV on the downlink. | | | | | | | |

Referring to FIG. 11, the UE 1101 may establish an RRC connection to the NR cell 1102 and may thus be in an RRC connected mode (RRC_CONNECTED) (1103).

In operation 1104, the UE 1101 in the RRC connected mode may transmit a UE capability information message (UECapabilityInformation) to the NR cell 1102. The UE capability information message (UECapabilityInformation) may include at least one of the following:

- An indicator indicating that the enhanced mobility state may be determined
- An indicator indicating a UAV UE
- An indicator indicating that new speed dependent reselection parameters included in the system information or RRC connection release message may be applied
- An indicator indicating that the number of cell reselections can be counted with a value configured by the base station in a dedicated manner or a value broadcast thereby, despite being a single cell reselection.

In operation 1105, the NR cell 1102 may transmit an RRC connection release message (RRCRelease) to the UE 1101 in the RRC connected mode. The RRC connection release message (RRCRelease) may include speed dependent reselection parameters or speed dependent reselection scaling parameters. This may follow the above-described embodiment. Additionally, the RRC connection release message (RRCRelease) may include at least one of the following:

- A cell reselection count value (cellEquivalentSizeUAV) for counting a single cell reselection count as multiple cell reselections and/or an altitude threshold

    ▪ If cellEquivalentSizeUAV is configured, the UE may count the number of cell reselections such that a single cell reselection corresponds to cellEquivalentSizeUAV. This may enable the UE to enter the medium mobility state or high mobility state more quickly.
    ▪ In case of flying above the altitude threshold value or flying above or at the altitude threshold value, the UE may count the number of cell reselections such that a single cell reselection corresponds to cellEquivalentSizeUAV. This may enable the UE to enter the medium mobility state or high mobility state more quickly.

In operation 1106, upon receiving the RRC connection release message, the UE 1101 may transition to the RRC idle mode (RRC_IDLE) or RRC inactive mode (RRC_INACTIVE).

In operation 1110, the UE 1101 in the RRC idle mode or RRC inactive mode may receive or acquire system information from the base station 1102. The system information may include parameters to be used by the UE to perform a cell selection or cell reselection process. This may follow the above-described embodiment. Additionally, the system information may include at least one of the following:

- A cell reselection count value (cellEquivalentSizeUAV) for counting a single cell reselection count as multiple cell reselections and/or an altitude threshold value

    ▪ If cellEquivalentSizeUAV is broadcast, the UE may count the number of cell reselections such that a single cell reselection corresponds to cellEquivalentSizeUAV. This may enable the UE to enter the medium mobility state or high mobility state more quickly. For reference, cellEquivalentSizeUAV may also refer to cellEquivalentSize which is broadcast in existing system information.
    ▪ In case of flying above the altitude threshold value or flying above or at the altitude threshold value, the UE may count the number of cell reselections such that a single cell reselection corresponds to cellEquivalentSizeUAV. This may enable the UE to enter the medium mobility state or high mobility state more quickly. Otherwise (in case that the UE is flying below the altitude threshold value or flying below or at the altitude threshold value), the UE may count a single cell reselection as 1.

In operation 1115, the UE 1101 in the RRC idle mode or RRC inactive mode may perform a cell selection or cell reselection process. This may follow at least one of the above-described embodiments, or at least one of the parameters described above in operation 1110 may be applied to perform the cell reselection process.

In operation 1120, the UE 1101 in the RRC idle mode or RRC inactive mode may determine the mobility state. The UE may determine mobility states by counting a single reselection as cellEquivalentSizeUAV. Alternatively, the UE may determine the mobility state by counting a single reselection as cellEquivalentSizeUAV or 1 according to the flight altitude. Except for this, the remaining UE operations may follow at least one of the above-described embodiments.

In operation 1125, the UE 1101 in the RRC idle mode or RRC inactive mode may initiate an RRC connection establishment procedure or an RRC connection resume procedure in order to establish an RRC connection to the base station 1102. That is, in operation 1125, the UE may transmit an RRC connection request message (RRCSetupRequest) or an RRC connection resumption request message (RRCResumeRequest or RRCResumeRequestI) to the base station. In operation 1130, the base station may transmit an RRC connection establishment message (RRCSetup) or an RRC connection resumption message (RRCResume) to the UE in response to the RRC connection request message or the RRC connection resumption request message. Upon receiving the RRC connection establishment message or the RRC connection resumption message, the UE may transition (1131) to the RRC connected mode (RRC_CONNECTED). The UE in the RRC connected mode may transmit (1135) an RRC connection establishment completion message (RRCSetupComplete) or an RRC connection resumption completion message (RRCResumeComplete) to the base station. The RRC connection establishment completion message or the RRC connection resumption completion message may contain the UE's new mobility state (mobility state for UAV) or conventional mobility state. Specifically, the RRC connection establishment completion message or the RRC connection resumption completion message may include the *mobilityStateUAV* or mobilityState and set it to the mobility state (as specified in TS 38.304) of the UE just prior to entering RRC_CONNECTED state.

The disclosure is characterized in that, although a single cell reselection has occurred, the UE may count the same as cellEquivalentSizeUAV and may transition to the medium or high mobility state more quickly, thereby performing cell reselection quickly. Alternatively, the disclosure is characterized in that the UE counts a single reselection as cellEquivalentSizeUAV or 1 according to the flight altitude and may transition to the medium or high mobility state more quickly, thereby performing cell reselection quickly.

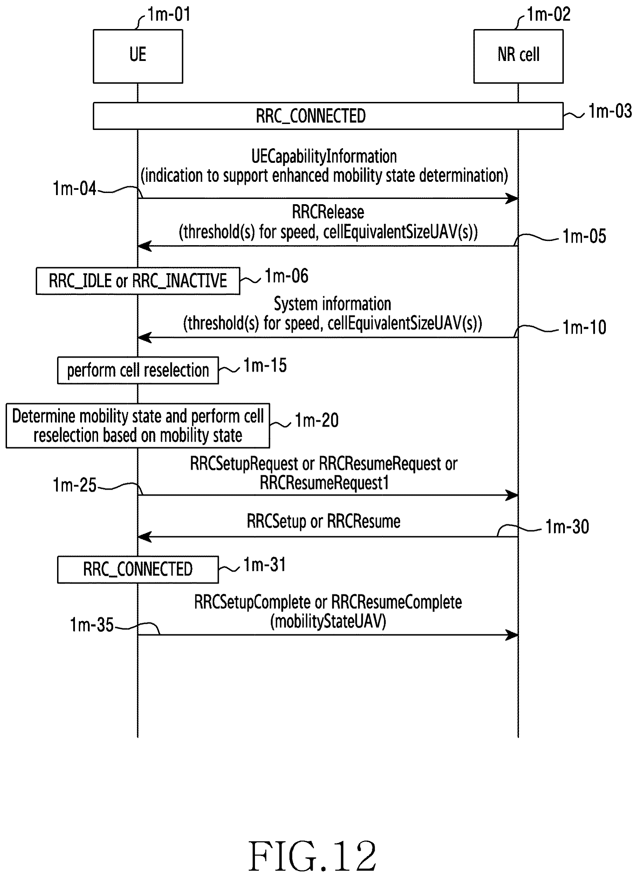

FIG. 12 is a flowchart of processes in which a UE reports mobility states to an NR base station in a next-generation mobile communication system according to an embodiment of the disclosure.

The UE in the next-generation mobile communication system according to this embodiment may refer to a UE capable of receiving an uncrewed aerial vehicle (UAV) service. Alternatively, the same may refer to a UE capable of flying or moving at a high speed, or a UE capable of applying a newly defined mobility state determination method. A UE capable of receiving a UAV service may satisfy the following requirements specified in 3GPP TS 22.125. In particular, the UE may receive a UAV service while moving at a high speed. A UE moving at a high speed may enter a medium mobility state or a high mobility state much later, despite the high speed, in case of following the conventional mobility state determination. Therefore, a mobility state determination method for a UE will be proposed in this embodiment.

[Table 11]

| Control Mode | Function | Typical Message Interval | Max UAV ground speed | Typical message Size (note 1) | End to end Latency | Reliability (note 2) | Positive ACK (note 8) |
|---|---|---|---|---|---|---|---|
| Steer to way-points (note 3) | UAV termi-nated C2 message | >=1 s | 300 km/h | 100 byte | 1 s | 99.9% | Required |
| | UAV originated C2 message (note 4) | 1 s | | 84-140 byte | 1 s | 99.9% | Not Required |
| Direct stick steering (note 5) | UAV terminated C2 message | 40 ms (note 6) | 60km/h | 24 byte | 40 ms | 99.9% | Required |
| | UAV originated C2 message (note 7) | 40 ms | | 84-140 byte | 40 ms | 99.9% | Not Required |

(continued)

| Control Mode | Function | Typical Message Interval | Max UAV ground speed | Typical message Size (note 1) | End to end Latency | Reliability (note 2) | Positive ACK (note 8) |
|---|---|---|---|---|---|---|---|
| Automatic flight on UTM (note 10) | UAV terminated C2 message | 1 s | 300 km/h | <10 kbyte 1500 byte | 5 s (note 9) | 99.9% | Required |
| | UAV originated C2 message | 1 s (note 9) | | | 5 s (note 9) | 99.9% | Required |
| Approaching Autonomous Navigation Infrastructure | UAV terminated C2 message | 500 ms | 50 km/h | 4 kbyte | 10 ms | 99% | Required |
| | UAVoriginated C2 message | 500 ms | | 4 kbyte | 140 ms | 99.99% | Required |
| NOTE 1: Message size is at the application layer and excludes any headers and security related load. The numbers shown are typical as message size depends on the commands sent and is implementation specific. | | | | | | | |
| NOTE 2: Message reliability is defined as the probability of successful transmission within the required latency at the application layer while under network coverage. | | | | | | | |
| NOTE 3: Video is neither required nor expected to be used for steering in this mode. | | | | | | | |
| NOTE 4: It may be possible to transmit this message on an event driven basis (e.g. approaching a geo fence). A status message may, but is not required to, be sent as a response to a control message. | | | | | | | |
| NOTE 5: A video feedback is required for this mode. The KPIs for video are defined in table 7.2-2. | | | | | | | |
| NOTE 6: UAVs on-board controllers typically update at either 50Hz (20ms) or 25Hz (40ms). | | | | | | | |
| NOTE 7: A status message may, but is not required to, be sent as a response to a control message A 1mz slow mode also exists. | | | | | | | |
| NOTE 8: Positive ACK is sent to the originator of the message (i.e. UAV controller and / or the UTM). The 5G system makes no assumption whether an appropriate ACK is sent by the application layer. | | | | | | | |
| NOTE 9: At the application layer, the C2 communication between a UAV and UTM can be allowed to experience much longer traffic interruptions, e.g. timeouts of 30 s on the uplink and 300 s on the downlink. | | | | | | | |
| NOTE 10: This only represents periodic message exchange during a nominal mission in steady state. Itdoes not represent unusual or aperiodic events such as conveying dynamic restrictions or a flight plan to the UAV on the downlink. | | | | | | | |

Referring to FIG. 12, the UE 1201 may establish an RRC connection to the NR cell 1202 and may thus be in an RRC connected mode (RRC_CONNECTED) (1203).

In operation 1204, the UE 1201 in the RRC connected mode may transmit a UE capability information message (UECapabilityInformation) to the NR cell 1202. The UE capability information message (UECapabilityInformation) may include at least one of the following:

- An indicator indicating that the enhanced mobility state may be determined
- An indicator indicating a UAV UE
- An indicator indicating that new speed dependent reselection parameters included in the system information or RRC connection release message may be applied
- An indicator indicating that the number of cell reselections can be counted with a value configured by the base station in a dedicated manner or a value broadcast thereby, despite being a single cell reselection.

In operation 1205, the NR cell 1202 may transmit an RRC connection release message (RRCRelease) to the UE 1201 in the RRC connected mode. The RRC connection release message (RRCRelease) may include speed dependent reselection parameters or speed dependent reselection scaling parameters. This may follow the above-described embodiment. Additionally, the RRC connection release message (RRCRelease) may include at least one of the following:

- A cell reselection count value (cellEquivalentSizeUAV) for counting a single cell reselection count as multiple cell reselections, and a UE speed threshold value

■ In case that one cellEquivalentSizeUAV and one UE speed threshold value are included

♦ In case that the UE is flying above the UE speed threshold value or flying at or above the same, the UE may derive the mobility state by counting a single cell reselection as cellEquivalentSizeUAV. Otherwise (that is, in case that the UE is flying below the UE speed threshold value or flying at or below the same), the UE may derive the mobility state by counting a single cell reselection as one. For reference, the speed at which the UE flies may refer to the average speed during a duration value indicating a mobility state evaluation criterion, or an instantaneous speed.

■ In case that multiple cellEquivalentSizeUAV values and speed threshold values mapped thereto, respectively, are included, for example, in case that {s1, cellEquivalentSizeUAV1}, {s2, cellEquivalentSizeUAV2} are included (s2>=s1 or s2> s1, EquivalentSizeUAV2 >=EquivalentSizeUAV1 or EquivalentSizeUAV2 > EquivalentSizeUAV1),

■ In case that the UE flies such that the UE speed threshold value is smaller than s1 or is smaller than or equal to the same, the UE may derive the mobility state by counting a single cell reselection as one. In case that the UAV UE flies such that the UE speed threshold value is larger than s1 or is larger than or equal to the same, and the UE speed threshold value is smaller than s2 or is smaller than or equal to the same, the UE may derive the mobility state by counting a single cell reselection as cellEquivalentSizeUAV1. In case that the UAV UE flies such that the UE speed threshold value is larger than s2 or is larger than or equal to the same, the UE may derive the mobility state by counting a single cell reselection as cellEquivalentSizeUAV2. For reference, the UE speed may refer to the average speed during a duration value indicating an evaluation criterion to enter a mobility state, or an instantaneous speed.

- An altitude threshold value

■ For reference, the above description may be applied in case that the UE flies above the altitude threshold vale or flies above or at the same. That is, in case that the UE flies below the altitude threshold vale or flies below or at the same, the UE may derive the mobility state by counting a single cell reselection as one.

In operation 1206, upon receiving the RRC connection release message, the UE 1201 may transition to the RRC idle mode (RRC_IDLE) or RRC inactive mode (RRC_INACTIVE).

In operation 1210, the UE 1201 in the RRC idle mode or RRC inactive mode may receive or acquire system information from the base station 1202. The system information may include parameters to be used by the UE to perform a cell selection or cell reselection process. This may follow the above-described embodiment. Additionally, the system information may include at least one of the following:

- A cell reselection count value (cellEquivalentSizeUAV) for counting a single cell reselection count as multiple cell reselections, and a UE speed threshold value

■ In case that one cellEquivalentSizeUAV and one UE speed threshold value are included

♦ In case that the UE is flying above the UE speed threshold value or flying at or above the same, the UE may derive the mobility state by counting a single cell reselection as cellEquivalentSizeUAV. Otherwise (that is, in case that the UE is flying below the UE speed threshold value or flying at or below the same), the UE may derive the mobility state by counting a single cell reselection as one. For reference, the speed at which the UE flies may refer to the average speed during a duration value indicating a mobility state evaluation criterion, or an instantaneous speed.

■ In case that multiple cellEquivalentSizeUAV values and speed threshold values mapped thereto, respectively, are included, for example, in case that {s1, cellEquivalentSizeUAV1}, {s2, cellEquivalentSizeUAV2} are included (s2>=s1 or s2> s1, EquivalentSizeUAV2 >=EquivalentSizeUAV1 or EquivalentSizeUAV2 > EquivalentSizeUAV1),

■ In case that the UE flies such that the UE speed threshold value is smaller than s1 or is smaller than or equal to the same, the UE may derive the mobility state by counting a single cell reselection as one. In case that the UAV UE flies such that the UE speed threshold value is larger than s1 or is larger than or equal to the same, and the UE speed threshold value is smaller than s2 or is smaller than or equal to the same, the UE may derive the mobility state by counting a single cell reselection as cellEquivalentSizeUAV1. In case that the UAV UE flies such that the UE speed threshold value is larger than s2 or is larger than or equal to the same, the UE may derive the mobility state by counting a single cell reselection as cellEquivalentSizeUAV2. For reference, the UE speed may refer to the average speed during a duration value indicating an evaluation criterion to enter a mobility state, or an instantaneous speed.

- An altitude threshold value

  ▪ For reference, the above description may be applied in case that the UE flies above the altitude threshold vale or flies above or at the same. That is, in case that the UE flies below the altitude threshold vale or flies below or at the same, the UE may derive the mobility state by counting a single cell reselection as one.

In operation 1215, the UE 1201 in the RRC idle mode or RRC inactive mode may perform a cell selection or cell reselection process. This may follow at least one of the above-described embodiments, or at least one of the parameters described above in operation 1210 may be applied to perform the cell reselection process.

In operation 1220, the UE 1201 in the RRC idle mode or RRC inactive mode may determine the mobility state. The UE may compare the flying speed with the UE speed threshold value such that a single cell reselection is counted as cellEquivalentSizeUAV1 or cellEquivalentSizeUAV2 or one, thereby determining the mobility state. Except for this, the remaining UE operations may follow at least one of the above-described embodiments.

In operation 1225, the UE 1201 in the RRC idle mode or RRC inactive mode may initiate an RRC connection establishment procedure or an RRC connection resume procedure in order to establish an RRC connection to the base station 1202. That is, in operation 1225, the UE may transmit an RRC connection request message (RRCSetupRequest) or an RRC connection resumption request message (RRCResumeRequest or RRCResumeRequestl) to the base station. In operation 1230, the base station may transmit an RRC connection establishment message (RRCSetup) or an RRC connection resumption message (RRCResume) to the UE in response to the RRC connection request message or the RRC connection resumption request message. Upon receiving the RRC connection establishment message or the RRC connection resumption message, the UE may transition (1231) to the RRC connected mode (RRC_CONNECTED). The UE in the RRC connected mode may transmit (1235) an RRC connection establishment completion message (RRCSetupComplete) or an RRC connection resumption completion message (RRCResumeComplete) to the base station. The RRC connection establishment completion message or the RRC connection resumption completion message may contain the UE's new mobility state (mobility state for UAV) or conventional mobility state. Specifically, the RRC connection establishment completion message or the RRC connection resumption completion message may include the *mobilityStateUAV* or mobilityState and set it to the mobility state (as specified in TS 38.304) of the UE just prior to entering RRC_CONNECTED state.

The disclosure is characterized in that, although a single cell reselection has occurred, the UE may count the same as cellEquivalentSizeUAV per UE speed threshold value according to the UE's speed and may transition to the medium or high mobility state more quickly, thereby performing cell reselection quickly.

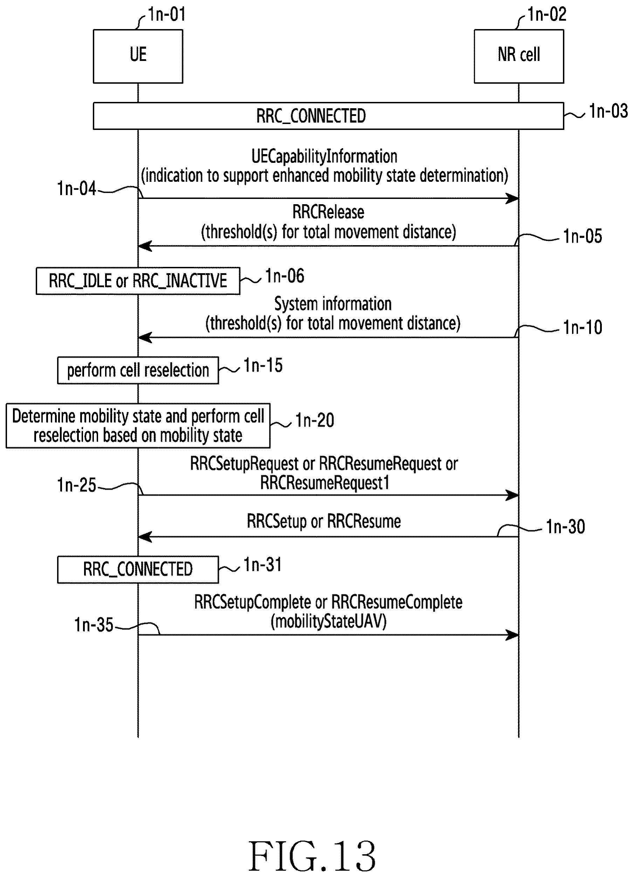

FIG. 13 is a flowchart of processes in which a UE reports mobility states to an NR base station in a next-generation mobile communication system according to an embodiment of the disclosure.

The UE in the next-generation mobile communication system according to this embodiment may refer to a UE capable of receiving an uncrewed aerial vehicle (UAV) service. Alternatively, the same may refer to a UE capable of flying or moving at a high speed, or a UE capable of applying a newly defined mobility state determination method. A UE capable of receiving a UAV service may satisfy the following requirements specified in 3GPP TS 22.125. In particular, the UE may receive a UAV service while moving at a high speed. A UE moving at a high speed may enter a medium mobility state or a high mobility state much later, despite the high speed, in case of following the conventional mobility state determination. Therefore, a mobility state determination method for a UE will be proposed in this embodiment.

[Table 12]

| Control Mode | Function | Typical Message Interval | Max UAV ground speed | Typical message Size (note 1) | End to end Latency | Reliability (note 2) | Positive ACK (note 8) |
|---|---|---|---|---|---|---|---|
| Steer to way-points (note 3) | UAV termi-nated C2 mes-sage | >=1 s | 300 km/h | 100 byte | 1 s | 99.9% | Required |
| | UAV originated C2 message (note 4) | 1 s | | 84-140 byte | 1 s | 99.9% | Not Re-quired |

(continued)

| Control Mode | Function | Typical Message Interval | Max UAV ground speed | Typical message Size (note 1) | End to end Latency | Reliability (note 2) | Positive ACK (note 8) |
|---|---|---|---|---|---|---|---|
| Direct stick steering (note 5) | UAV terminated C2 message | 40 ms (note 6) | 60km/h | 24 byte | 40 ms | 99.9% | Required |
| | UAV originated C2 message (note 7) | 40 ms | | 84-140 byte | 40 ms | 99.9% | Not Required |
| Automatic flight on UTM (note 10) | UAV terminated C2 message | 1 s | 300 km/h | <10 kbyte 1500 hvte | 5 s (note 9) | 99.9% | Required |
| | UAV originated C2 message | 1 s (note 9) | | | 5 s (note 9) | 99.9% | Required |
| Approaching Autonomous Navigation Infrastructure | UAV terminated C2 message | 500 ms | 50 km/h | 4 kbyte | 10 ms | 99% | Required |
| | UAVoriginated C2 message | 500 ms | | 4 kbyte | 140 ms | 99.99% | Required |
| NOTE 1: Message size is at the application layer and excludes any headers and security related load. The numbers shown are typical as message size depends on the commands sent and is implementation specific. NOTE 2: Message reliability is defined as the probability of successful transmission within the required latency at the application layer while under network coverage. NOTE 3: Video is neither required nor expected to be used for steering in this mode. NOTE 4: It may be possible to transmit this message on an event driven basis (e.g. approaching a geo fence). A status message may, but is not required to, be sent as a response to a control message. NOTE 5: A video feedback is required for this mode. The KPIs for video are defined in table 7.2-2. NOTE 6: UAVs on-board controllers typically update at either 50Hz (20ms) or 25Hz (40ms). NOTE 7: A status message may, but is not required to, be sent as a response to a control message A 1nz slow mode also exists. NOTE 8: Positive ACK is sent to the originator of the message (i.e. UAV controller and / or the UTM). The 5G system makes no assumption whether an appropriate ACK is sent by the application layer. NOTE 9: At the application layer, the C2 communication between a UAV and UTM can be allowed to experience much longer traffic interruptions, e.g. timeouts of 30 s on the uplink and 300 s on the downlink. NOTE 10: This only represents periodic message exchange during a nominal mission in steady state. Itdoes not represent unusual or aperiodic events such as conveying dynamic restrictions or a flight plan to the UAV on the downlink. | | | | | | | |

Referring to FIG. 13, the UE 1301 may establish an RRC connection to the NR cell 1302 and may thus be in an RRC connected mode (RRC_CONNECTED) (1303).

In operation 1304, the UE 1301 in the RRC connected mode may transmit a UE capability information message (UECapabilityInformation) to the NR cell 1302. The UE capability information message (UECapabilityInformation) may include at least one of the following:

- An indicator indicating that the enhanced mobility state may be determined
- An indicator indicating a UAV UE
- An indicator indicating that new speed dependent reselection parameters included in the system information or RRC connection release message may be applied
- An indicator that may be used to determine the mobility state according to the UE's total distance of movement

In operation 1305, the NR cell 1302 may transmit an RRC connection release message (RRCRelease) to the UE 1301 in the RRC connected mode. The RRC connection release message (RRCRelease) may include new distance dependent reselection parameters. Specifically,

- Each total movement distance threshold ($D_H$, $D_M$) for determining the normal mobility state, the medium mobility state, or the high mobility state

  ▪ In case that the UE's total movement distance is larger than $D_h$ during $T_{CRmax}$ (or new $T_{Crmaxnew}$) or is equal to or larger than the same, the UE may enter the high mobility state.
  ▪ In case that the UE's total movement distance is smaller than $D_h$ during $T_{CRmax}$ (or new $T_{Crmaxnew}$) or is equal to or smaller than the same, and in case that the UE's total movement distance is larger than $D_M$ or is equal to or larger than the same, the UE may enter the medium mobility state.
  ▪ In case that the UE's total movement distance is smaller than $D_M$ during $T_{CRmax}$ (or new $T_{Crmaxnew}$) or is equal to or smaller than the same, the UE may enter the normal mobility state.

- An altitude threshold value

  ▪ For reference, the above description may be applied in case that the UE flies above the altitude threshold vale or flies above or at the same. That is, in case that the UE flies below the altitude threshold vale or flies below or at the same, the UE may derive the mobility state according to at least one of the above-described embodiments.

In operation 1306, upon receiving the RRC connection release message, the UE 1301 may transition to the RRC idle mode (RRC_IDLE) or RRC inactive mode (RRC_INACTIVE).

In operation 1310, the UE 1301 in the RRC idle mode or RRC inactive mode may receive or acquire system information from the base station 1302. The system information may include parameters to be used by the UE to perform a cell selection or cell reselection process. This may follow the above-described embodiment. This may follow the above-described embodiment. Additionally, the system information may include new distance dependent reselection parameters. Specifically,

- Each total movement distance threshold ($D_H$, $D_M$) for determining the normal mobility state, the medium mobility state, or the high mobility state

  ▪ In case that the UE's total movement distance is larger than $D_h$ during $T_{CRmax}$ (or new $T_{Crmaxnew}$) or is equal to or larger than the same, the UE may enter the high mobility state.
  ▪ In case that the UE's total movement distance is smaller than $D_h$ during $T_{CRmax}$ (or new $T_{Crmaxnew}$) or is equal to or smaller than the same, and in case that the UE's total movement distance is larger than $D_M$ or is equal to or larger than the same, the UE may enter the medium mobility state.
  ▪ In case that the UE's total movement distance is smaller than $D_M$ during $T_{CRmax}$ (or new $T_{Crmaxnew}$) or is equal to or smaller than the same, the UE may enter the normal mobility state.

- An altitude threshold value

  ▪ For reference, the above description may be applied in case that the UE flies above the altitude threshold vale or flies above or at the same. That is, in case that the UE flies below the altitude threshold vale or flies below or at the same, the UE may derive the mobility state according to at least one of the above-described embodiments.

In operation 1315, the UE 1301 in the RRC idle mode or RRC inactive mode may perform a cell selection or cell reselection process. This may follow at least one of the above-described embodiments, or at least one of the parameters described above in operation 1310 may be applied to perform the cell reselection process.

In operation 1320, the UE 1301 in the RRC idle mode or RRC inactive mode may determine the mobility state. The UE may perform the cell reselection process specified in operation 1315 according to the determined mobility state. For reference, the UE may apply speed dependent (scaling) reselection parameters according to at least one of the above-described embodiments.

In operation 1325, the UE 1301 in the RRC idle mode or RRC inactive mode may initiate an RRC connection establishment procedure or an RRC connection resume procedure in order to establish an RRC connection to the base station 1302. That is, in operation 1325, the UE may transmit an RRC connection request message (RRCSetupRequest) or an RRC connection resumption request message (RRCResumeRequest or RRCResumeRequestl) to the base station. In operation 1330, the base station may transmit an RRC connection establishment message (RRCSetup) or an RRC connection resumption message (RRCResume) to the UE in response to the RRC connection request message or the RRC connection resumption request message. Upon receiving the RRC connection establishment message or the RRC connection resumption message, the UE may transition (1331) to the RRC connected mode (RRC_CONNECTED). The UE in the RRC connected mode may transmit (1335) an RRC connection establishment completion message (RRCSetupComplete) or an RRC connection resumption completion message (RRCResumeComplete) to the base station. The RRC connection establishment completion message or the RRC connection resumption completion message may contain the UE's new mobility state (mobility state for UAV) or conventional mobility state. Specifically, the RRC connection establishment completion message or the RRC connection resumption completion message may include the *mobilityStateUAV* or mobilityState and set it to the mobility state (as specified in TS 38.304) of the UE just prior to entering RRC_CONNECTED state.

The disclosure is characterized in that the UE performs cell reselection by determining the mobility state based on the total distance of movement during a given time.

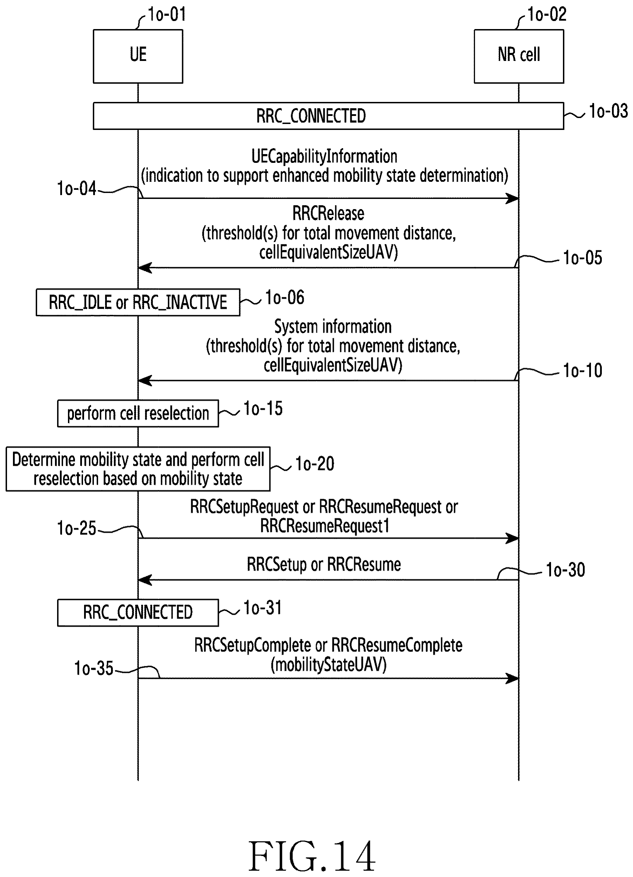

FIG. 14 is a flowchart of processes in which a UE reports mobility states to an NR base station in a next-generation mobile communication system according to an embodiment of the disclosure.

The UE in the next-generation mobile communication system according to this embodiment may refer to a UE capable of receiving an uncrewed aerial vehicle (UAV) service. Alternatively, the same may refer to a UE capable of flying or moving at a high speed, or a UE capable of applying a newly defined mobility state determination method. A UE capable of receiving a UAV service may satisfy the following requirements specified in 3GPP TS 22.125. In particular, the UE may receive a UAV service while moving at a high speed. A UE moving at a high speed may enter a medium mobility state or a high mobility state much later, despite the high speed, in case of following the conventional mobility state determination. Therefore, a mobility state determination method for a UE will be proposed in this embodiment.

[Table 13]

| Control Mode | Function | Typical Message Interval | Max UAV ground speed | Typical message Size (note 1) | End to end Latency | Reliability (note 2) | Positive ACK (note 8) |
|---|---|---|---|---|---|---|---|
| Steer to waypoints (note 3) | UAV terminated C2 message | >=1 s | 300 km/h | 100 byte | 1 s | 99.9% | Required |
| | UAV originated C2 message (note 4) | 1 s | | 84-140 byte | 1 s | 99.9% | Not Required |
| Direct stick steering (note 5) | UAV terminated C2 message | 40 ms (note 6) | 60km/h | 24 byte | 40 ms | 99.9% | Required |
| | UAV originated C2 message (note 7) | 40 ms | | 84-140 byte | 40 ms | 99.9% | Not Required |
| Automatic flight on UTM (note 10) | UAV terminated C2 message | 1 s | 300 km/h | <10 kbyte 1500 byte | 5 s (note 9) | 99.9% | Required |
| | UAV originated C2 message | 1 s (note 9) | | | 5 s (note 9) | 99.9% | Required |
| Approaching Autonomous Navigation Infrastructure | UAV terminated C2 message | 500 ms | 50 km/h | 4 kbyte | 10 ms | 99% | Required |
| | UAVoriginated C2 message | 500 ms | | 4 kbyte | 140 ms | 99.99% | Required |
| NOTE 1: Message size is at the application layer and excludes any headers and security related load. The numbers shown are typical as message size depends on the commands sent and is implementation specific.<br>NOTE 2: Message reliability is defined as the probability of successful transmission within the required latency at the application layer while under network coverage.<br>NOTE 3: Video is neither required nor expected to be used for steering in this mode.<br>NOTE 4: It may be possible to transmit this message on an event driven basis (e.g. approaching a geo fence). A status message may, but is not required to, be sent as a response to a control message. | | | | | | | |

(continued)

| Control Mode | Function | Typical Message Interval | Max UAV ground speed | Typical message Size (note 1) | End to end Latency | Reliability (note 2) | Positive ACK (note 8) |
|---|---|---|---|---|---|---|---|
| NOTE 5: A video feedback is required for this mode. The KPIs for video are defined in table 7.2-2. | | | | | | | |
| NOTE 6: UAVs on-board controllers typically update at either 50Hz (20ms) or 25Hz (40ms). | | | | | | | |
| NOTE 7: A status message may, but is not required to, be sent as a response to a control message A loz slow mode also exists. | | | | | | | |
| NOTE 8: Positive ACK is sent to the originator of the message (i.e. UAV controller and / or the UTM). The 5G system makes no assumption whether an appropriate ACK is sent by the application layer. | | | | | | | |
| NOTE 9: At the application layer, the C2 communication between a UAV and UTM can be allowed to experience much longer traffic interruptions, e.g. timeouts of 30 s on the uplink and 300 s on the downlink. | | | | | | | |
| NOTE 10: This only represents periodic message exchange during a nominal mission in steady state. Itdoes not represent unusual or aperiodic events such as conveying dynamic restrictions or a flight plan to the UAV on the downlink. | | | | | | | |

Referring to FIG. 14, the UE 1401 may establish an RRC connection to the NR cell 1402 and may thus be in an RRC connected mode (RRC_CONNECTED) (1403).

In operation 1404, the UE 1401 in the RRC connected mode may transmit a UE capability information message (UECapabilityInformation) to the NR cell 1402. The UE capability information message (UECapabilityInformation) may include at least one of the following:

- An indicator that may be used to determine the enhanced mobility state
- An indicator indicating a UAV UE
- An indicator indicating that new distance dependent reselection parameters included in the system information or RRC connection release message may be applied
- An indicator that may be used to determine the mobility state according to the UE's total distance of movement

In operation 1405, the NR cell 1402 may transmit an RRC connection release message (RRCRelease) to the UE 1401 in the RRC connected mode. The RRC connection release message (RRCRelease) may include configuration information according to at least one of the above-described embodiments. Additionally, the RRC connection release message (RRCRelease) may include new distance dependent reselection parameters and one or multiple cellEquivalentSizeUAV (for example, cellEquivalentSizeUAV2, cellEquivalentSizeUAV1 (cellEquivalentSizeUAV2>=cellEquivalentSizeUAV1 or cellEquivalentSizeUAV2 > cellEquivalentSizeUAV1)). Specifically,

■ In case that the UE's total movement distance is larger than $D_h$ during $T_{CRmax}$ (or new $T_{Crmaxnew}$) or is equal to or larger than the same, the UE may count a single cell reselection as cellEquivalentSizeUAV2.
■ In case that the UE's total movement distance is smaller than $D_h$ during $T_{CRmax}$ (or new $T_{Crmaxnew}$) or is equal to or smaller than the same, and in case that the UE's total movement distance is larger than $D_M$ or is equal to or larger than the same, the UE may count a single cell reselection as cellEquivalentSizeUAV1.
■ In case that the UE's total movement distance is smaller than $D_M$ during $T_{CRmax}$ (or new $T_{Crmaxnew}$) or is equal to or smaller than the same, the UE may count a single cell reselection as one.

- An altitude threshold value

■ For reference, the above description may be applied in case that the UE flies above the altitude threshold vale or flies above or at the same. That is, in case that the UE flies below the altitude threshold vale or flies below or at the same, the UE may derive the mobility state according to at least one of the above-described embodiments.

In operation 1406, upon receiving the RRC connection release message, the UE 1401 may transition to the RRC idle mode (RRC_IDLE) or RRC inactive mode (RRC_INACTIVE).

In operation 1410, the UE 1401 in the RRC idle mode or RRC inactive mode may receive or acquire system information from the base station 1402. The system information may include parameters to be used by the UE to perform a cell selection or cell reselection process. This may follow the above-described embodiment. This may follow the above-described embodiment. Additionally, the system information may include new distance dependent reselection parameters and one or multiple cellEquivalentSizeUAV (for example, cellEquivalentSizeUAV2, cellEquivalentSizeUAV1 (cellEquivalentSizeUAV2>=cellEquivalentSizeUAV1 or cellEquivalentSizeUAV2 > cellEquivalentSizeUAV1)). Specifically,

- In case that the UE's total movement distance is larger than $D_h$ during $T_{CRmax}$ (or new $T_{Crmaxnew}$) or is equal to or larger than the same, the UE may count a single cell reselection as cellEquivalentSizeUAV2.
- In case that the UE's total movement distance is smaller than $D_h$ during $T_{CRmax}$ (or new $T_{Crmaxnew}$) or is equal to or smaller than the same, and in case that the UE's total movement distance is larger than $D_M$ or is equal to or larger than the same, the UE may count a single cell reselection as cellEquivalentSizeUAV1.
- In case that the UE's total movement distance is smaller than $D_M$ during $T_{CRmax}$ (or new $T_{Crmaxnew}$) or is equal to or smaller than the same, the UE may count a single cell reselection as one.

- An altitude threshold value

- For reference, the above description may be applied in case that the UE flies above the altitude threshold vale or flies above or at the same. That is, in case that the UE flies below the altitude threshold vale or flies below or at the same, the UE may derive the mobility state according to at least one of the above-described embodiments.

In operation 1415, the UE 1401 in the RRC idle mode or RRC inactive mode may perform a cell selection or cell reselection process. This may follow at least one of the above-described embodiments, or at least one of the parameters described above in operation 1410 may be applied to perform the cell reselection process.

In operation 1420, the UE 1401 in the RRC idle mode or RRC inactive mode may determine the mobility state according to the above description. The UE may perform the cell reselection process specified in operation 1415 according to the determined mobility state.

In operation 1425, the UE 1401 in the RRC idle mode or RRC inactive mode may initiate an RRC connection establishment procedure or an RRC connection resume procedure in order to establish an RRC connection to the base station 1402. That is, in operation 1425, the UE may transmit an RRC connection request message (RRCSetupRequest) or an RRC connection resumption request message (RRCResumeRequest or RRCResumeRequestl) to the base station. In operation 1430, the base station may transmit an RRC connection establishment message (RRCSetup) or an RRC connection resumption message (RRCResume) to the UE in response to the RRC connection request message or the RRC connection resumption request message. Upon receiving the RRC connection establishment message or the RRC connection resumption message, the UE may transition (1431) to the RRC connected mode (RRC_CONNECTED). The UE in the RRC connected mode may transmit (1435) an RRC connection establishment completion message (RRCSetupComplete) or an RRC connection resumption completion message (RRCResumeComplete) to the base station. The RRC connection establishment completion message or the RRC connection resumption completion message may contain the UE's new mobility state (mobility state for UAV) or conventional mobility state. Specifically, the RRC connection establishment completion message or the RRC connection resumption completion message may include the *mobilityStateUAV* or mobilityState and set it to the mobility state (as specified in TS 38.304) of the UE just prior to entering RRC_CONNECTED state.

The disclosure is characterized in that the UE performs cell reselection by determining the mobility state by differently counting the number of cell reselections according to the distance threshold value, based on the total distance of movement during a given time.

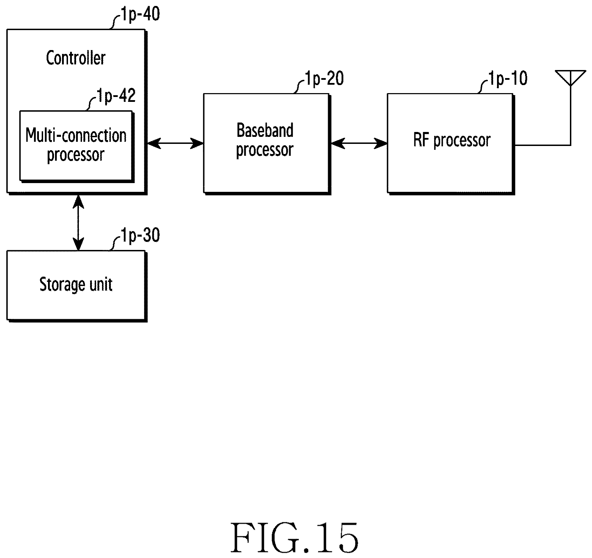

FIG. 15 is a block diagram illustrating an internal structure of a UE according to an embodiment of the disclosure.

Referring to FIG. 15, the UE may include a radio frequency (RF) processor 1510, a baseband processor 1520, a storage unit 1530, and a controller 1540.

The RF processor 1510 may perform a function for transmitting and receiving a signal via a wireless channel, such as band conversion and amplification of the signal. That is, the RF processor 1510 may up-convert a baseband signal provided from the baseband processor 1520 to an RF band signal, may transmit the same through an antenna, and may down-convert an RF band signal received through the antenna to a baseband signal. For example, the RF processor 1510 may include a transmission filter, a reception filter, an amplifier, a mixer, an oscillator, a digital-to-analog converter (DAC), an analog-to-digital converter (ADC), and the like. Although only one antenna is illustrated in FIG. 15, the UE may include multiple antennas. In addition, the RF processor 1510 may include multiple RF chains. Furthermore, the RF processor 1510 may perform beamforming. For the beamforming, the RF processor 1510 may adjust the phase and magnitude of each of signals transmitted and received through multiple antennas or antenna elements. In addition, the RF processor 1510 may perform MIMO, and may receive multiple layers when performing MIMO operations.

The baseband processor 1520 may perform functions of conversion between baseband signals and bitstrings according to the system's physical layer specifications. For example, during data transmission, the baseband processor 1520 may encode and modulate a transmitted bitstring to generate complex symbols. In addition, during data reception, the baseband processor 1520 may demodulate and decode a baseband signal provided from the RF processor 1510 to restore a received bitstring. For example, when following the orthogonal frequency division multiplexing (OFDM) scheme, during data transmission, the baseband processor 1520 may encode and modulate a transmitted bitstring to generate complex symbols, may map the complex symbols to subcarriers, and may configure OFDM symbols through an inverse fast Fourier transform (IFFT) operation and cyclic prefix (CP) insertion. In addition, during data reception, the baseband processor 1520 may split a baseband signal provided from the RF processor 1510 at the OFDM symbol level, may restore signals mapped to subcarriers through a fast Fourier transform (FFT) operation, and may restore a received bitstring through demodulation and decoding.

The baseband processor 1520 and the RF processor 1510 may transmit and receive signals as described above. Therefore, the baseband processor 1520 and the RF processor 1510 may be referred to as a transmitter, a receiver, a transceiver, or a communication unit. Furthermore, at least one of the baseband processor 1520 and the RF processor 1510 may include multiple communication modules to support multiple different radio access technologies. In addition, at least one of the baseband processor 1520 and the RF processor 1510 may include different communication modules to process signals in different frequency bands. For example, the different radio access technologies may include wireless LANs (for e.g., IEEE 802.11), cellular networks (e.g., LTE), and the like. In addition, the different frequency bands may include super high frequency (SHF) (e.g., 2NRHz) bands and millimeter wave (mmWave) (e.g., 60GHz) bands.

The storage unit 1530 may store basic programs, application programs, and data, such as configuration information, for operation of the main base station. Particularly, the storage unit 1530 may store information regarding a second access node configured to perform wireless communication by using a second radio access technology. In addition, the storage unit 1530 may provide the stored data at the request of the controller 1540.

The controller 1540 may control overall operations of the UE. For example, the controller 1540 may transmit/receive signals through the baseband processor 1520 and the RF processor 1510. In addition, the controller 1540 records data in the storage unit 1530 and reads the data from the storage unit 1530. To this end, the controller 1540 may include at least one processor. For example, the controller 1540 may include a communication processor (CP) configured to perform control for communication, and an application processor (AP) configured to control upper layers such as application programs.

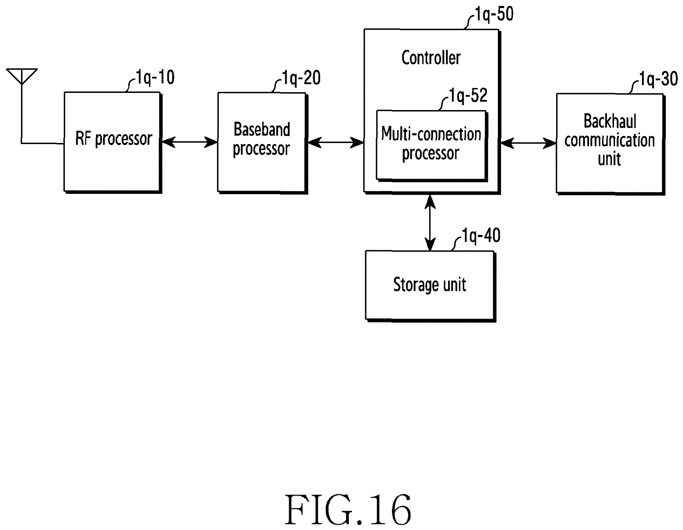

FIG. 16 is a block diagram illustrating a structure of an NR base station according to an embodiment of the disclosure.

As illustrated in FIG. 16, the base station includes an RF processor 1610, a baseband processor 1620, a backhaul communication unit 1630, a storage unit 1640, and a controller 1650.

The RF processor 1610 may perform a function for transmitting and receiving a signal via a wireless channel, such as band conversion and amplification of the signal. That is, the RF processor 1610 may up-convert a baseband signal provided from the baseband processor 1620 to an RF band signal, may transmit the same through an antenna, and may down-convert an RF band signal received through the antenna to a baseband signal. For example, the RF processor 1610 may include a transmission filter, a reception filter, an amplifier, a mixer, an oscillator, a DAC, and an ADC. Although only one antenna is illustrated in FIG. 16, the first access node may include multiple antennas. In addition, the RF processor 1610 may include multiple RF chains. Furthermore, the RF processor 1610 may perform beamforming. For the beamforming, the RF processor 1610 may adjust the phase and magnitude of each of signals transmitted and received through multiple antennas or antenna elements. The RF processing unit 1610 may transmit one or more layers to perform a downward MIMO operation.

The baseband processor 1620 may perform functions of conversion between baseband signals and bitstrings according to the physical layer specifications of first radio access technology. For example, during data transmission, the baseband processor 1620 may encode and modulate a transmitted bitstring to generate complex symbols. In addition, during data reception, the baseband processor 1620 may demodulate and decode a baseband signal provided from the RF processor 1610 to restore a received bitstring. For example, when following the OFDM scheme, during data transmission, the baseband processor 1620 may encode and modulate a transmitted bitstring to generate complex symbols, may map the complex symbols to subcarriers, and may configure OFDM symbols through an IFFT operation and CP insertion. In addition, during data reception, the baseband processor 1620 may split a baseband signal provided from the RF processor 1610 at the OFDM symbol level, may restore signals mapped to subcarriers through FFT operation, and may restore a received bitstring through demodulation and decoding. The baseband processor 1620 and the RF processor 1610 may transmit and receive signals as described above. Therefore, the baseband processor 1620 and the RF processor 1610 may be referred to as a transmitter, a receiver, a transceiver, a communication unit, or a wireless communication unit.

The backhaul communication unit 1630 may provide an interface for communicating with other nodes in the network. That is, the backhaul communication unit 1630 may convert bitstrings transmitted from the main base station to other nodes, for example, auxiliary base station, core network, to physical signals, and may convert physical signals received from the other nodes to bitstrings.

The storage unit 1640 may store basic programs, application programs, and data, such as configuration information, for operation of the main base station. Particularly, the storage unit 1640 may store information regarding a bearer allocated to a connected UE, a measurement result reported from the connected UE, and the like. In addition, the storage unit 1640 may store information serving as a reference to determine whether to provide multi-connection to a UE or to suspend the same. In addition, the storage unit 1640 may provide the stored data at the request of the controller 1650.

The controller 1650 may control the overall operation of the main base station. For example, the controller 1650 may transmit/receive signals through the baseband processor 1620 and the RF processor 1610 or through the backhaul communication unit 1630. In addition, the controller 1650 records data in the storage unit 1640 and reads the data from the storage unit 1640. To this end, the controller 1650 may include at least one processor.

**Claims**

1. A method performed by a user equipment (UE) in a wireless communication system, the method comprising:

   receiving, from a base station, configuration information for cell reselection, comprising information for determining a mobility state of the UE;
   determining the mobility state, based on the configuration information for cell reselection; and
   performing the cell reselection, based on the determined mobility state,
   wherein the information for determining the mobility state of the UE comprises at least one from among size information indicating the size of a count value regarding each of at least one cell reselection performed by the UE during a predetermined period of time, information regarding a threshold value based on the number of cell reselections for determining the mobility state, based on the sum of the count value, or information regarding a movement distance-based threshold value for determining the mobility state based on the distance of movement of the UE during the predetermined period of time, and
   wherein the mobility state is determined based on the threshold value based on the number of cell reselections and the sum of the count value regarding each of the at least one cell reselection, of the size indicated by the size information, or determined based on the movement distance-based threshold value and the distance of movement of the UE during the predetermined period of time.

2. The method of claim 1, wherein the information for determining the mobility state of the UE further comprises information regarding a speed-based threshold value related to determining whether or not to apply the size information regarding the count value,

   wherein, in case that the absolute value of the speed of movement of the UE is smaller than the speed-based threshold value, the count value is not scaled by being multiplied by a value indicated by the size information, and
   wherein, in case that the absolute value of the speed of movement of the UE is equal to or larger than the speed-based threshold value, the count value is scaled by being multiplied by a value indicated by the size information.

3. The method of claim 2, wherein the absolute value of the speed of movement of the UE is a value based on the instantaneous speed of the UE at a specific timepoint at which each of the at least one cell reselection is counted.

4. The method of claim 2, wherein the absolute value of the speed of movement of the UE is based on the average speed of the UE during the predetermined period of time.

5. The method of claim 1, wherein the information regarding a threshold value based on the number of cell reselections comprises a first threshold value and a second threshold value larger than the first threshold value,

   wherein, in case that the sum of count values is smaller than the first threshold value, the mobility state is determined to be a first state,
   wherein, in case that the sum of count values is equal to or larger than the first threshold value and is smaller than the second threshold value, the mobility state is determined to be a second state, and
   wherein, in case that the sum of count values is equal to or larger than the second threshold value, the mobility state is determined to be a third state.

6. The method of claim 5, wherein different scaling values are applied to cell measurement values of the UE regarding neighbor cells for the cell reselection in the first state, the second state, and the third state, respectively.

7. The method of claim 1, wherein the information regarding a movement distance-based threshold value comprises a first threshold value and a second threshold value larger than the first threshold value,

wherein, in case that the distance of movement of the UE during the predetermined period of time is smaller than the first threshold value, the mobility state is determined to be a first state,

wherein, in case that the distance of movement of the UE during the predetermined period of time is equal to or larger than the first threshold value and is smaller than the second threshold value, the mobility state is determined to be a second state, and

wherein, in case that the distance of movement of the UE during the predetermined period of time is equal to or larger than the second threshold value, the mobility state is determined to be a third state.

8. A user equipment (UE) in a wireless communication system, the UE comprising:

a transceiver; and
a controller connected to the transceiver,
wherein the controller is configured to:

receive, from a base station, configuration information for cell reselection, comprising information for determining the mobility state of the UE;
determine the mobility state, based on the configuration information for cell reselection; and
perform the cell reselection, based on the determined mobility state,
wherein the information for determining the mobility state of the UE comprises at least one from among size information indicating the size of a count value regarding each of at least one cell reselection performed by the UE during a predetermined period of time, information regarding a threshold value based on the number of cell reselections for determining the mobility state, based on the sum of the count value, or information regarding a movement distance-based threshold value for determining the mobility state based on the distance of movement of the UE during the predetermined period of time, and
wherein the mobility state is determined based on the threshold value based on the number of cell reselections and the sum of the count value regarding each of the at least one cell reselection, of the size indicated by the size information, or determined based on the movement distance-based threshold value and the distance of movement of the UE during the predetermined period of time.

9. The UE of claim 8, wherein the information for determining the mobility state of the UE further comprises information regarding a speed-based threshold value related to determining whether or not to apply the size information regarding the count value,

wherein, in case that the absolute value of the speed of movement of the UE is smaller than the speed-based threshold value, the count value is not scaled by being multiplied by a value indicated by the size information, and
wherein, in case that the absolute value of the speed of movement of the UE is equal to or larger than the speed-based threshold value, the count value is scaled by being multiplied by a value indicated by the size information.

10. The UE of claim 9, wherein the absolute value of the speed of movement of the UE is a value based on the instantaneous speed of the UE at a specific timepoint at which each of the at least one cell reselection is counted.

11. The UE of claim 9, wherein the absolute value of the speed of movement of the UE is based on the average speed of the UE during the predetermined period of time.

12. The UE of claim 8, wherein the information regarding a threshold value based on the number of cell reselections comprises a first threshold value and a second threshold value larger than the first threshold value,

wherein, in case that the sum of count values is smaller than the first threshold value, the mobility state is determined to be a first state,
wherein, in case that the sum of count values is equal to or larger than the first threshold value and is smaller than the second threshold value, the mobility state is determined to be a second state, and
wherein, in case that the sum of count values is equal to or larger than the second threshold value, the mobility state is determined to be a third state.

13. The UE of claim 12, wherein different scaling values are applied to cell measurement values of the UE regarding neighbor cells for the cell reselection in the first state, the second state, and the third state, respectively.

14. The UE of claim 8, wherein the information regarding a movement distance-based threshold value comprises a first threshold value and a second threshold value larger than the first threshold value,

wherein, in case that the distance of movement of the UE during the predetermined period of time is smaller than the first threshold value, the mobility state is determined to be a first state,

wherein, in case that the distance of movement of the UE during the predetermined period of time is equal to or larger than the first threshold value and is smaller than the second threshold value, the mobility state is determined to be a second state, and

wherein, in case that the distance of movement of the UE during the predetermined period of time is equal to or larger than the second threshold value, the mobility state is determined to be a third state.

FIG.1

FIG.2

FIG.3

UE

1d-01
NR SDAP

1d-05
NR PDCP

1d-10
NR RLC

1d-15
NR MAC

1d-20
NR PHY

NR gNB

1d-45
NR SDAP

1d-40
NR PDCP

1d-35
NR RLC

1d-30
NR MAC

1d-25
NR PHY

FIG.4

FIG.5

FIG.6

FIG.7

1i-01 UE

1i-02 NR cell

RRC_CONNECTED 1i-03

1i-04 — UECapabilityInformation
(indication to support enhanced mobility state determination via speed)

RRCRelease
(new set of speed dependent reselection parameters) 1i-05

RRC_IDLE or RRC_INACTIVE 1i-06

System information
(new set of speed dependent reselection parameters) 1i-10

perform cell reselection 1i-15

Determine mobility state and perform cell reselection based on mobility state 1i-20

1i-25 — RRCSetupRequest or RRCResumeRequest or RRCResumeRequest1

RRCSetup or RRCResume 1i-30

RRC_CONNECTED 1i-31

1i-35 — RRCSetupComplete or RRCResumeComplete
(mobilityStateUAV)

FIG.8

┌─────┐                                                    ┌─────────┐
│ 1j-01│                                                    │ 1j-02   │
│ UE  │                                                    │ NR cell │
└─────┘                                                    └─────────┘

RRC_CONNECTED ~ 1j-03

UECapabilityInformation
(indication to support enhanced mobility state determination)
1j-04

RRCRelease
(new set of speed dependent reselection scaling parameters) ~ 1j-05

RRC_IDLE or RRC_INACTIVE ~ 1j-06

System information
(new set of speed dependent reselection scaling parameters) ~ 1j-10

perform cell reselection ~ 1j-15

Determine mobility state and perform cell
reselection based on mobility state ~ 1j-20

RRCSetupRequest or RRCResumeRequest or
RRCResumeRequest1
1j-25

RRCSetup or RRCResume ~ 1j-30

RRC_CONNECTED ~ 1j-31

RRCSetupComplete or RRCResumeComplete
(mobilityStateUAV)
1j-35

FIG.9

FIG.10

FIG.11

FIG.12

FIG.13

FIG.14

1p-40

Controller

1p-42

Multi-connection
processor

1p-20

Baseband
processor

1p-10

RF processor

1p-30

Storage unit

# FIG.15

FIG.16

## INTERNATIONAL SEARCH REPORT

| International application No. |
|---|
| **PCT/KR2024/001954** |

### A. CLASSIFICATION OF SUBJECT MATTER

**H04W 8/02**(2009.01)i; **H04W 24/10**(2009.01)i; **H04W 48/20**(2009.01)i; **H04W 76/27**(2018.01)i; **H04W 8/24**(2009.01)i; **H04W 88/02**(2009.01)i

According to International Patent Classification (IPC) or to both national classification and IPC

### B. FIELDS SEARCHED

Minimum documentation searched (classification system followed by classification symbols)

H04W 8/02(2009.01); H04W 36/00(2009.01); H04W 36/32(2009.01); H04W 52/02(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 이동성 상태(mobility state), 셀 재선택(cell reselection), 설정 (configuration), 카운트 값(count value), 횟수(number), 임계값(threshold), 시간(time), 속도(speed)

### C. DOCUMENTS CONSIDERED TO BE RELEVANT

| Category* | Citation of document, with indication, where appropriate, of the relevant passages | Relevant to claim No. |
|---|---|---|
| X | US 2022-0150776 A1 (LG ELECTRONICS INC.) 12 May 2022 (2022-05-12)<br>See paragraphs [0012], [0130]-[0133], [0139] and [0203]-[0204]; and claim 1. | 1-14 |
| A | ZTE et al. Discussion on QoE high speed scenario. R3-225871, 3GPP TSG-RAN WG3 #117bis-e. 28 September 2022.<br>See sections 1-3. | 1-14 |
| A | WO 2019-160268 A1 (LG ELECTRONICS INC.) 22 August 2019 (2019-08-22)<br>See paragraphs [0041]-[0157]; and figures 1-16. | 1-14 |
| A | US 2014-0044029 A1 (MEDIATEK, INC.) 13 February 2014 (2014-02-13)<br>See paragraphs [0026]-[0050]; and figures 1-11. | 1-14 |
| A | US 2021-0068027 A1 (LG ELECTRONICS INC.) 04 March 2021 (2021-03-04)<br>See paragraphs [0036]-[0144]; and figures 1-14. | 1-14 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **13 May 2024** | **13 May 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

### INTERNATIONAL SEARCH REPORT
**Information on patent family members**

International application No.

**PCT/KR2024/001954**

| Patent document cited in search report | | | Publication date (day/month/year) | Patent family member(s) | | | Publication date (day/month/year) |
|---|---|---|---|---|---|---|---|
| US | 2022-0150776 | A1 | 12 May 2022 | US | 11877195 | B2 | 16 January 2024 |
| | | | | WO | 2020-138856 | A1 | 02 July 2020 |
| WO | 2019-160268 | A1 | 22 August 2019 | US | 11477716 | B2 | 18 October 2022 |
| | | | | US | 2021-0168691 | A1 | 03 June 2021 |
| US | 2014-0044029 | A1 | 13 February 2014 | CN | 104137612 | A | 05 November 2014 |
| | | | | CN | 104137612 | B | 21 August 2018 |
| | | | | CN | 108990138 | A | 11 December 2018 |
| | | | | CN | 108990138 | B | 30 November 2021 |
| | | | | EP | 2883391 | A1 | 17 June 2015 |
| | | | | EP | 2883391 | B1 | 02 January 2019 |
| | | | | EP | 2945434 | A1 | 18 November 2015 |
| | | | | EP | 2945434 | B1 | 11 October 2017 |
| | | | | EP | 2945435 | A1 | 18 November 2015 |
| | | | | EP | 2945435 | B1 | 11 October 2017 |
| | | | | US | 10104612 | B2 | 16 October 2018 |
| | | | | WO | 2014-023230 | A1 | 13 February 2014 |
| US | 2021-0068027 | A1 | 04 March 2021 | WO | 2019-066559 | A1 | 04 April 2019 |

Form PCT/ISA/210 (patent family annex) (July 2022)